# EUROPÄISCHE PATENTSCHRIFT

(11) **EP 0 775 415 B1**
(45) Veröffentlichungstag und Bekanntmachung des Hinweises auf die Patenterteilung: **07.07.1999**
(21) Anmeldenummer: 95908183.7
(22) Anmeldetag: 26.01.1995
(51) Int. Cl.: H04N 5/232, H04N 5/272

(54) **VORRICHTUNG UND VERFAHREN ZUR HERSTELLUNG EINER BILDSEQUENZ**
DEVICE AND PROCESS FOR CREATING AN IMAGE SEQUENCE
PROCEDE ET DISPOSITIF PERMETTANT DE PRODUIRE UNE SEQUENCE D'IMAGES

(30) Priorität: 28.01.1994 US 187457; 06.12.1994 WO PCT/DE94/01498
(43) Veröffentlichungstag der Anmeldung: 28.05.1997
(73) Patentinhaber: CFB Centrum für neue Bildgestaltung GmbH, 12489 Berlin (DE)
(72) Erfinder: RYBCZYNSKI, Zbigniew, D-12159 Berlin (DE)
(74) Vertreter: Christiansen, Henning, Dipl.-Ing.
(86) Internationale Anmeldenummer: DE9500127
(87) Internationale Veröffentlichungsnummer: WO9520862

(56) Entgegenhaltungen:
- WO-A-90/16131
- FR-A- 2 668 010
- FERNSEH- UND KINO-TECHNIK, Bd.46, Nr.2, Februar 1992, HEIDELBERG (DE) Seiten 93 - 95, XP00292642 'Computergesteuertes Kamera-Führungssystem für Live-Aufnahmen'
- FERNSEH- UND KINO-TECHNIK, Bd.40, Nr.7, Juli 1986, BERLIN (DE) Seiten 328 - 330 ROLF GIESEN 'Special Effects'

## Beschreibung

Die Bewegungssteuerung ("motion control"), wie beispielsweise erwähnt in Fernseh- und Kino-Technik, Bd. 46, Nr.2 (1992), S.93 wird in der Film- und Fernsehindrustrie angewandt, um eine exakte Ausführung und Wiederholung von Kamerabewegungen zu erreichen. Die Notwendigkeit einer solchen präzisen Bewegung (die über einen Computer programmiert wird) erwuchs aus verschiedenen Gründen. Einer davon ist die voranschreitende Automatisierung der Kameras in Aufnahmestudios, speziell Nachrichtenstudios. Ein weiterer - und bis jetzt der wichtigste - Grund ist der Bedarf für die Herstellung von Spezialeffekten, bei der eine Mehr-Quellen-bzw. Mehr-Schichten-Photographie angewandt wird.

Die derzeitige Entwicklung der Computergraphik hat das Bedürfnis nach der Herstellung einer praktisch handhabbaren Verbindung zwischen der Welt der durch ein Kameraobjektiv photographierten "realen" Bilder und der Welt der durch Computer erzeugten "künstlichen" Bilder verstärkt.

Die Illusion einer dreidimensionalen (3-D)-Bewegung im Raum in einem Computergraphik-Bild ist das Ergebnis mathematischer Berechnungen. Jedes Element des Bildes muß unter Beachtung der Bewegung der (virtuellen) "Kamera", die nur theoretisch existiert, auf der Grundlage eines vorgegebenen Programms exakt berechnet werden. Eine Computergraphik-"Kamera" ist frei von allen physikalischen Begrenzungen, die die Bewegung einer realen Kamera und die Bilderzeugung durch diese wesentlich beeinflussen.

Ein durch eine reale, sich in Bewegung befindende Kamera photographiertes Bild (eine Echtzeitaufnahme) wird durch viele physikalische Störungen beeinflußt. Diese Störungen hängen zum Teil mit der Masse und der durch sie bedingten kinetischen Energie der Kamera und mit Fluktuationen ihrer Bewegungsbahn zusammen. Im Falle der Mehr-Quellen- oder Mehr-Komponenten-Photographie ist das Ergebnis solcher Störungen eine unexakte Lage und gegebenenfalls ein Bildzittern ("jitter") der verschiedenen Komponenten des Bildes relativ zueinander. Diese Störungen stellen ein besonders ernstes Problem dar, wenn für die einzelnen Komponenten unterschiedliche Maßstäbe angewandt wurden. In vielen Fällen gibt es keinerlei mechanische Lösung, um diese Störungen zu vermeiden. Wenn eine "Echtzeit"-Photographie angewandt werden muß, speziell bei der Aufnahme lebender Objekte, müssen möglichst einfache Bewegungen (lineare Verschiebungen und gleichmäßige Schwenks von einer Seite zur anderen) in kurzen Zeitspannen angewandt werden. In diesem Zusammenhang gibt es noch ein weiteres Problem. Ein mit dem Computer erzeugtes Bild kann nicht allein von der Kameraposition her aufgebaut werden. Jeder Bestandteil des Computerbildes muß seine eigene, durch xyz-Koordinaten definierte Lage im Raum haben. Bekannte Bewegungssteuersysteme erlauben jedoch nur die Planung und Ausführung der Positionierung einer Kamera (entsprechend den xyz-Koordinaten der Kamera), aber nicht die Planung und Ausführung einer Positionierung der aufgenommenen Objekte. Dies ist eine Folge der Konzentration allein auf die Kamerabewegung und nicht auf die Bewegung, die von der Kamera aufgenommen wird.

Die Herstellung von Spezialeffekten - insbesondere, wenn die Mehr-Komponenten-Photographie angewandt werden muß - ist ein äußerst komplexer Prozeß. Nur wenige Studios in der Welt können Mehr-Komponenten-Spezialeffekte produzieren. Weiterhin ist die Produktion solcher Effekte extrem teuer. Die Studios haben in der Vergangenheit jeweils eigene Bewegungssteuersysteme entwickelt, ohne daß es einen industriellen Standard gäbe. Darüberhinaus ist die Software für die Erzeugung von Computerbildern (die gegebenenfalls in Mehr-Komponenten-Bilder als Komponente eingehen können) ohne Bezugnahme auf vorhandene oder gar standardisierte Bewegungssteuersysteme entwickelt worden.

Es besteht daher die übergeordnete Notwendigkeit, ein integriertes Hardware- und Software-System aufzubauen, mit dem in den oben erwähnten "Welten" gleichartige Bewegungen ausgeführt werden können und das Problem des "jitter" bei der Echtzeit-Photographie gelöst werden kann.

Aufgabe der Erfindung ist es insbesondere, eine Vorrichtung und ein Verfahren anzugeben, mit denen Film- bzw. Videosequenzen, deren Herstellung auf herkömmliche Weise eine relativ komplizierte Bewegung der Kamera erfordert, mit einer vereinfachten und daher weniger "jitter"-anfälligen Kamerabewegung hergestellt werden können.

Diese Aufgabe wird durch eine Vorrichtung mit den Merkmalen des Anspruchs 1 bzw. ein Verfahren mit den Merkmalen des Anspruchs 15 gelöst.

Eine Vorrichtung gemäß der vorliegenden Erfindung dient dazu, photographische Bilder eines aufzunehmenden Objektes zu simulieren. Die Vorrichtung weist eine Kamera auf, die in einer xy-Ebene verschiebbar und um eine Achse drehbar ist, die sich durch die Kamera erstreckt und im wesentlichen senkrecht zur xy-Ebene ist. Die Vorrichtung umfaßt weiterhin eine drehbare Plattform bzw. eine Drehbühne. Die Drehbühne oder drehbare Plattform dreht selektiv ein zu photographierendes Objekt um eine Objektachse, die im wesentlichen senkrecht zur xy-Ebene ist. Die Kamera ist auf einer Kamerahalterung angebracht, welche die Kamera derartig haltert, daß sie mindestens um eine Kamerachse drehbar ist, die im wesentlichen parallel zur Objektachse ist. Weiter ist eine Antriebseinheit zur Hin- und Her-Bewegung der Kamerahalterung längs einer y-Achse zur Drehbühne hin und von dieser weg vorgesehen. Eine Umsetzungseinrichtung "übersetzt" eine erste räumliche und Winkelbeziehung zwischen der Kamera, die in der xy-Ebene verschiebbar und um eine Achse durch diese hindurch drehbar ist, und dem Objekt in eine zweite räumliche und Winkel-Beziehung zwischen der Kamera und dem Objekt, die auf der Voraussetzung beruht, daß die Kamera um ihre Achse drehbar auf der Kamerahalterung angebracht und längs der y-Achse bewegbar ist und sich das Objekt auf einer drehbaren Plattform befindet, derart, daß eine Menge der zweiten Beziehungen im wesentlichen dieselben photopraphischen Bilder ergibt, wie sie mit einer Menge der ersten Beziehungen hergestellt werden könnten. Eine Steuereinheit ist zur Steuerung der Antriebseinheit zur Ausführung der Bewegung der Kamera längs der y-Achse und zur Steuerung der Drehbewegungen der Plattform und der Kamera entsprechend der Menge der zweiten Beziehungen vorgesehen. Die Kamera kann zusätzlich längs der z-Achse, senkrecht zur y-Ebene, bewegt werden.

In einer vorteilhaften Ausführungsform weist die Vorrichtung eine Bildverarbeitungseinheit zur Überlagerung jeweils einzelner Bilder mehrerer, teilweise oder vollständig mit dem Bildaufnahmegerät oder synthetisch, insbesondere als Computergrafik, erzeugter, primärer Bildfolgen zur Bildung einer resultierenden Bildsequenz auf. Diese Überlagerung verschiedener Bilder kann mit - an sich bekannten - Mitteln der Filmkopiertechnik oder der digitalen (Video-)Bildverarbeitung erfolgen. Besonders zweckmäßig ist dabei der Einsatz der als Blue-Screnn-Technik bekannten Verfahren, wobei bei der Aufnahme jeweils ein einfarbiger Schirm ("Blue Screen") als Aufnahmehintergrund vorgesehen ist.

Zur Erleichterung des Synchronisation zwischen den verschiedenen Bildfolgen und ggfs. auch zur Realisierung von auf die Aufnahmen realer Objekte abgestimmten und mit diesen leicht mischbaren Computergrafik-, speziell etwa "virtual reality"-, Sequenzen umfaßt die Vorrichtung in zweckmäßiger Weise auch eine Speichervorrichtung für die während der Aufnahme einer primären Bildfolge an die einzelnen Komponenten der Vorrichtung (Kamera, Antrieb des Kamerahalters, Drehbühne bzw. -tisch etc.) abgegebenen Steuersignale. Deren Dateneingang ist während der Aufnahme mindestens einer Bildfolge mit dem Ausgang der berechnungseinheit verbunden, um die von dieser errechneten Steuersignale einzuspeichern. Ihr Datenausgang ist wahlweise bei der Aufnahme einer weiteren primären Bildfolge mit den Steuereingängen der Komponenten oder einem Eingang der Berechnungseinheit oder bei der Erzeugung der resultierenden Bildsequenz aus mehreren primären Bildfolgen mit einem Eingang der Bildverarbeitungseinheit verbindbar derart, daß die Steuersignale direkt oder indirekt zur Steuerung weiterer Aufnahmen und/oder zur Bildverarbeitung abgerufen werden.

Insbesondere ist der Berechnungseinheit eine Schnittstelle zur Verbindung mit einem Grafikcomputer zur uni- oder bidirektionalen Übergabe von Steuerdaten für die Vorrichtung an diesen und/oder von diesem zur synchronisierten Herstellung von foto- oder videotechnisch erzeugten und synthetischen (Computergrafik-)Bildsequenzen zugeordnet.

In einer weiteren zweckmäßigen Ausbildung weist die Berechnungseinheit und/oder die Bildverarbeitungseinheit eine Skalierungseinheit auf. Diese dient zur individuellen Einstellung der Steuersignale für den Betrieb der Vorrichtung zur Erzeugung verschiedener Bildfolgen von Objekten im Hinblick auf unterschiedliche Aufnahmeeinstellungen - speziell unterschiedlichen Größenmaßstab (Objektabstand, zoomeinstellung) - und/oder von Parametern der einzelnen zu überlagernden Bilder aus verschiedenen Bildfolgen im Hinblick auf diese Aufnahmeeinstellungen. Damit erfolgt etwa eine Einstellung der relativen Bildgröße, Drehung der Bildebene und/oder die Einstellung eines Bild-Gewichtungsfaktors für die Überlagerung (Mischung) einzelner Bilder.

Weiterhin weist die Bildverarbeitungseinheit vorteilhaft Mittel zur nachträglichen Bearbeitung ("matting") einer durch Überlagerung gebildeten Bildsequenz auf.

Eine weitere wichtige Ausgestaltung ist, daß die Vorrichtung eine steuerbare, insbesondere drehbare und/oder in der Lichtstärke steuerbare, Beleuchtungsvorrichtung für das/die Aufnahmeobjekt(e) umfaßt, die einen mit einem Ausgang der Berechnungseinheit verbundenen Steuereingang aufweist. Damit wird gesichert, daß die Beleuchtung des jeweiligen Aufnahmeobjektes der speziellen, erfindungsgemäßen Aufnahmetechnik angepaßt ist.

Um in einfacher Weise Szenen realisieren zu können, in den Fortbewegungen von Menschen, Tieren, Fahzeugen etc. gezeigt werden sollen, ist in oder auf der Drehvorrichtung eine weitere, eine separate Antriebseinheit aufweisende, eingangsseitig mit einem Ausgang der Berechnungseinheit verbundene, Vorrichtung zur Verschiebung oder zusätzlichen Drehung eines Aufnahmeobjektes bezüglich der Drehvorrichtung vorgesehen.

Zur rationellen Herstellung von Bildsequenzen, in denen gleichzeitig Objekte mit sehr unterschiedlicher Größe gezeigt werden sollen, können mehrere Drehvorrichtungen unterschiedlicher Größe für mehrere Aufnahmeobjekte unterschiedlicher Größe vorgesehen sein, die zeitsequentiell zur Aufnahme mehrerer primärer Bildfolgen eingesetzt werden, wobei alle diese Drehvorrichtungen einen Steuereingang aufweisen, der mit einem Ausgang der Berechnungseinheit verbunden ist.

Das Bildaufnahmegerät, d.h. die "Kamera", kann insbesondere eine Film- oder Videokamera und die Drehvorrichtung eine im wesentlichen horizontale Drehbühne sein und die Bewegungsvorrichtung einen in einer horizontalen sowie in einer vertikalen, jeweils geradlinigen, Führung geführten Kamerahalter bzw. -wagen aufweisen.

Für medizinische Anwendungen kann das Bildaufnahmegerät aber auch eine, sich zur Bilderzeugung insbesondere Ultraschallwellen, Röntgen- oder Teilchenstrahlen oder Kern- oder Elektronenspins bedienende, medizinische Abbildungsvorrichtung sein. Das Aufnahmeobjekt ist hier natürlich ein Mensch oder Tier, der/das sich etwa auf einer drehbaren Liege befindet.

In beiden - wie auch eventuellen weiteren - Anwendungen weist das Bildaufnahmegerät zweckmäßigerweise eine um drei Achsen dreh- bzw. schwenkbare Halterung auf.

Eine vorteilhafte Ausgestaltung des erfindungsgemäßen Verfahrens besteht darin, daß jeweils einzelne Bilder mehrerer primärer Bildfolgen zu einer resultierenden Bildsequenz überlagert werden, wobei die Überlagerung insbesondere mit der "Blue-Screen"-Technik erfolgen kann.

Zweckmäßigerwesie werden bei dem Verfahren die während der Erzeugung einer primären Bildfolge verwendeten Ansteuerdaten gespeichert und wahlweise bei der Erzeugung einer weiteren primären Bildfolge und/oder bei der Erzeugung der resultierenden Bildsequenz aus mehreren primären Bildfolgen erneut abgerufen und direkt oder nach einer Umrechnung zur Bilderzeugung verwendet.

Die Ansteuerdaten zur Erzeugung verschiedener Bildfolgen können, insbesondere zur Einstellung der relativen Bildgröße, zur Drehung der Bildebene und/oder zur Einstellung eines Bild-Gewichtungsfaktors für primäre Bilder zur Erzeugung eines resultierenden Bildes durch Mischung, einer Skalierung und/oder Gewichtung unterzogen werden.
Figur 1 ist eine schematische Darstellung, die die räumliche und Winkelbeziehung zwischen einer Kameraposition und einem Objekt darstellt, in der auf herkömmliche Weise ein photographisches Bild erzeugt werden kann,
Figur 2 ist eine schematische Darstellung, die die räumliche und Winkel-Beziehung zwischen einer Kameraposition und einem Objekt gemäß einer Ausführungsform der Erfindung darstellt, bei der dasselbe Bild aufgenommen wird wie gemäß Figur 1,
Figur 3 ist eine schematische Darstellung, die die räumlichen und Winkelbeziehungen zwischen zwei Kamerapositionen und einem Objekt darstellt, in denen auf herkömmliche Weise ein photographisches Bild erzeugt werden kann,
Figuren 4a und 4b sind schematische Darstellungen, die die räumlichen und Winkel-Beziehungen zwischen zwei Kamerapositionen und einem Objekt entsprechend einer Ausführungsform der Erfindung darstellen, bei der dieselben photographischen Bilder wie gemäß Figur 3 aufgenommen werden können,
Figur 5 ist eine schematische Darstellung, die die räumlichen und Winkelbeziehungen zwischen fünf Kamerapositionen und einem Objekt darstellt, in denen auf herkömmliche Weise ein photographisches Bild erzeugt werden kann,
Figuren 6a bis 6e sind schematische Darstellungen, die die räumlichen und Winkel-Beziehungen zwischen fünf Kamerapositionen und einem Objekt entsprechend einer Ausführungsform der Erfindung darstellen, bei der dieselben photographischen Bilder wie gemäß Figur 5 aufgenommen werden können,
Figur 7 ist eine schematische Darstellung, die die räumlichen und Winkel-Beziehungen zwischen fünf Kamerapositionen, die eine gekrümmte Bahn um das Objekt beschreiben, und einem Objekt darstellt, in denen auf herkömmliche Weise ein photographisches Bild erzeugt werden kann,
Figuren 8a bis 8e sind schematische Darstellungen, die die räumlichen und Winkel-Beziehungen zwischen fünf Kamerapositionen und einem Objekt entsprechend einer Ausführungsform der Erfindung darstellen, bei der dieselben photographischen Bilder wie gemäß Figur 7 aufgenommen werden können,
Figur 9 ist eine schematische Darstellung, die die räumlichen und Winkel-Beziehungen zwischen fünf Kamerapositionen, die eine Kreisbahn um ein Objekt beschreiben, und einem Objekt darstellt, in denen auf herkömmliche Weise ein photographisches Bild erzeugt werden kann,
Figuren 10a bis 10e sind schematische Darstellungen, die die räumlichen und Winkel-Beziehungen zwischen fünf Kamerapositionen und einem Objekt entsprechend einer Ausführungsform der Erfindung darstellen, bei der dieselben photographischen Bilder wie gemäß Figur 9 aufgenommen werden können,
Figur 11 ist eine schematische Darstellung, die die räumlichen und Winkel-Beziehungen zwischen einer Kameraposition und drei Objekten darstellt, in denen auf herkömmliche Weise ein photographisches Bild erzeugt werden kann,
Figuren 12 a bis 12c sind schematische Darstellungen, die die räumlichen und Winkel-Beziehungen zwischen drei Kamerapositionen und einem Objekt gemäß der Erfindung darstellen, die photographische Bilder ergeben, die in der Kombination dasselbe photographische Bild ergeben, wie es bei der Anordnung nach Figur 11 gewonnen wird,
Figur 13 ist eine schematische Darstellung, die die räumlichen und Winkel-Beziehungen zwischen einer Kameraposition und drei Objekten darstellt, in denen auf herkömmliche Weise ein photographisches Bild erzeugt werden kann,
Figuren 14a bis 14c sind schematische Darstellungen, die die räumlichen und Winkel-Beziehungen zwischen drei Kamerapositionen und einem Objekt gemäß der Erfindung darstellen, die photographische Bilder ergeben, die in der Kombination dasselbe photographische Bild ergeben, wie es bei der Anordnung nach Figur 13 gewonnen wird,
Figur 15 ist eine schematische Darstellung, die die räumlichen und Winkel-Beziehungen zwischen einer Kameraposition und drei Objekten darstellt, in denen auf herkömmliche Weise ein photographisches Bild erzeugt werden kann,
Figuren 16a bis 16c sind schematische Darstellungen, die die räumlichen und Winkel-Beziehungen zwischen drei Kamerapositionen und einem Objekt gemäß der Erfindung darstellen, die photographische Bilder ergeben, die in der Kombination dasselbe photographische Bild ergeben, die in der Kombination dasselbe photographische Bild ergeben, wie es bei der Anordnung nach Figur 15 gewonnen wird,
Figur 17 ist eine schematische Darstellung, die die räumlichen und Winkel-Beziehungen zwischen einer Kameraposition und drei Abschnitten darstellt, in denen auf herkömmliche Weise ein photographisches Bild erzeugt werden kann,
Figuren 18, 19 und 20 sind jeweils schematische Darstellungen eines Abschnitts, die zur Definition von Begriffen dienen, mit denen die räumlichen und Winkel-Beziehungen zwischen einem Abschnitt und einer Kameraposition beschrieben werden,
Figuren 21a bis 21c sind schematische Darstellungen, die drei unterschiedliche räumliche und Winkel-Beziehungen zwischen einer Kameraposition und einem Abschnitt gemäß einer Ausführungsform der Erfindung darstellen, in denen photographische Bilder gewonnen werden können, die in Kombination dasselbe photographische Bild ergeben, wie es bei der Anordnung gemäß Figur 17 erhalten werden kann,
Figur 22 ist eine schematische Darstellung, die die räumlichen und Winkel-Beziehungen zwischen einer Kameraposition und drei Abschnitten darstellt, in denen auf herkömmliche Weise ein photographisches Bild erzeugt werden kann,
Figuren 23a bis 23c sind schematische Darstellungen, die drei unterschiedliche räumliche und Winkel-Beziehungen zwischen einer Kameraposition und einem Abschnitt gemäß einer Ausführungsform der Erfindung darstellen, in denen photographische Bilder gewonnen werden können, die in Kombination dasselbe photographische Bild ergeben, wie es bei der Anordnung gemäß Figur 22 erhalten werden kann,
Figur 24 ist eine schematische Darstellung, die die räumlichen und Winkel-Beziehungen zwischen einer Kameraposition und drei Abschnitten darstellt, in denen auf herkömmliche Weise ein photographisches Bild erzeugt werden kann,
Figuren 25a bis 25c sind schematische Darstellungen, die drei unterschiedliche räumliche und Winkel-Beziehungen zwischen einer Kameraposition und einem Abschnitt gemäß einer Ausführungsform der Erfindung darstellen, in denen photographische Bilder gewonnen werden können, die in Kombination dasselbe photographische Bild ergeben, wie es bei der Anordnung gemäß Figur 24 erhalten werden kann,
Figur 26 ist eine schematische Darstellung, die die räumlichen und Winkel-Beziehungen zwischen einer Kameraposition und drei Objekten unterschiedlicher Größe darstellt, in denen auf herkömmliche Weise ein photographisches Bild erzeugt werden kann,
Figuren 27a bis 27c sind schematische Darstellungen, die drei unterschiedliche räumliche und Winkel-Beziehungen zwischen einer Kameraposition und einem Objekt gemäß einer Ausführungsform der Erfindung darstellen, in denen photographische Bilder gewonnen werden können, die in Kombination dasselbe photographische Bild ergeben, wie es bei der Anordnung gemäß Figur 26 erhalten werden kann,
Figur 28 ist eine schematische Darstellung, die die räumlichen und Winkel-Beziehungen zwischen einer Kameraposition und drei Objekten unterschiedlicher Größe darstellt, in denen auf herkömmliche Weise ein photographisches Bild erzeugt werden kann,
Figuren 29a bis 29c sind schematische Darstellungen, die drei unterschiedliche räumliche und Winkel-Beziehungen zwischen einer Kameraposition und einem Objekt gemäß einer Ausführungsform der Erfindung darstellen, in denen photographische Bilder gewonnen werden können, die in Kombination dasselbe photographische Bild ergeben, wie es bei der Anordnung gemäß Figur 28 erhalten werden kann,
Figur 30 ist eine schematische Darstellung, die die räumlichen und Winkel-Beziehungen zwischen einer Kameraposition und drei Objekten unterschiedlicher Größe darstellt, in denen auf herkömmliche Weise ein photographisches Bild erzeugt werden kann,
Figuren 31a bis 31c sind schematische Darstellungen, die drei unterschiedliche räumliche und Winkel-Beziehungen zwischen einer Kameraposition und einem Objekt gemäß einer Ausführungsform der Erfindung darstellen, in denen photographische Bilder gewonnen werden können, die in Kombination dasselbe photographische Bild ergeben, wie es bei der Anordnung gemäß Figur 30 erhalten werden kann,
Figur 32 ist eine schematische Darstellung, die die räumlichen und Winkel-Beziehungen zwischen einer Kameraposition und drei Abschnitten darstellt, in denen auf herkömmliche Weise ein photographisches Bild erzeugt werden kann,
Figuren 33a bis 33c sind schematische Darstellungen, die drei unterschiedliche räumliche und Winkel-Beziehungen zwischen einer Kameraposition und drei unterschiedlichen Abschnitten unterschiedlicher Größe gemäß einer Ausführungsform der Erfindung darstellen, in denen photographische Bilder gewonnen werden können, die in Kombination dasselbe photographische Bild ergeben, wie es bei der Anordnung gemäß Figur 32 erhalten werden kann,
Figur 34 ist eine schematische Darstellung, die die räumlichen und Winkel-Beziehungen zwischen einer Kameraposition und drei Abschnitten darstellt, in denen auf herkömmliche Weise ein photographisches Bild erzeugt werden kann,
Figuren 35a bis 35c sind schematische Darstellungen, die drei unterschiedliche räumliche und Winkel-Beziehungen zwischen einer Kameraposition und drei unterschiedlichen Abschnitten unterschiedlicher Größe gemäß einer Ausführungsform der Erfindung darstellen, in denen photographische Bilder gewonnen werden können, die in Kombination dasselbe photographische Bild ergeben, wie es bei der Anordnung gemäß Figur 34 erhalten werden kann,
Figur 36 ist eine schematische Darstellung, die die räumlichen und Winkel-Beziehungen zwischen einer Kameraposition und drei Abschnitten darstellt, in denen auf herkömmliche Weise ein photographisches Bild erzeugt werden kann,
Figuren 37a bis 37c sind schematische Darstellungen, die drei unterschiedliche räumliche und Winkel-Beziehungen zwischen einer Kameraposition und drei unterschiedlichen Abschnitten unterschiedlicher Größe gemäß einer Ausführungsform der Erfindung darstellen, in denen photographische Bilder gewonnen werden können, die in Kombination dasselbe photographische Bild ergeben, wie es bei der Anordnung gemäß Figur 36 erhalten werden kann,
Figur 38 ist eine schematische Darstellung, die die räumlichen und Winkel-Beziehungen zwischen einem längs einer geraden Linie "gehenden" Schauspieler und einer ihm nachgeführten Kamera bei fünf verschiedenen Kamera-Schauspieler-Raumbeziehungen darstellt,
Figur 39 bis 43 sind schematische Darstellungen, die zeigen, wie der Schauspieler auf einer kreisförmigen Plattform läuft, die sich längs der in Figur 38 mit AE dargestellten geraden Linie bewegt, wobei jeweils eine der in Figur 38 abgebildeten Stellungen gezeigt ist,
Figur 44 ist eine Zusammensetzung aus den Figuren 39-43,
Figur 45 ist eine schematische Darstellung, die die fünf unterschiedlichen räumlichen und Winkel-Beziehungen zwischen einer Kameraposition und einem Schauspieler gemäß einer Ausführungsform der Erfindung zeigt, in denen photographische Bilder gewonnen werden können, die den Bildern entsprechen, die in den in Figur 38 dargestellten Positionen gewonnen werden können,
Figur 46 ist eine perspektivische Darstellung einer Bewegungsssteuervorrichtung gemäß einer Ausführungsform der Erfindung,
Figur 47 ist eine perspektivische Darstellung des Kamera-bzw. Kamera-Halterungsteils in der Bewegungssteuervorrichtung entsprechend einer Ausführungsform der Erfindung,
Figur 48 ist eine schematische (perspektivische) Gesamtansicht einer Anordnung gemäß einer Ausführungsform der Erfindung, die zwei Drehbühnen mit jeweils einer Beleuchtungseinrichtung aufweist,
Figur 49 ist eine Detail-Seitenansicht einer gegenüber Fig. 46 modifizierten Bewegungssteuervorrichtung und
Figur 50 ist ein Blockschaltbild einer Ausführungsform der Bewegungssteuervorrichtung.

Zum besseren Verständnis der Erfindung ist es von Vorteil, eine Unterscheidung zwischen der Bewegung einer Kamera im Raum und dem aufgrund dieser Bewegung gewonnenen Bild vorzunehmen. Die tatsächliche Kamerabewegung, die in der Realität eine dreidimensionale (3-D)-Bewegung ist, wird als "physikalische Bewegung" bezeichnet.

Unsere Erfahrung lehrt uns, daß ein spezielles Bild nur das Ergebnis einer speziellen "physikalischen Bewegung" sein könne, und die bekannten Bewegungssteuersysteme beruhen auf dieser Annahme. Die vorliegende Erfindung beruht jedoch auf der Erkenntnis, daß ein spezielles Bild das Ergebnis auch einer anderen - und in vorteilhafter Weise wesentlich einfacheren - physikalischen Bewegung der Kamera im Raum sein kann, als wir aufgrund unserer Seherfahrung annehmen. Die vorliegende Erfindung, die Bewegungssimulationssteuerung, transformiert ("übersetzt") eine Bewegung der Kamera in einer xy-Ebene in eine Bewegung längs der y-Achse (eine geradlinige Vor- und Rückwärtsbewegung), einen Kameraschwenk (von einer Seite zur anderen) und eine Drehung des aufgenommen Objekts auf einer Drehbühne bzw. rotierenden Plattform.

Dies wird durch die Verwendung dreier unabhängiger "Maschinen" bewerkstelligt, die jeweils eine der einfachsten mechanischen Bewegungen, nämlich eine geradlinige Bewegung, oder eine Drehbewegung, ausführen. Die erste Maschine ist ein lineares Spurführungssystem, welches die Kamera in y-Richtung vor- und rückwärts bewegt. Die zweite Maschine ist ein Kamerakopf bzw. eine Kamerahalterung, die die Kamera um eine zur xy-Ebene senkrechte Achse dreht oder schwenkt. Die dritte Maschine ist die drehbare Plattform, die sich ebenfalls um eine zur xy-Ebene senkrechte Achse dreht. In der Anwendung wird das aufzunehmende Objekt auf der drehbaren Plattform angeordnet und die Plattform, der Kamerakopf und das lineare Spurführungssystem werden in koordinierter Weise derart angetrieben, daß die Bewegung dieser drei Maschinen zusammen eine herkömmliche Bewegung der Kamera relativ zu einem Objekt simuliert.

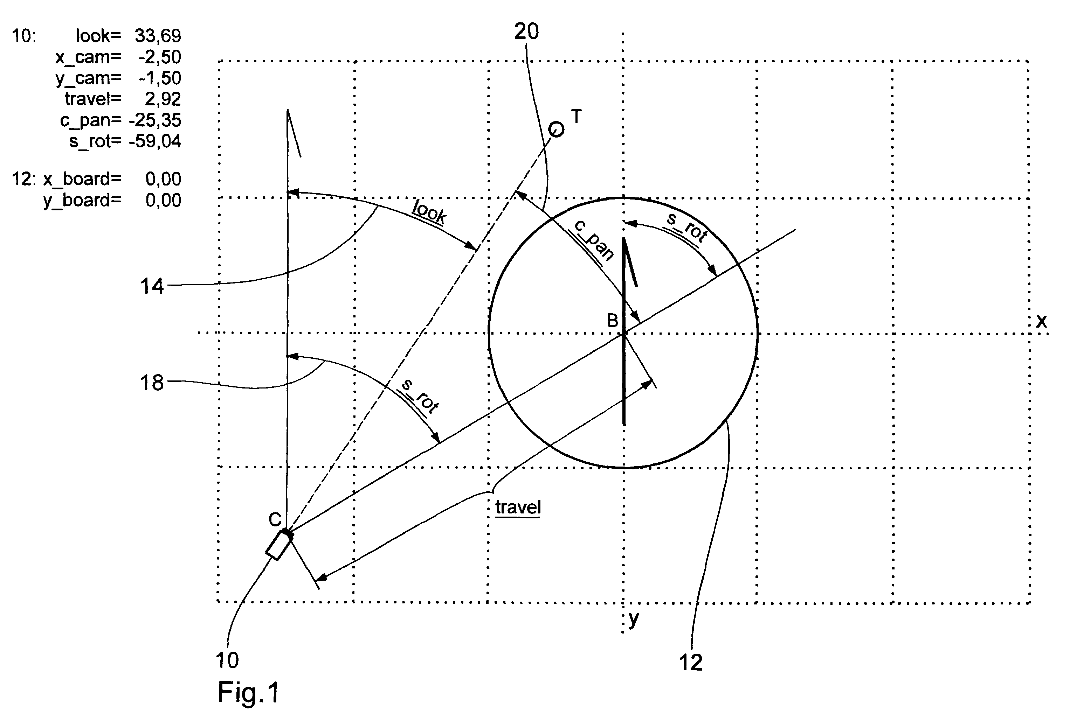

Um die Erfindung besser zu verstehen, ist es hilfreich, ein diesbezügliches Vokabular zu definieren. Die kartesische Darstellung in Figur 1 stellt eine Draufsicht einer Aufnahmesituation bei einer herkömmlichen photographischen Aufnahme dar. Das Zentrum dieser Darstellung ist der Punkt B.

Die Kamera 10 ist am Punkt C angeordnet, der x- und y-Koordinaten x_cam = -2,5, y_cam = -1,5 hat. In der Mitte der Zeichnung, mit ihrem Zentrum im Punkt B, ist eine kreisförmige Platte 12 angeordnet, deren Mittelpunkt x- und y-Koordinaten von x_board 0 y_board = 0 hat. Die Platte trägt einen in Nord-Richtung (das heißt in Richtung der y-Achse) weisenden Teil. Die Nord-Richtung wird als Bezugsrichtung zur Beschreibung der Werte aller Winkel einer physikalischen Bewegung verwendet. Die Nord-Richtung hat den Wert 0°.

Die Kamera 10 blickt auf einen Zielpunkt T, der x- und y-Koordinaten x_target = -0,5, y_target = 1,5 hat. Der Winkel zwischen der Nord-Richtung und der Verbindungslinie zwischen der Kamera 10 (Punkt C) und dem Punkt T wird als "Kamerablickwinkel" 14 bezeichnet. In Fig. 1 hat der Kamerablickwinkel 14 einen Wert von 33,69° (look = 33,69°). Der Abstand zwischen der Kamera 10 (Punkt C) und dem Mittelpunkt der Platte 12 (Punkt B) wird als "Kamerefahrtstrecke" 16 bezeichnet und hat einen Wert von 2,92 graphischen Einheiten (travel = 2,92).

Der Winkel zwischen der Richtung des Pfeils und der Verbindungslinie zwischen der Kamera 10 (Punkt C) und dem Mittelpunkt der Platte 12 (Punkt B) wird als "Szenenaufbauwinkel" 18 (s_rot) bezeichnet und hat einen Wert von -59,04° (s_rot = -59,04°).

Die Winkeldifferenz zwischen dem Szenenaufbauwinkel 18 und dem Kamereblickwinkel 14 wird als "Kamereschwenkwinkel" 20 (c_ pan) bezeichnet und hat einen Wert von -25,35° (c_pan = -25,35°).

Die Werte der Kamerafahrtstrecke 16, des Kameraschwenkwinkels 20 und des Szenenaufbauwinkels 18 werden zusammenfassend als "Bedingungen" bezeichnet und beschreiben die räumliche und Winkel-Beziehung zwischen der Kamera 10 (CAM) und der Platte 12 in Figur 1.

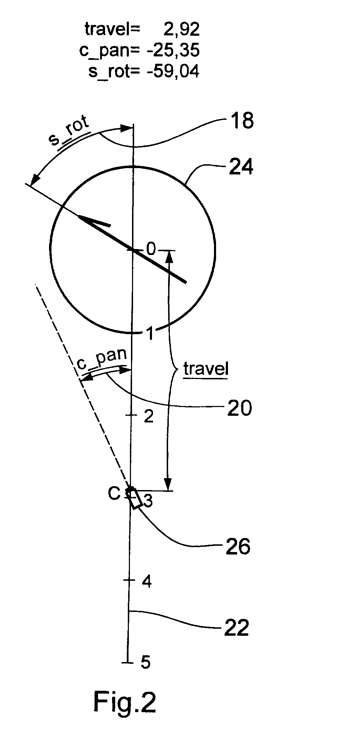

Figur 2 ist eine schematische Darstellung derselben Aufnahmesituation, wie sie in Fig. 1 dargestellt ist, aber unter Anwendung der Bewegungssimulationssteuerung gemäß der Erfindung realisiert. Wie in Fig. 2 gezeigt, weist die Bewegungssimulationssteuerung eine lineare Führung 22, die in der Abbildung durch eine gerade, mit Ziffern versehene Linie dargestellt ist, und eine kreisförmige Drehbühne 24 auf, die durch einen Kreis dargestellt ist. Wie aus Fig. 2 zu erkennen ist, trägt die Drehbühne 24 denselben Pfeil, wie er in Fig. 1 dargestellt ist. Das Zentrum der Drehbühne ist der Bezugspunkt für die Kameraposition und hat auf der Führung 22 einen Wert 0. Die Bewegungssimulations-steuerung umfaßt auch eine Kamera 26, die sich längs der linearen Spurführung 22 bewegt und in derselben Ebene wie die Drehbühne 24 gedreht oder geschwenkt wird.

Bei einem Vergleich der Fig. 2 mit Fig. 1 sehen wir, daß alle der in Fig. 1 aufgestellten Bedingungen in Fig. 2 durch die Anordnung gemäß der Bewegungssimulationssteuerung zwischen der Kamera 26 und der Drehbühne 24 ebenfalls erfüllt sind. In Fig. 2 hat die Kamera 26 denselben Abstand vom Mittelpunkt der Drehbühne 24 (d.h. travel = 2,92) wie die Kamera 10 in Fig. 1 vom Mittelpunkt der Platte 12. Weiterhin schwenkt in Fig. 2 die Kamera 26 vom Zentrum der Drehbühne 24 um denselben Winkel (c_pan = 25,35°) wie die Kamera in Fig. 1 nach links vom Zentrum der Platte 12. Gleichermaßen ist die Drehbühne 24 in Fig. 2 um denselben Winkel relativ zur Kamera 26 gedreht, wie die Platte 12 in Fig. 1 (s_rot = 59,04°). Der Winkel dieser Drehung in Fig. 2 ist auf der Drehbühne 24 durch den Pfeil 18 gekennzeichnet.

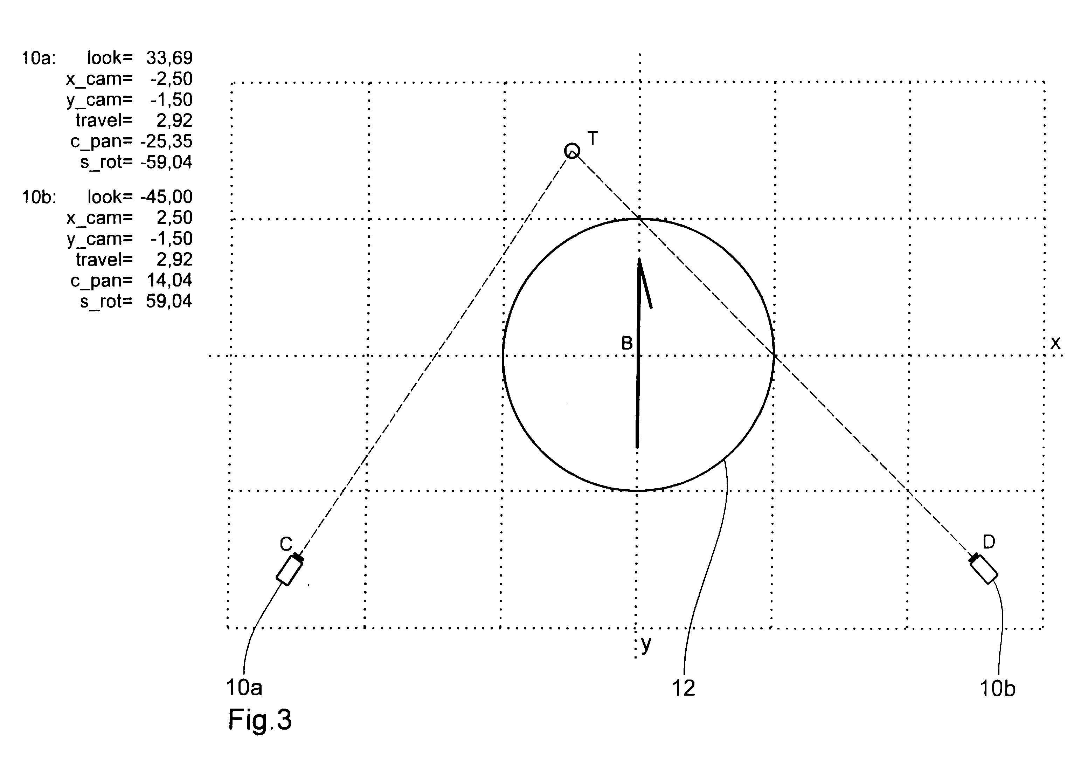

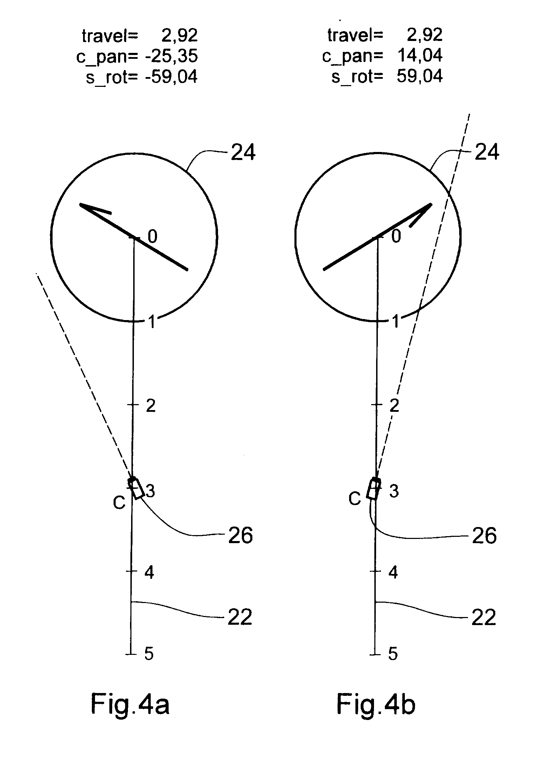

In Fig. 3 ist eine Kamera 10a zu sehen, die der Kamera 10 in Fig. 1 entspricht, sowie eine zweite Kamera 10b (Punkt D), die in der kartesischen Darstellung eine andere Position als die Kamera 10a hat, aber auf denselben Punkt im Raum (den Punkt T) blickt. In Fig. 3 sind für die Kamera 10b zusätzliche "Bedingungen" aufgestellt. Die Figuren 4a und 4b stellen die Positionen der Kamera 26 bezüglich der Drehbühne 24 im Hinblick auf die Ausführung der Erfindung dar, um die Kamerapositionen der Figur 3 zu transformieren bzw. zu "simulieren". Aus Fig. 4a ist zu ersehen, daß die Kamera 26 und die Drehbühne 24 gemäß der Erfindung gedreht werden, um eine Anordnung zwischen der Kamera 26 und der Drehbühne 24 zu bilden, die alle für die Kamera 10a in Figur 3 aufgestellten Bedingungen erfüllt. Ähnlich können - wie in Fig. 4b gezeigt - die Kamera 26 und die Drehbühne 24 bei der Ausführung der Erfindung gedreht werden, um eine Anordnung zwischen der Kamera 26 und der Drehbühne 24 zu schaffen, die alle für die Kamera 10b in Fig. 3 aufgestellten Bedingungen erfüllt. Bei diesem Beispiel ist es nicht erforderlich, die Kamera auf der linearen Führung 22 zu bewegen, weil die "Fahrtstrecke", d.h. der Abstand von der Kamera an den Punkten C und D zum Mittelpunkt B der Platte 12 in Fig. 3 für beide Kamerapositionen gleich ist.

Aus einer Analyse der Figuren 1 bis 4 kann die Schlußfolgerung gezogen werden, daß, wenn die Bewegungssimulations-steuerung alle der "Bedingungen" der herkömmlichen photographischen Aufnahme für die Kamera 10a und die Kamera 10b erfüllen kann, wobei die Kameras in zwei unterschiedlichen Punkten der xy-Ebene (am Punkt C bzw. am Punkt D) angeordnet sind, das Bewegungssimulations-Steuerungssystem die Bedingungen für jedwede in irgendeinem Punkt der xy-Ebene angeordnete Kamera, die für ein herkömmliche Aufnahme verwendet wird, erfüllen kann.

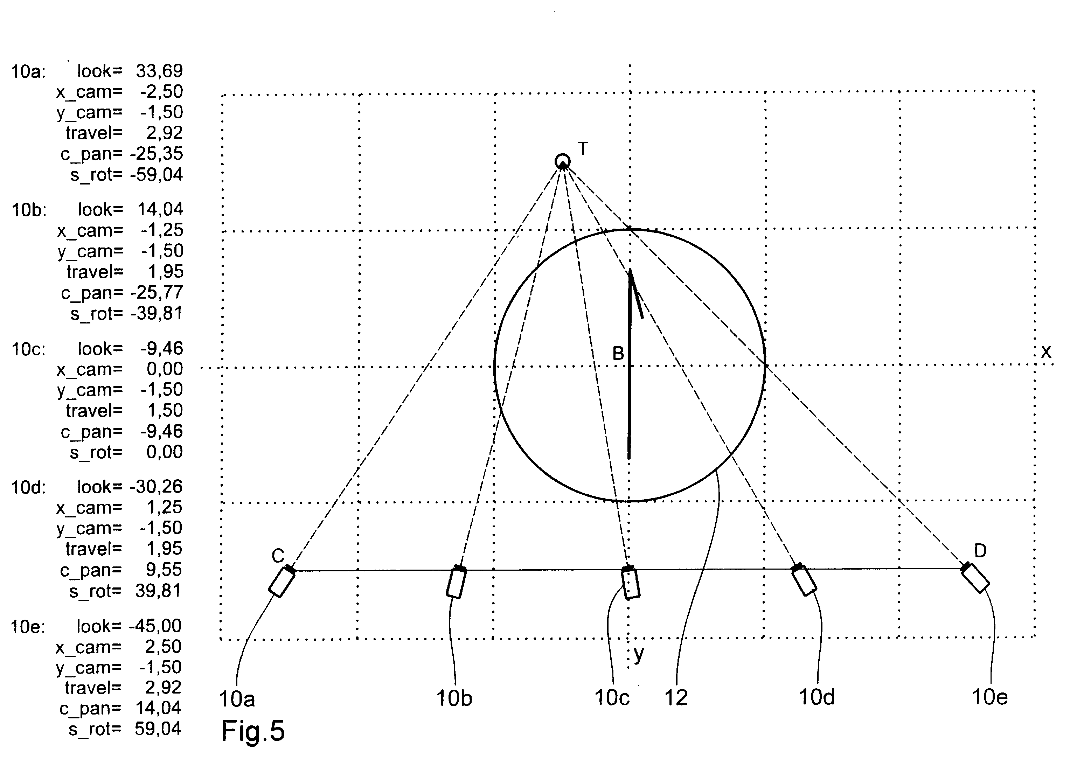

Auf der Grundlage dieser Annahme wird nachfolgend diskutiert, was geschieht, wenn eine Kamera sich in der xy-Ebene bewegt. Fig. 5 zeigt eine physikalische Bewegung einer Kamera 10 längs einer geraden Linie bei einer herkömmlichen photographischen Aufnahme, wobei die Kamera 10 sich vom Punkt C bis zum Punkt D bewegt. Während ihrer Fahrt wird die Kamera 10 derart gedreht, daß sie ständig denselben Punkt T beobachtet. Die fünf dargestellten Kamerapositionen 10a, 10b, 10c, 10d und 10e zeigen fünf Phasen der "Kamera-Bewegung". In der Abbildung sind die Bedingungen für die fünf Phasen formuliert. Die Strecke der Kamerafahrt beträgt fünf graphische Einheiten (distance = 5,0).

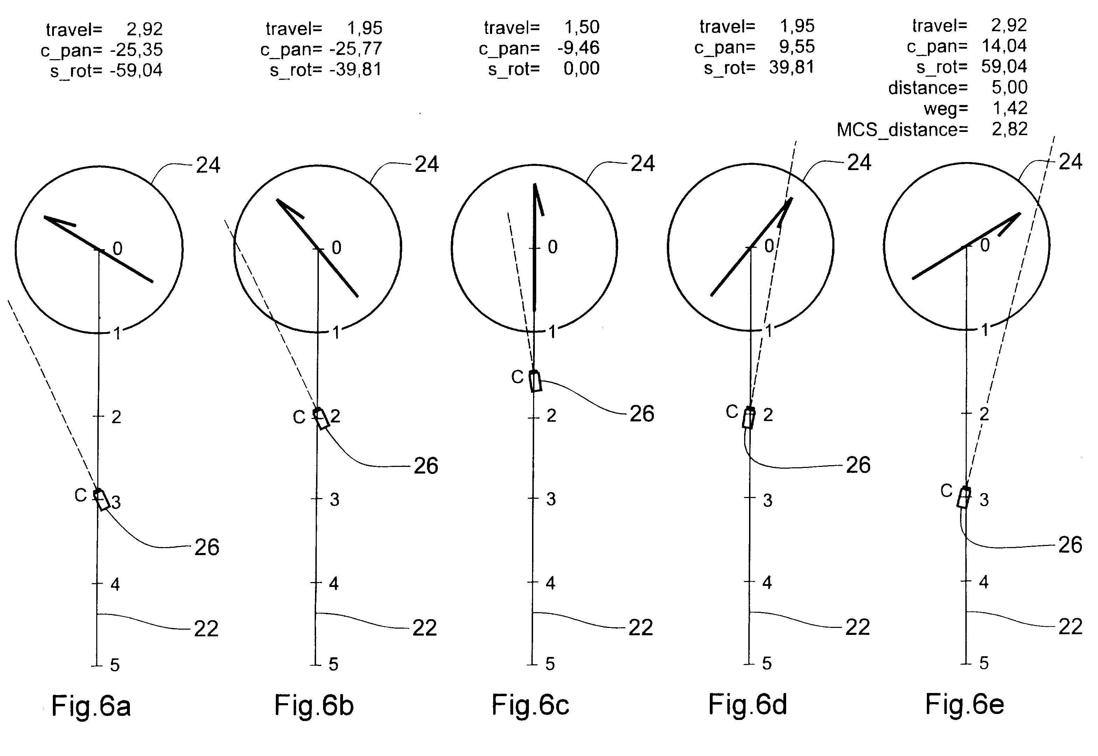

Die Fig. 6a bis 6e stellen dar, wie die Bewegungssimulationssteuerung die geradlinige Bewegung und die Kamera-Objekt-Beziehung gemäß Figur 5 in eine andere Bewegung bzw. Beziehung "übersetzt". Wie in den Figuren 6a bis 6e zu sehen ist, liefert die Bewegungssimulationssteuerung für jede in Fig. 5 gezeigte Kameraposition eine alternative Kameraposition relativ zur Drehbühne 24, in der dasselbe photographische Bild aufgenommen werden kann. Beispielsweise stellt Fig. 6a dar, wie die Kamera 26 und die Drehbühne 24 gedreht werden können, um dieselben Bedingungen wie in der Kameraposition 10a in Fig. 5 zu erreichen. Um dieselben Bedingungen wie in der Kamerastellung 10b in Fig. 5 zu erreichen, wird die Kamera 26 in Ausführung der Erfindung näher zur Drehbühne 24 bewegt, und sowohl die Kamera 26 als auch die Drehbühne 24 werden entsprechend gedreht. Ein ähnlicher Vorgang wird ausgeführt, um die Bedingungen für die Kamerapositionen 10c bis 10e neu zu schaffen, wie in den Figuren 6c bis 6e dargestellt.

Hieraus ist zu verstehen, daß, wenn die Bewegungssimulationssteuerung die in Fig. 5 aufgestellten Bedingungen für jede der fünf Kamerapositionen, die fünf Phasen der Kamerafahrt repräsentieren, erfüllen kann, sie auch die Bedingungen für alle anderen Phasen erfüllen kann. Die daraus zu ziehende Schlußfolgerung ist, daß die Kamera 26, wenn sie über die Bewegungssimulationssteuerung angetrieben wird, die Drehbühne 24 auf dieselbe Weise wahrnimmt wie die Kamera 10 die Plattform 12.

Aus den Figuren 5 und 6a bis 6e ist der grundlegende Unterschied zwischen den beiden Bewegungen, der ursprünglichen physikalischen "Bewegung" ("PM distance") und der mittels der Bewegungssimulationssteuerung realisierten, "übersetzten" Bewegung zu ersehen. Die in Fig. 5 gezeigte Fahrt der Kamera 10 läuft auf der x-Achse ab. Die durch die Bewegungssimulationssteuerung ausgeführte Bewegung läuft jedoch - wie in den Fig. 6a bis 6e dargestellt - längs der linearen Führung 22 ausschließlich auf der y-Achse ab. Ein Vorteil der Anwendung der Bewegungssimulationssteuerung bei diesem Beispiel besteht darin, daß die gesamte Fahrtstrecke der Kamera 26 auf der y-Achse, wie es in den Figuren 6a bis 6e gezeigt ist (MCS distance = 2,82 graphische Einheiten), die in Vorwärts- und Rückwärts-Richtung zurückgelegt wird, viel kürzer als die gemäß Fig. 5 zusammenhängend in einer Richtung zurückgelegte Strecke auf der x-Achse (PM distance = 5,0 graphische Einheiten). Der gesamte Bewegungsbereich in y-Richtung (d.h. die Streckendifferenz zwischen dem entferntesten und dem nächsten Punkt) wird als "Weg" bezeichnet. In den Figuren 6a bis 6e ist der Weg-Betrag 1,42 (die Position bei 10a oder 10e minus der Position bei 10c, 2,92 - 1,5). Die Figuren 6a bis 6e zeigen, daß die Bewegung auf der x-Achse vollständig eliminiert wird. Die Differenz zwischen der Fahrtstrecke auf der y-Achse (MCS distance) und der Fahrtstrecke auf der x-Achse (PM distance) zeigt, daß die mit der Bewegungssimulations-Steuerung bewegte Kamera viel langsamer fährt, als die Kamera während der ursprünglichen Kamerafahrt bewegt werden müßte. Diese Verringerung der Kamera-Bewegungsgeschwindigkeit ist sehr wichtig für die Qualität der aufgenommenen Bilder, da sie weniger Bildzittern ("jitter") erzeugt.

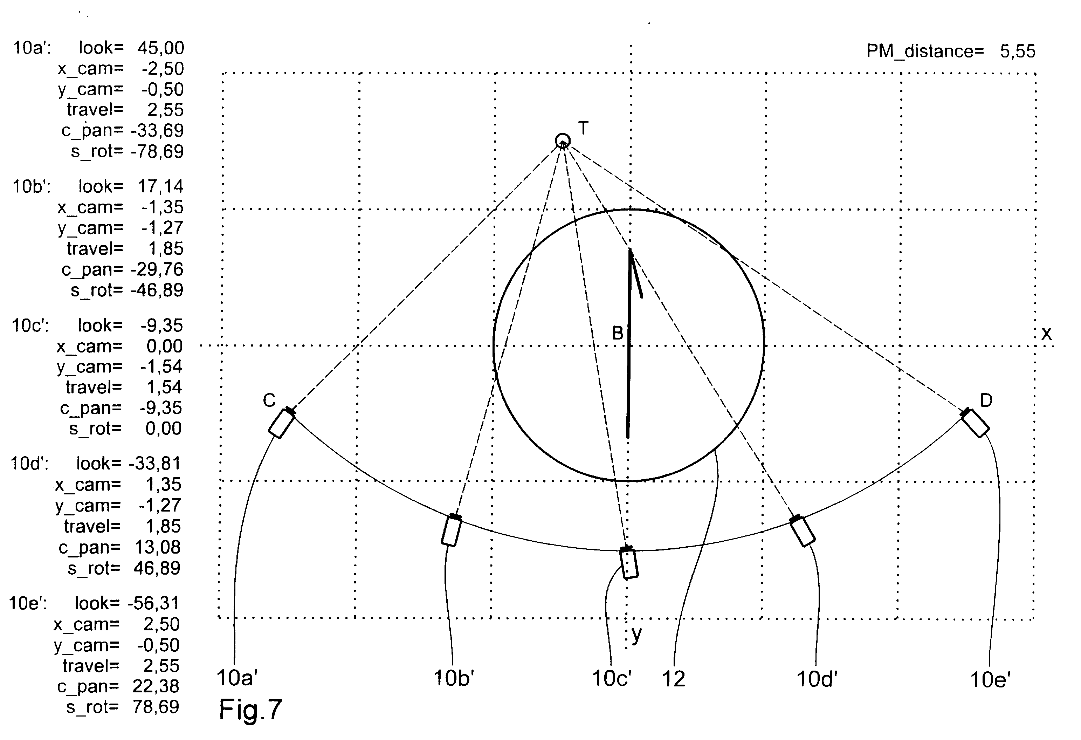

Figur 7 stellt fünf Positionen 10a' bis 10e' der Kamera 10 in der Realität dar, wenn die Kamera eine Bewegung auf einer gekrümmten Bahn um den Punkt T beschreibt. Die verschiedenen Bedingungen in jeder Kameraposition sind aus Fig. 7 zu ersehen. In Fig. 7 beträgt die Fahrtstrecke 5,55 graphische Einheiten.

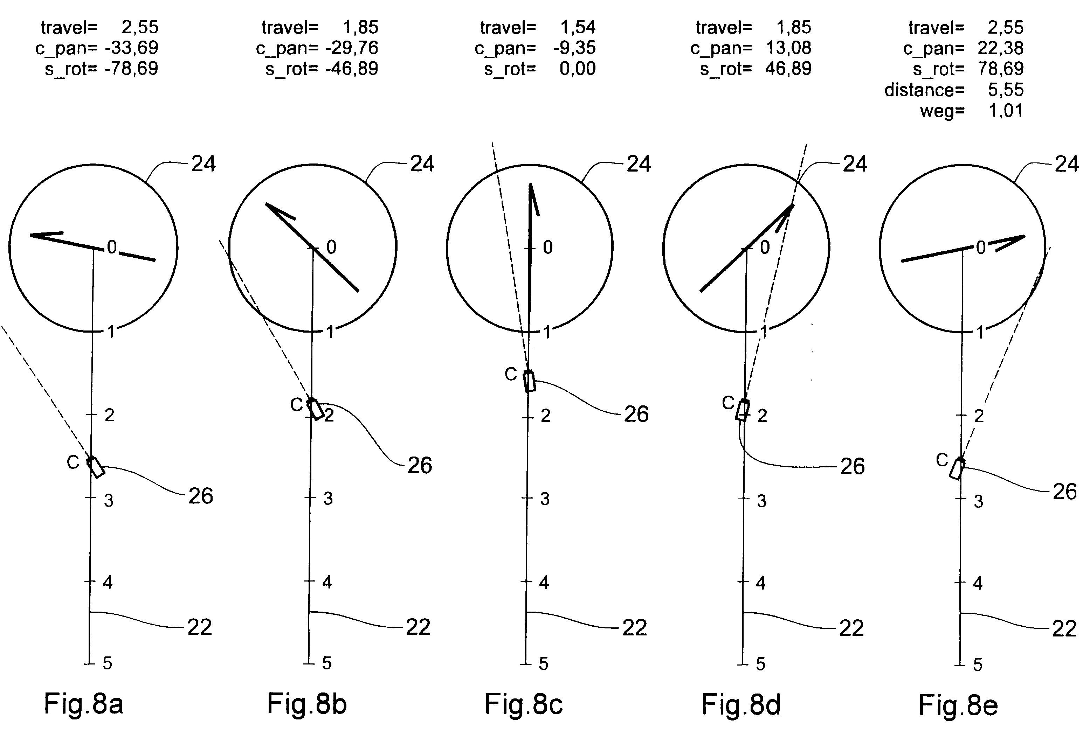

Die Figuren 8a bis 8e stellen dar, wie diese Bewegung mit der Bewegungssimulations-Steuerung gemäß einer Ausführungsform der Erfindung transformiert wird. Die Figuren 8a bis 8e zeigen fünf verschiedene Positionen der Kamera 26 bei der Bewegungssimulations-Steuerung, wobei jede Figur einer der in Fig. 7 gezeigten Positionen entspricht. Jede der in den Figuren 8a bis 8e gezeigten Positionen der Kamera 26 liefert zusammen mit den relativen Drehwinkeln der Kamera 26 und der Drehbühne 24 denselben Satz von Bedingungen, wie er bei der jeweiligen ursprünglichen Kameraposition in Fig. 7 vorlag. Daraus ist zu ersehen, daß die in den Figuren 8a bis 8e dargestellten Kamerapositionen dieselben photographischen Abbilder liefern werden, wie die in Fig. 7 dargestellten Kamerapositionen. Die Analyse dieser Abbildungen führt zu der Schlußfolgerung, daß die Bewegungssimulations-Steuerung eine auf einer gekrümmten Bahn in der xy-Ebene verlaufende Kamerabewegung in eine lineare, eindimensionale Kamerabewegung längs der y-Achse transformiert. Die Figuren 8a bis 8e demonstrieren (wie schon die Fig. 6a bis 6e), daß eine Kamerabewegung in x-Richtung durch die Bewegungssimulationssteuerung vollständig eliminiert wird.

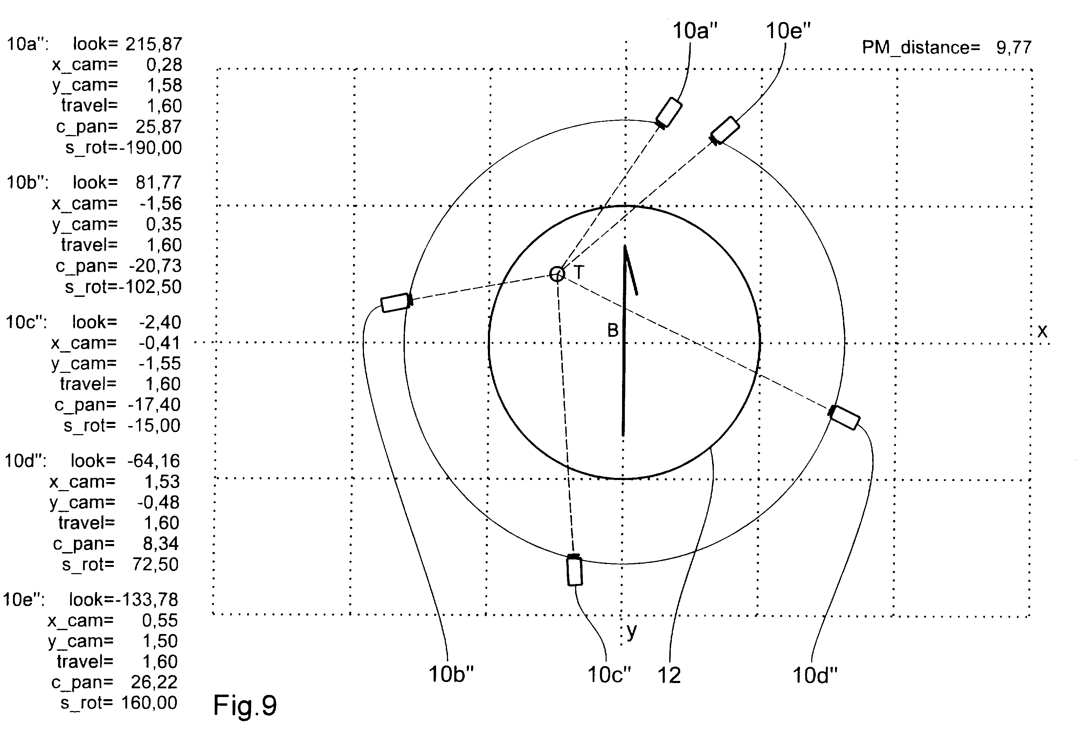

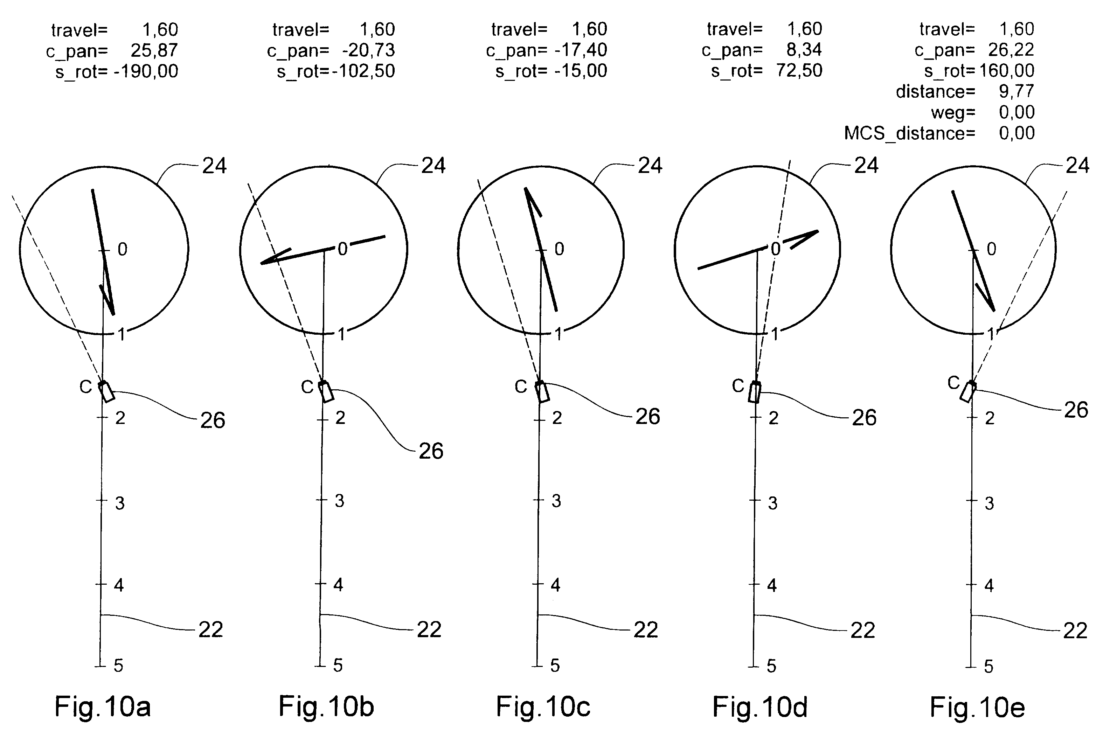

Fig. 9 zeigt fünf Kamerapositionen 10a" bis 10e", die Punkte einer Kreisbewegung um die Plattform 12 darstellen (bei der die Fahrtstrecke 9,77 graphische Einheiten ist). Die Kamera ist auf den Zielpunkt T (x_target = -0,5, y_ -target = 0,5) gerichtet. Wie bei den oben diskutierten Beispielen können alle Bedingungen für jede der in Fig. 9 dargestellten Kamerastellungen durch Anordnungen der Bewegungssimulations-Steuerung zwischen der Kamera 26 und der Drehbühne 24 ebenfalls erfüllt werden, wie in den Fig. 10a bis 10e gezeigt. Es ist interessant, festzustellen, daß bei diesem Beispiel MCS distance = 0 ist. Dies bedeutet, daß die Kamera 26 sich bei Steuerung gemäß der Erfindung überhaupt nicht bewegt, sondern sich einfach um ihre Achse dreht.

Aufbauend auf der obigen Diskussion der Grundprinzipien der Erfindung wird deren Wirkungsweise jetzt genauer diskutiert. Bei der herkömmlichen Photographie bewegt sich die Kamera und bildet eine statische "Welt" ab. Die gesamte Arbeit, die zum Zurücklegen einer Strecke und zur Veränderung der Blickwinkel geleistet wird, wird ausschließlich von der Kamera geleistet. Die durch die Kamera aufgenommene statische "Welt" hat keinen klaren Bezugspunkt. Sie besteht aus einer unendlichen Menge von visuellen Elementen. Diese Komplexität und das Fehlen eines Bezugspunktes bei der photographierten "Welt" wirft Probleme bei der Erzeugung mehrschichtiger Bilder ebenso wie bei der Erzeugung und Integration von Computerbildern auf.

Die vorliegende Erfindung basiert auf dem Gedanken, daß die Kamera nur einen Teil zu einer räumlichen Bewegung beiträgt und nur einen Teil der "Welt" (nämlich denjenigen, der sich auf der Drehbühne befindet) aufnimmt. Dieser Teil der "Welt" trägt durch seine eigene Drehbewegung zusammen mit der Kamera zur Ausführung der gesamten Bewegung bei. Die "Welt" ist hierbei nicht statisch, und ihre unendliche Menge visueller Elemente, die aufzunehmen ist, wird auf die auf der Drehbühne liegenden visuellen Elemente beschränkt. Die Bewegungssimulations-Steuerung synthetisiert eine neue räumliche Bewegung zwischen der Kamera und einem vorgegebenen Punkt der "Welt". Um diesen Punkt dreht sich die (begrenzte) reale Welt. Dieses Drehzentrum wird ein klarer Bezugspunkt für die Bewegung und die Lage der aufgenommenen Objekte sowie die Bildkomposition.

Bezieht man sich nochmals auf Fig. 9, bewegt sich die abgebildete Kamera 10 dort auf einer Kreisbahn um die Plattform 12 und behält ihren Abstand vom Mittelpunkt der Plattform 12 während der Bewegung bei. Die mittels der Bewegungssimulations-Steuerung ausgeführte Kamerafahrt repräsentiert die Änderung im Abstand zwischen der Kamera 10 und dem Mittelpunkt der Plattform 12. Dies ist der Grund dafür, warum die Kamera 26 unter Steuerung gemäß einer Ausführungsform der Erfindung sich - wie in den Fig. 10a bis 10e dargestellt - überhaupt nicht fortbewegt. Die gesamte Fahrtstrecke der Kamera in Fig. 9 (PM distance = 9,77) wird in eine Drehung der Drehbühne 24 und der Kamera 26 übersetzt, wie in den Fig. 10a bis 10e gezeigt.

Die unterschiedlichen, als "Bedingungen" bezeichneten und in den Figuren dargestellten Beziehungen zwischen den drei Bewegungen können durch eine Vorwärts- und Rückwärtsbewegung der Kamera, einen Kameraschwenk und eine Rotation der Drehbühne realisiert werden, wodurch eine zweidimensionale Kamerabewegung im Aufnahmeraum simuliert werden kann. Es ergeben sich exakte Abbilder des ausgewählten Teils der "Welt", der sich auf der Drehbühne befindet. Die Vorwärts- und Rückwärts-Fahrt der Kamera, der Kameraschwenk und die Drehung der Drehbühne bilden die drei grundlegenden Kanäle der Bewegungssimulations-Steuerung. Der synchronisierte Betrieb dieser drei Kanäle bildet ein virtuelles "Fahrzeug", welches jede Bewegung im Raum ausführen kann. Die Bewegung des "Fahrzeugs" hängt vom Beitrag der drei Kanäle zur Gesamtbewegung ab.

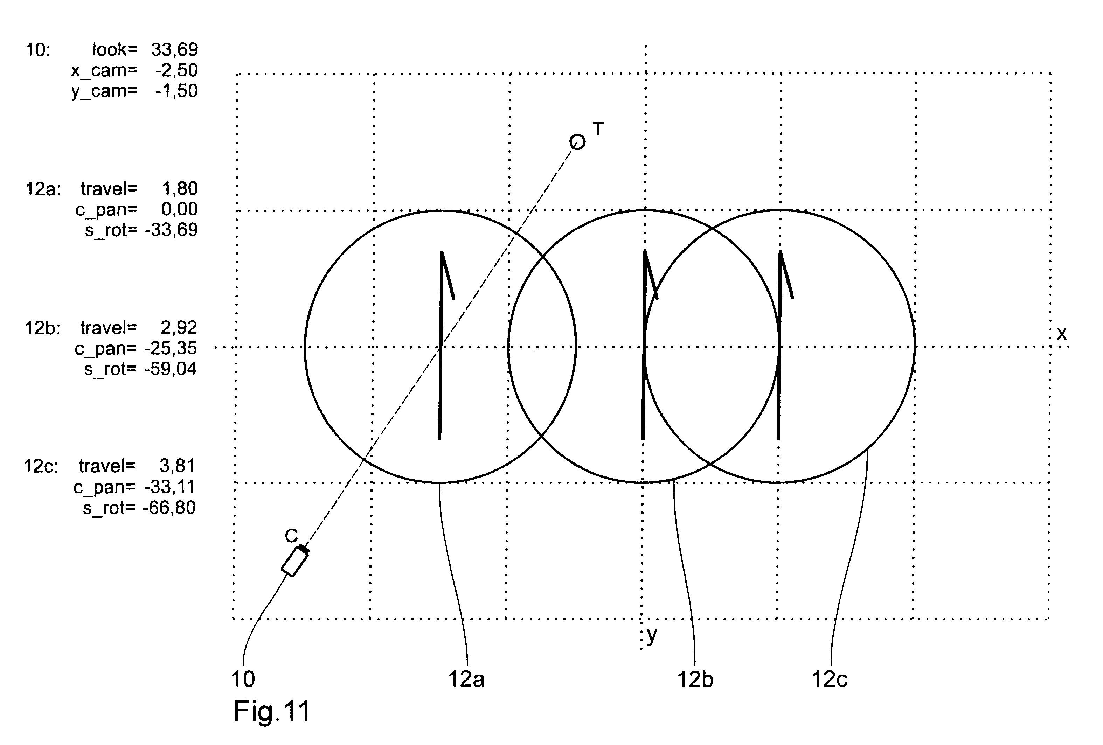

Die Funktion der Bewegungssimulationssteuerung wird nachfolgend genauer unter Bezugnahme auf die Figuren 11 bis 25 erläutert. Hieran ist zu ersehen, daß das gesamte Bild der "Welt" aus separaten Bildern der (auf verschiedenen Drehbühnen) vorhandeneen Teile aufgebaut werden kann.

Die Figuren 11, 13 und 15 zeigen schematisch dieselbe lineare Bewegung der Kamera 10, wie sie bereits in Fig. 5 dargestellt war. Zur Vereinfachung sind jedoch nur drei Phasen der Kamerabewegung (an den Punkten C, Ca' und D) gezeigt. In diesen Figuren sind drei Platten 12a, 12b und 12c an verschiedenen Orten der xy-Ebene angeordnet. In jeder der Figuren 11, 13 und 15 sind für jede Kamerastellung räumliche Beziehungen ("Bedingungen") zwischen der Kamera, den Platten 12a, 12b und 12c und dem Zielpunkt T angegeben.

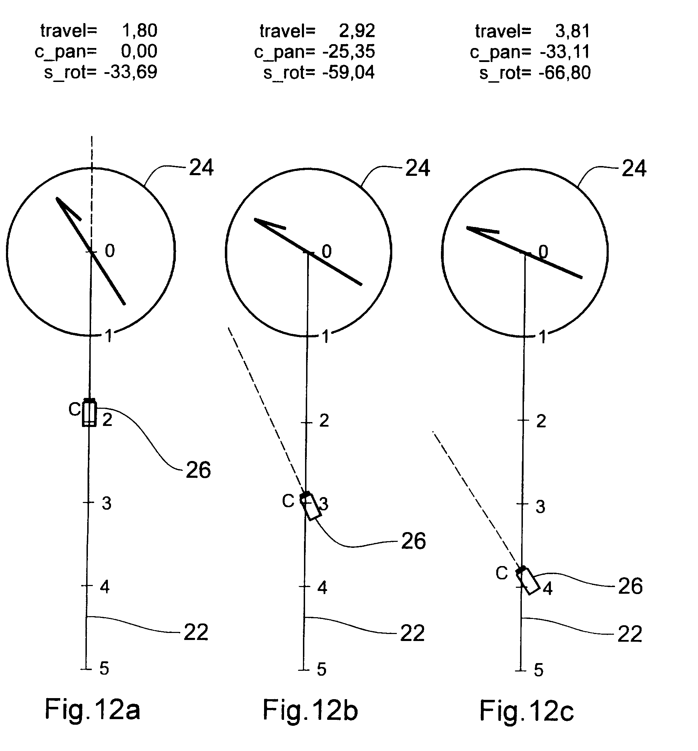

Die Figuren 12a bis 12c, 14a bis 14c und 16a bis 16c zeigen, wie die Bewegungssimulationssteuerung über verschiedene räumliche Anordnungen zwischen der Kamera und der Drehbühne die in den Figuren 11, 13 bzw. 15 angegebenen Bedingungen erfüllen kann. Fig. 12a - 12c zeigen beispielsweise drei verschiedene Winkel- und Raumkoordinatenbeziehungen zwischen der Drehbühne 24 und der Kamera 26. Die erste, in Fig. 12a dargestellte Beziehung reproduziert die in Fig. 11 gezeigten Verhältnisse zwischen der Kamera 10 und der Platte 12. Ähnlich repräsentiert die in Fig. 12b gezeigte Beziehung dieselben Bedingen, wie sie in Fig. 11 zwischen der Kamera 10 und der Platte 12b bestehen., Schließlich entspricht die in Fig. 12c dargestellte Beziehung der Beziehung zwischen der Kamera 10 und der Platte 12c in Fig. 11.

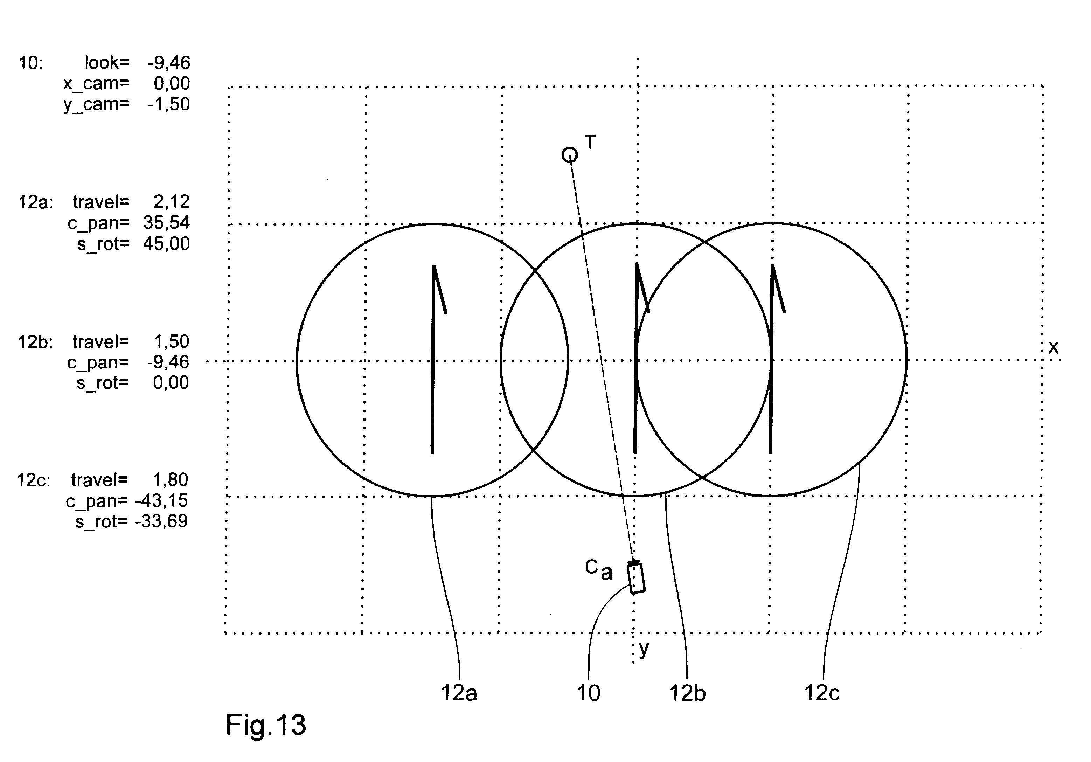

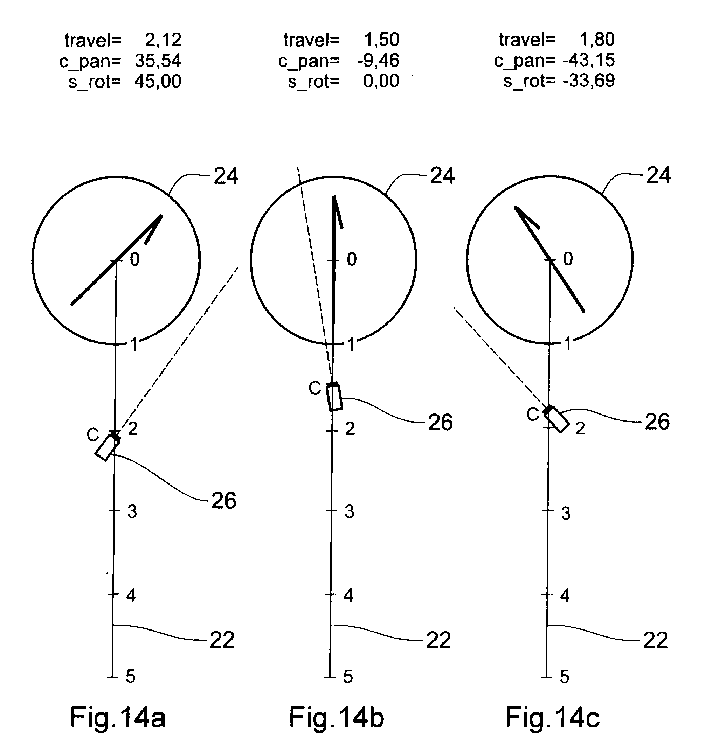

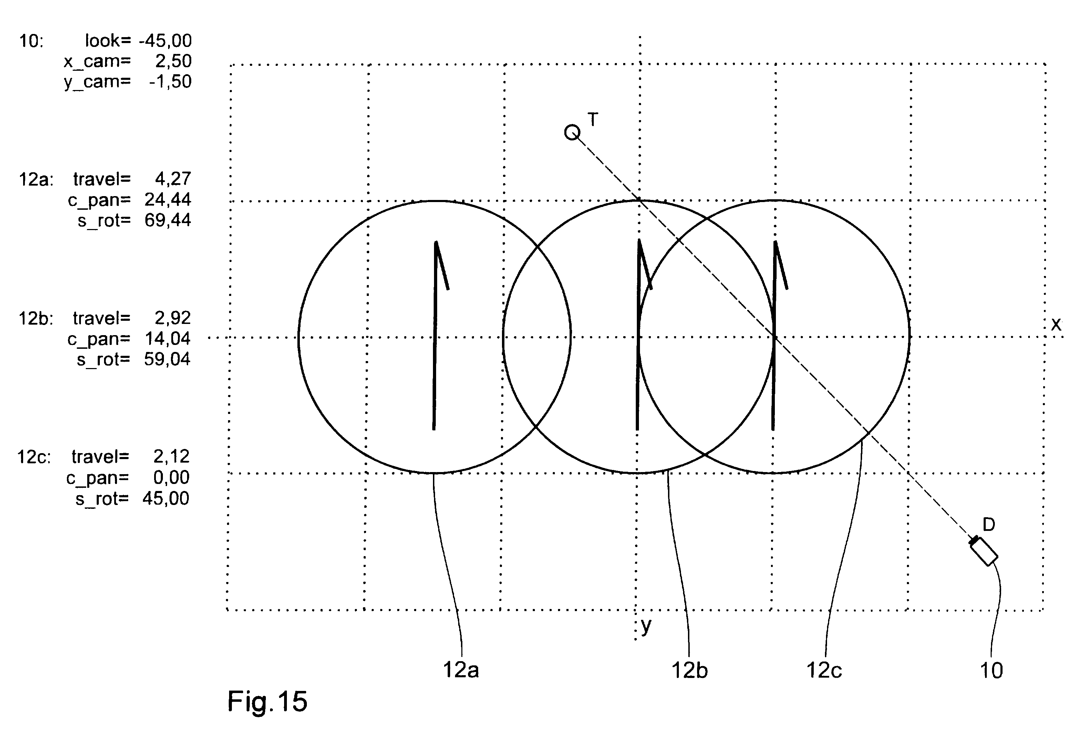

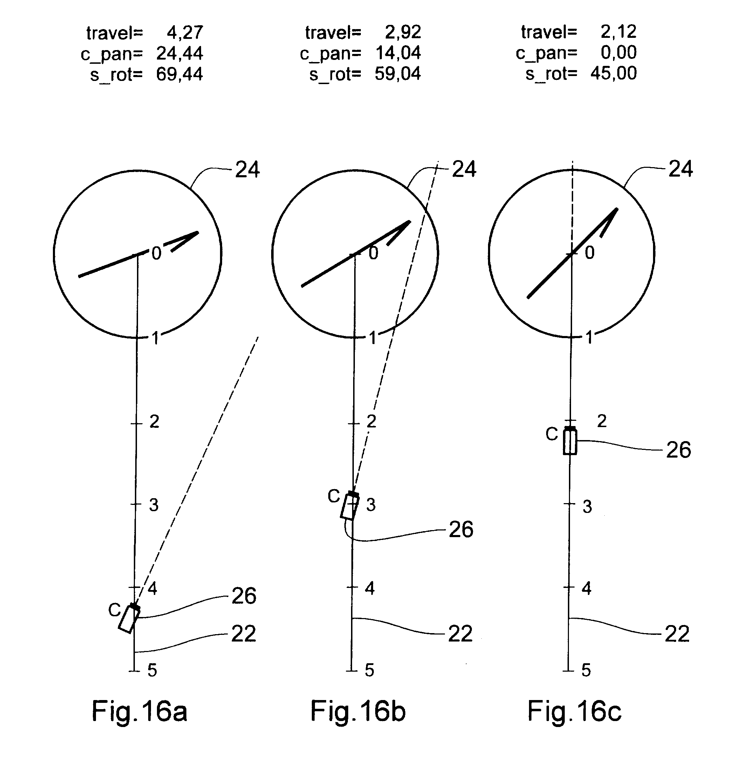

Auf ähnliche Weise entsprechen die drei in den Figuren 14a bis 14c gezeigten Kamera-Beziehungen den Beziehungen zwischen der Kamera 10 und den drei in Fig. 13 dargestellten und dort mit 12a, 12b und 12c bezeichneten Plattformen. Weiterhin entsprechen die drei in den Fig. 16a bis 16c gezeigten, verschiedenen Kamera-Bühne-Beziehungen den in Fig. 15 dargestellten Beziehungen zwischen der Kamera 10 und den drei Plattformen 12a, 12b und 12c. Aus diesen Beispielen wird wiederum klar, daß mit Hilfe der Erfindung ein photographisches Abbild jedes der drei Objekte durch Drehung der Kamera 26 und der Drehbühne 24 und durch Bewegung der Kamera 26 relativ zur Bühne längs einer geradlinigen Führung 22 geschaffen werden kann.

Bis jetzt wurden Beispiele zur Verdeutlichung der Erfindung nur unter Bezugnahme auf eine Platte mit einem eindimensionalen Pfeil diskutiert. Wie nachfolgend erklärt werden wird, kann die vorliegende Erfindung jedoch auch auf zwei- oder dreidimensionale Objekte angewandt werden.

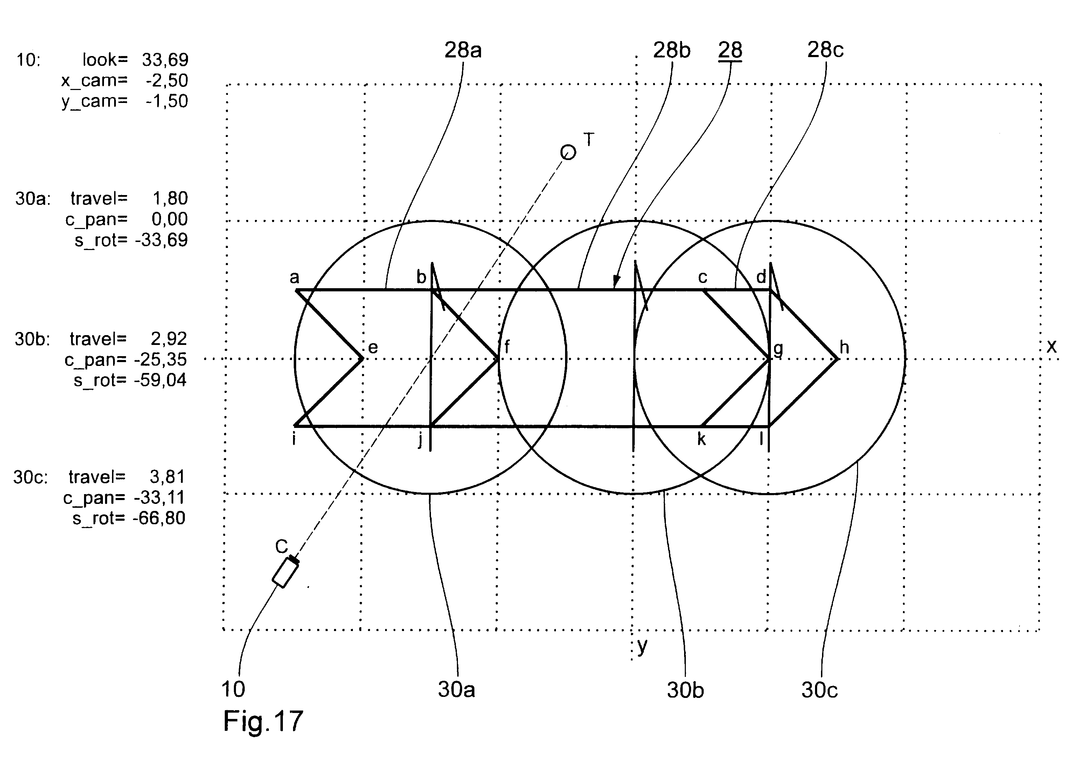

Figur 17 stellt ein langgestrecktes, pfeilähnliches Objekt 28 (mit Punkten a, d, h, 1, i, e) dar, das aus drei kleineren Abschnitten 28a, 28b und 28c (durch die Punkte a, b, f, j, i, e bzw. die Punkte b, c, g, k, j und f bzw. die Punkte c, d, h, 1, k und g gebildet) aufgebaut ist. Jeder Abschnitt ruht auf einer kreisförmigen Platten 30a, 30b bzw. 30c, und jede der Platten trägt in einen in Nord-Richtung (d.h. y-Richtung) weisenden Pfeil.

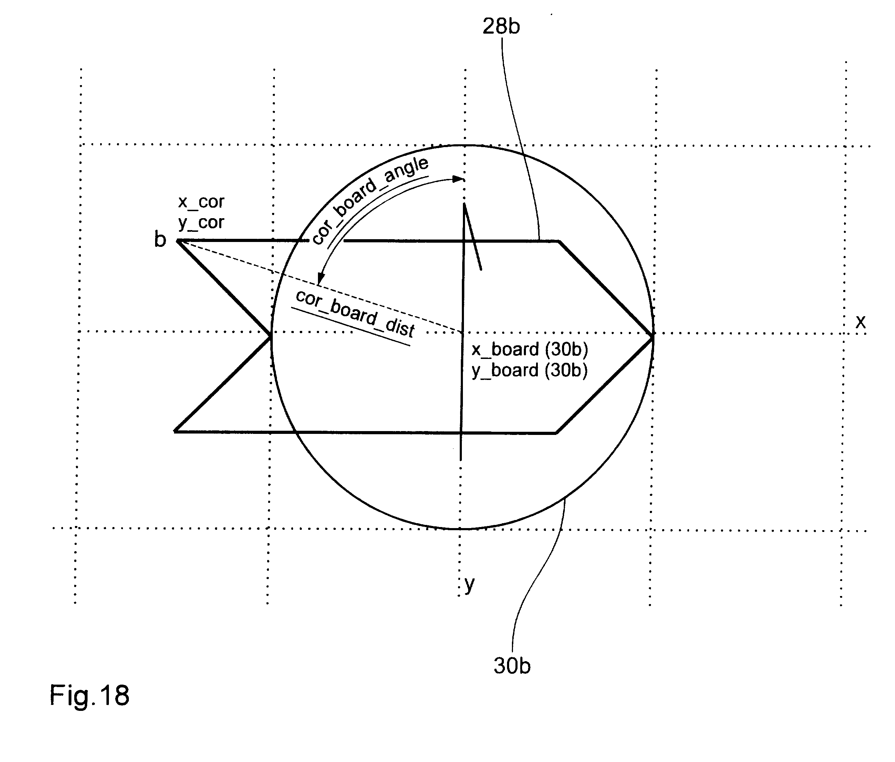

Die Figuren 18, 19 und 20 zeigen die Abschnitts-Bedingungen, die verwendet werden können, um mathematisch die räumlichen und Winkel-Beziehungen zwischen der Kamera und den Ecken der jeweiligen Abschnitte zu beschreiben.

Diese Zeichnungen erklären das mathematische Vokabular, das für die Abschnitts-Bedingungen (basierend auf "corner b") verwendet wird. Figur 18 stellt beispielsweise den Ecke-Platte-Abstand (cor_board_dist) zwischen dem Mittelpunkt der Platte (x_board, y_board) und der Ecke b des Objekts (x_cor, y_cor) und den Ecke-Platte-Winkel (cor_ board_angle) zwischen der Richtung des Pfeils und einer vom Mittelpunkt der Platte 30b zur Ecke b des Objekts 28b verlaufenden Linie dar.

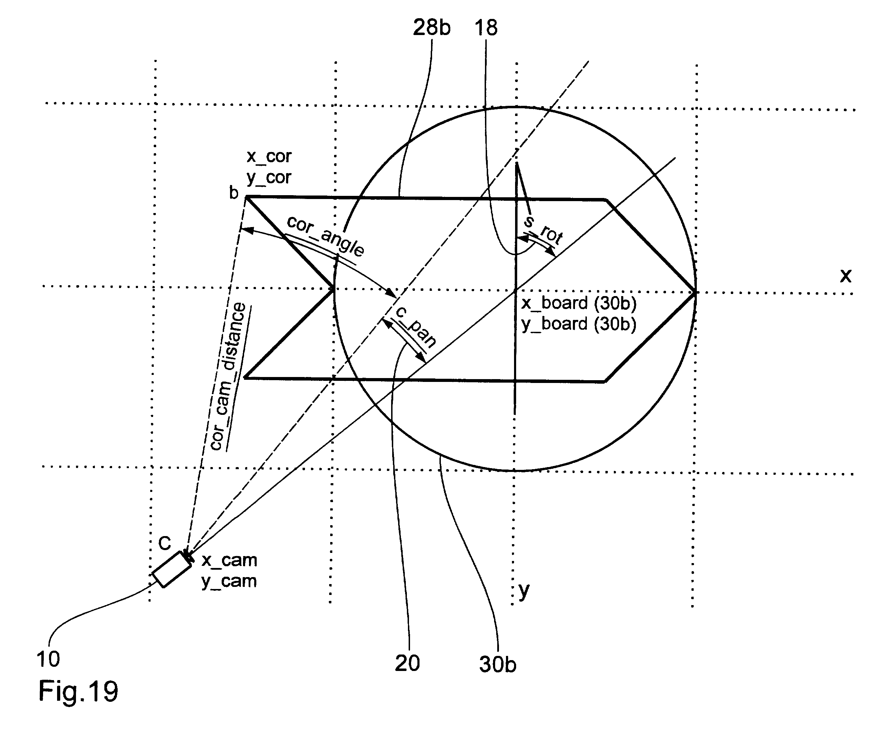

Fig. 19 stellt den Kameraschwenk (c_pan), d.h. den Winkel zwischen einer vom Mittelpunkt der Platte 30b zur Kamera 10 verlaufenden Linie und einer in die Blickrichtung der Kamera 10 (d.h. zum Zielpunkt T) verlaufenden Linie dar. Fig. 19 zeigt auch den Ecke-Kamera-Abstand (cor_ cam_distance) zwischen der Kamera 10 und der Ecke b und den Ecken-Winkel (cor_angle) zwischen einer von der Ecke b zur Kamera 10 verlaufenden Linie und einer in Blickrichtung der Kamera 10 verlaufenden Linie. Weiterhin stellt Figur 19 den Szenenaufbau-Drehwinkel (s_rot), d.h. den Winkel zwischen der Blickrichtung der Kamera 10 und der Richtung des Pfeils, dar.

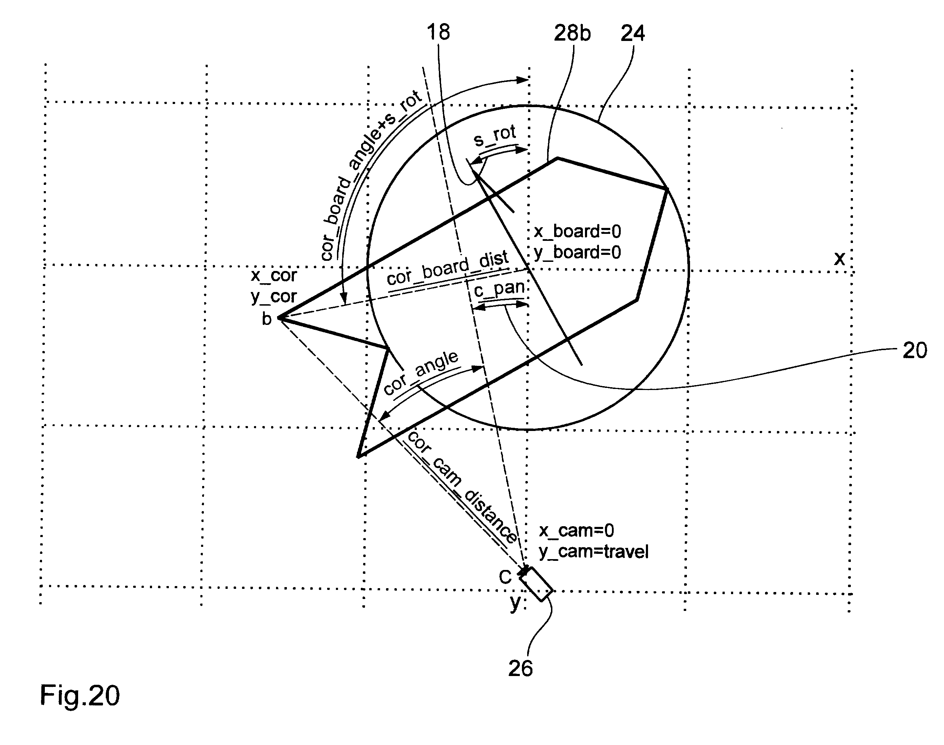

Fig. 20 zeigt letztlich, wie jede der Abschnitts-Bedingungen ein Äquivalent hat, wenn der Abschnitt 28b auf die Drehbühne 24 der Vorrichtung gemäß einer Ausführungsform der Erfindung gebracht wird. Das in den Figuren 17 bis 19 dargestellte Vokabular wird später auch für die Beschreibung der "Abschnitts-Maßstabs-Bedingungen" verwendet.

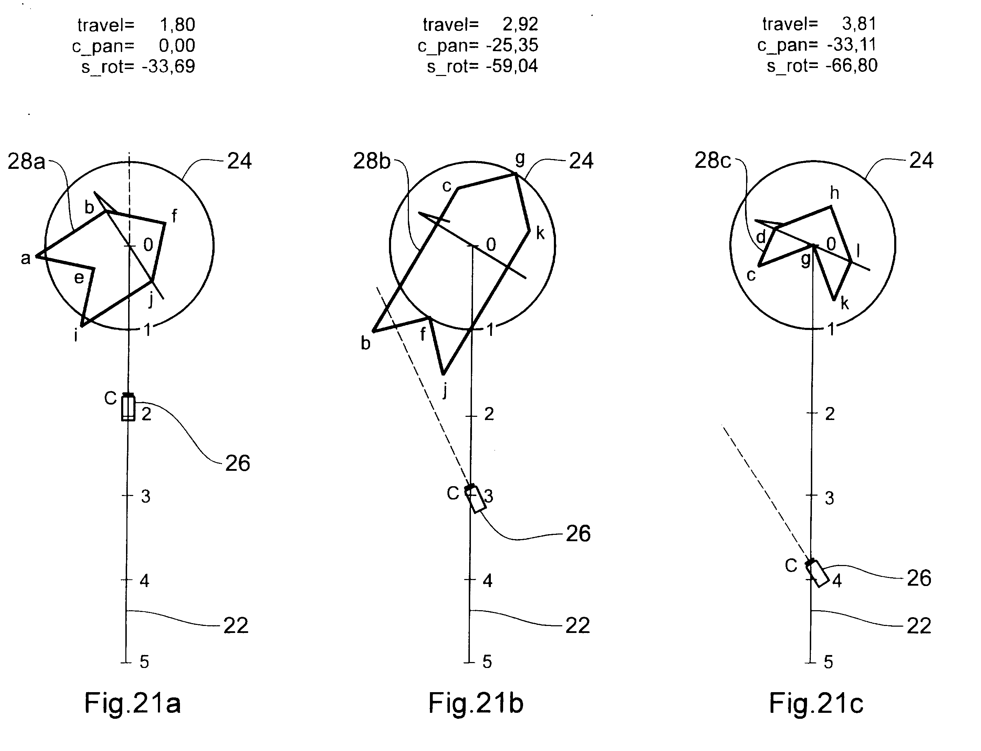

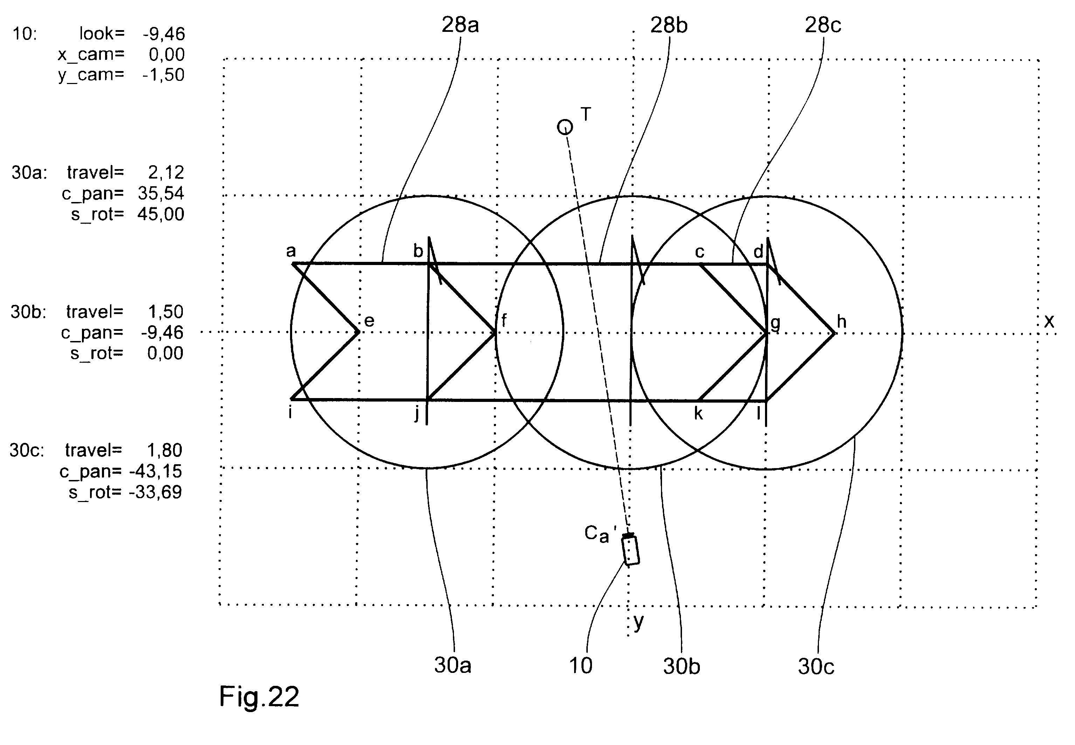

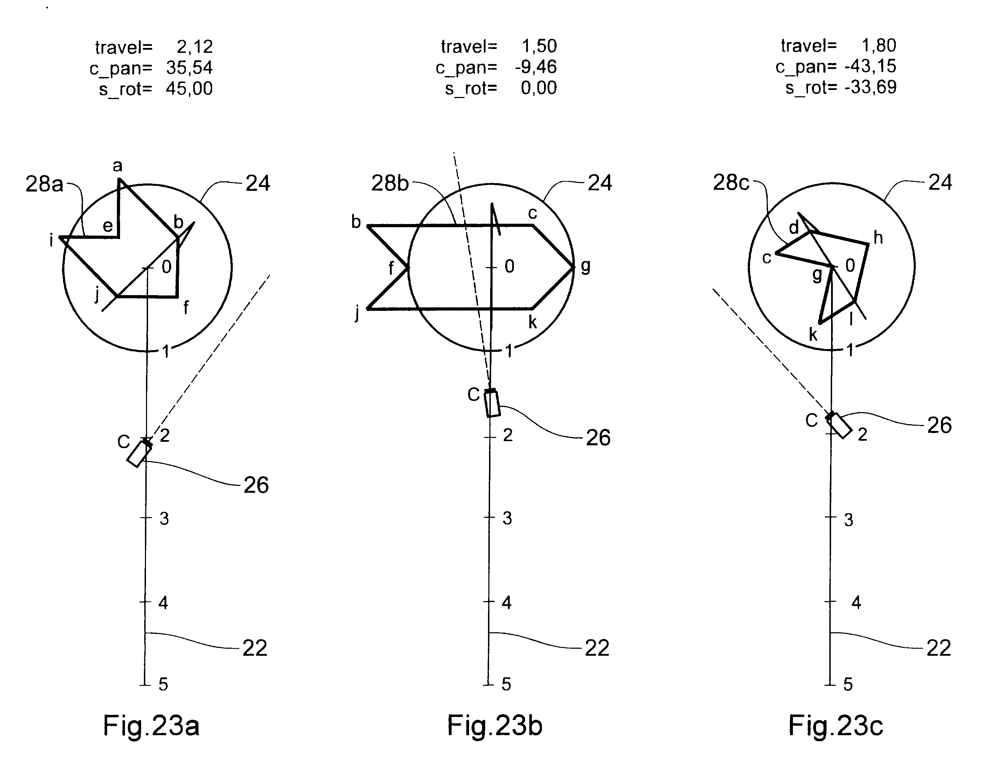

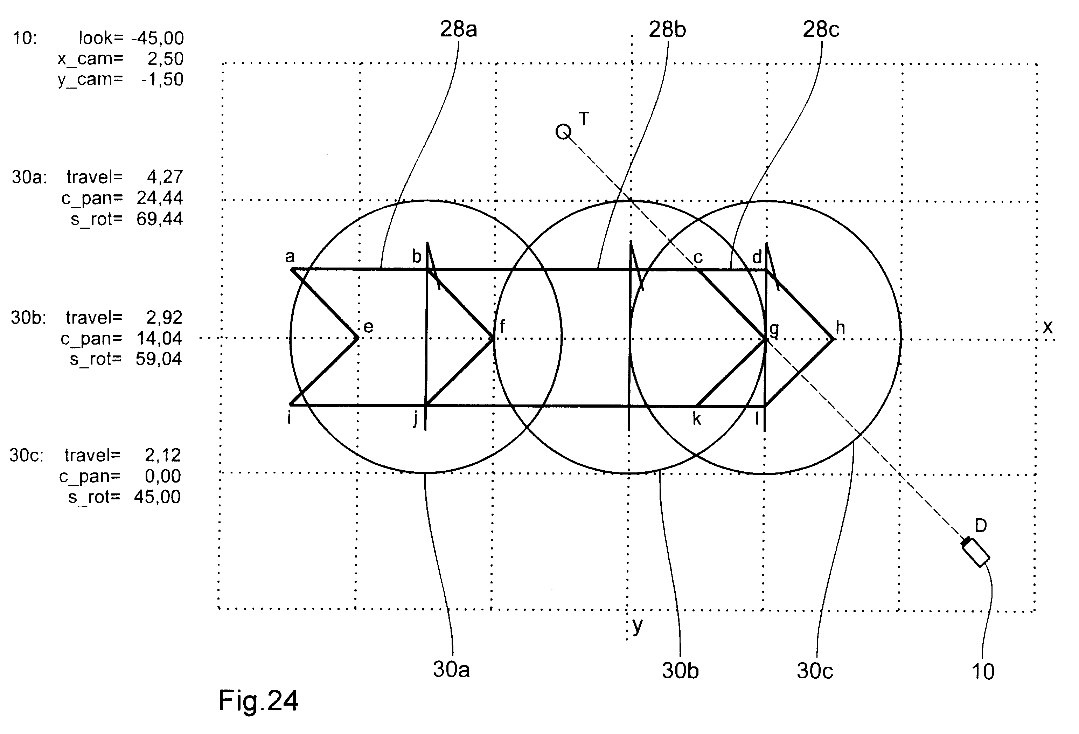

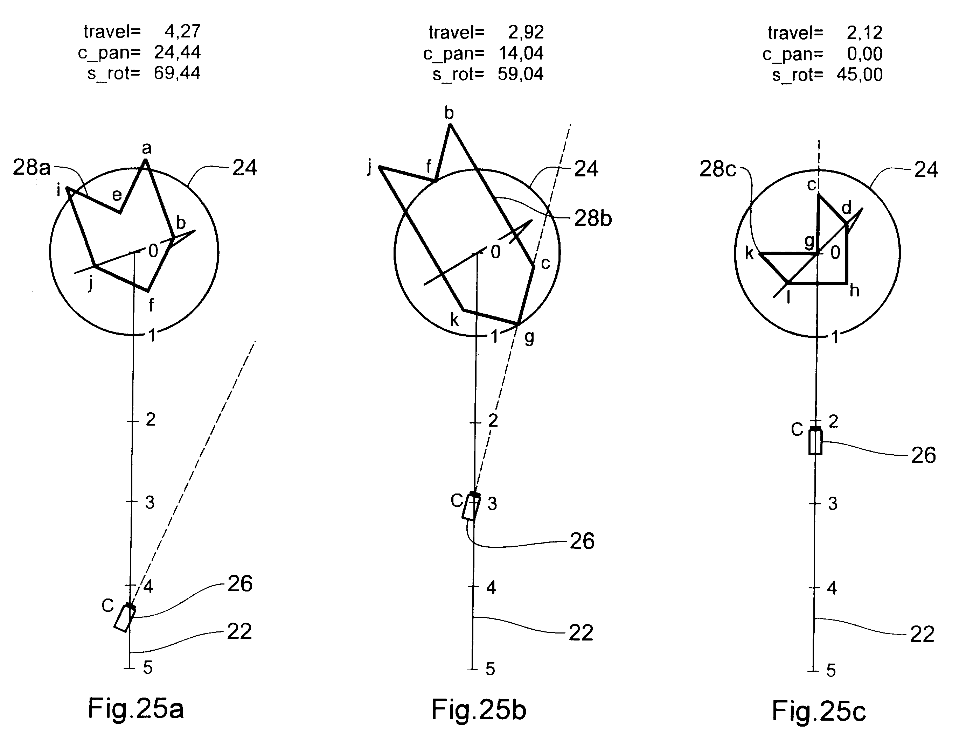

Wie oben festgestellt, zeigt Fig. 17, wie drei Abschnitte 28a, 28b und 28c auf drei kreisförmigen Plattformen 30a, 30b und 30c ruhen und der Kamera 10 ein herkömmliches Bild bieten, wenn die Kamera 10 im Punkt C angeordnet ist. In den Figuren 21a, 21b und 21c ist dargestellt, wie die einzelnen Abschnitte 28a, 28b und 28c auf der Drehbühne 24 in gleicher Position relativ zur Kamera 26 wie dieselben Abschnitte auf den Platten 30a, 30b und 30c in Fig. 17 angeordnet sind. Fig. 22 zeigt die Beziehung zwischen den Abschnitten 28a, 28b und 28c, wenn die Kamera bezüglich dieser Abschnitte sich in einer anderen Stellung, im Punkt Ca' befindet. Die Figuren 23a, 23b und 23c stellen dar, daß, wenn die Abschnitte auf der Drehbühne der erfindungsgemäßen Vorrichtung angeordnet sind und die Drehbühne 24 und die Kamera 26 geeignet gedreht und auf Abstand zueinander gebracht werden, die Abschnitte sich bezüglich der Kamera 26 in derselben Position befinden, wie in der Darstellung der Fig. 22. Fig. 24 stellt die Beziehungen zwischen den Abschnitten auf den Platten 30a, 30b und 30c und der Kamera 10 dar, wenn die Kamera 10 sich in einer dritten Stellung, am Punkt D, befindet. Die Figuren 25a, 25b und 25c stellen dar, wie diese Beziehungen durch Plazierung der Abschnitte auf der Drehbühne 24 und anschließende Drehung der Kamera 26 und der Drehbühne 24 und (lineare) Bewegung der Kamera 26 relativ zur Drehbühne 24 neu geschaffen werden können.

Der Bezugspunkt für die Anordnung jedes Abschnittes in den Figuren 17, 22 und 24 ist der Mittelpunkt der jeweiligen Platte sowie die Nord-Richtung, die auf jeder Platte durch den Pfeil angegeben wird. Wie oben festgestellt, zeigen die Figuren 21a, 21b und 21c drei getrennte Beziehungen zwischen der Kamera 26 und einem Abschnitt, wie in Fig. 17 gezeigt. Die erste, in Fig. 21a bildlich dargestellte, Beziehung simuliert die in Fig. 17 gezeigten Beziehungen zwischen der Kamera 10 und dem Abschnitt 28a. Ähnlich simuliert die in Fig. 21b dargestellte Beziehung die Bedingungen hinsichtlich der Kamera 10 und des Abschnitts 28b in Fig. 17. Schließlich repräsentiert die dritte in Fig. 21c dargestellte Beziehung die Bedingungen bezüglich der Kamera und des Abschnitts 28c in Fig. 17. Aus den Figuren 21a bis c, 23a bis c und 25a bis c ist zu ersehen, daß die Bewegungssimulations-Steuerung über die Anordnung zwischen der Kamera 26 und der Drehbühne 24 alle der in den Figuren 17, 22 und 24 dargestellten Abschnitts-Bedingungen für dreidimensionale Objekte erfüllen kann. (Es ist klar, daß, da sowohl das Objekt als auch der Kamera-Blickwinkel eine Höhen-Dimension haben, die Kamera in Wirklichkeit die Bewegung dreidimensional aufnimmt.)

Es ist leicht zu verstehen, daß, wenn jeder Abschnitt auf der Drehbühne separat aufgenommen wird, die drei resultierenden separaten Bilder der Abschnitte aufeinander überlagert werden können, um ein endgültiges oder Gesamt-Bild zu erzeugen. Wenn drei aufgrund der in den Figuren 21a, 21b und 21c gezeigten Beziehungen erzeugte, getrennte Bilder miteinander überlagert werden, wird das sich ergebende endgültige Bild dem entsprechen, das gemäß Fig. 17 aufgenommen werden kann. Analog wird, wenn die drei in den Figuren 23a, 23b und 23c dargestellten getrennten Beziehungen verwendet werden, um drei getrennte Bilder zu erzeugen, und diese drei getrennten Bilder zur Erzeugung eines Gesamt-Bildes miteinander kombiniert werden, dieses Gesamt-Bild identisch mit dem gemäß Fig. 22 aufgenommenen Bild sein. Letztlich wird, wenn die drei in den Figuren 25a, 25b und 25c gezeigten separaten Beziehungen genutzt werden, um drei separate Bilder zu erzeugen, und diese drei Bilder miteinander überlagert werden, das Gesamt-Bild identisch mit demjenigen sein, das sich aus der in Fig. 24 dargestellten Beziehung gewinnen läßt. Dies demonstriert, daß getrennte Bilder verschiedener Abschnitte überlagert werden können, um das Bild eines größeren Objektes zu synthetisieren.

Da drei separate Bilder der verschiedene Lagen auf der x-y-Ebene repräsentierenden Abschnitte (die gewissermaßen Teile der "Welt" darstellen), zu einem kohäsiven Bild eines Objekts verbunden werden können, können verschiedene Schlußfolgerungen gezogen werden.

zuerst kann das gesamte Abbild der "Welt" durch Überlagerung getrennter Bilder kleiner Teile der "Welt", die sich auf Drehbühnen befinden, aufgebaut werden. Zweitens können die ausgewählten Teile der "Welt" in einem beliebigen Gebiet auf der x-y-Ebene angeordnet sein. Es gibt keine Begrenzung hinsichtlich der Menge derartiger ausgewählter Teile, deren Bilder miteinander überlagert werden können. Drittens ist ein Bild eines Objektes, das auf einer Drehbühne ruht, visuell mit einem überlagerten Bild eines anderen Objektes verbunden (synchronisiert), das sich auf der Fläche einer anderen Drehbühne befindet. Viertens unterliegen die Abmessungen der Flächen der Drehbühnen theoretisch keiner Begrenzung. In den Figuren 17, 22 und 24 erstrecken sich die Ecken der Abschnitte auf den Plattformen bzw. Drehbühnen 30a und 30b nach außerhalb der Umfangslinie der Plattformen. In den Figuren 21a, 21b, 23a, 23b, 25a und 25b sehen wir, daß, obwohl sich die Ecken der Abschnitte nach außerhalb der Umfangslinie der Drehbühne erstrecken, alle Abschnitts-Bedingungen noch erfüllt sind. Die Abmessungen der Flächen der Drehbühnen sind nur vom verfügbaren Platz im Filmstudio abhängig.

Schließlich beruht der Aufbau bekannter BewegungssteuerSysteme auf der Annahme, daß alle Komponenten eines Bildes mit denselben, sich wiederholenden Bewegungen (in Abhängigkeit vom Maßstab der Komponenten nach oben oder unten skaliert) photographiert werden und daß die Kamera eine herkömmliche "physikalische Bewegung" auszuführen hat, um diese Bewegungen auszuführen. Der grundsätzliche Aufbau gemäß der vorliegenden Erfindung beruht auf einer anderen Annahme. Alle Komponenten des (Gesamt-)Bildes können während unterschiedlicher Bewegungen aufgenommen werden. Das Ergebnis ist ein Bild, das dem bei einer herkömmlichen "physikalischen Bewegung" aufgenommenen gleich ist, aber diese herkömmliche Bewegung wird niemals durch die Kamera im Raum ausgeführt.

Das größte Problem bei der Herstellung von Mehr-Komponenten-Bildern ist das Problem des Maßstabes bzw. der Skalierung. Wenn unterschiedliche Komponenten eines Gesamt-Bildes unterschiedliche Maßstäbe (Größen) haben, ist es sehr schwierig, sie exakt aneinander anzupassen. Dieses Problem wird durch zwei wesentliche Einflüsse verursacht.

Der erste ist, daß die physikalische Bewegung der Kamera in Abhängigkeit von den Maßstäben der Komponenten nach oben oder unten skaliert werden muß. Das Herauf- oder Herab-Skalieren einer nicht linearen physikalischen Bewegung schafft für die Motoren und den Aufbau des Bewegungssteuer-Systems unterschiedliche physikalische Bedingungen (wobei auch unterschiedliche Werte der kinetischen Energie von Bedeutung sind). Dies führt zu unterschiedlichen Ausprägungen von Bildzittern ("jitter") für die einzelnen Komponenten. Der zweite Faktor ist das Fehlen eines eindeutigen Bezugspunktes für die Anordnung der aufgenommenen Komponenten im Raum, d.h. dafür, wo ein Objekt in Bezug auf die Kamera anzuordnen ist. Die vorliegende Erfindung löst diese Probleme. Während einer herkömmlichen physikalischen Bewegung tritt das Zittern des Bildes auf, wenn die Kamera ihre xyz-Position im Raum auf nicht lineare Weise ändert, da die Entstehung von Bildzittern ("jitter") bei Kameraaufnahmen weitgehend mit durch Zentrifugalkräfte bewirkt wird. Wenn eine physikalische Bewegung rein linear ist, tritt kein Bildzittern auf, oder es ist so geringfügig, daß es im Bild nicht nachweisbar ist. Da die Bewegungssimulations-Steuerung eine nicht lineare Bewegung in eine lineare Bewegung transformiert, ist unter der Annahme, daß die bei der Bewegungssimulations-Steuerung verwendeten Führungen nahezu oder vollständig gerade sind, das "jitter"-Problem gelöst.

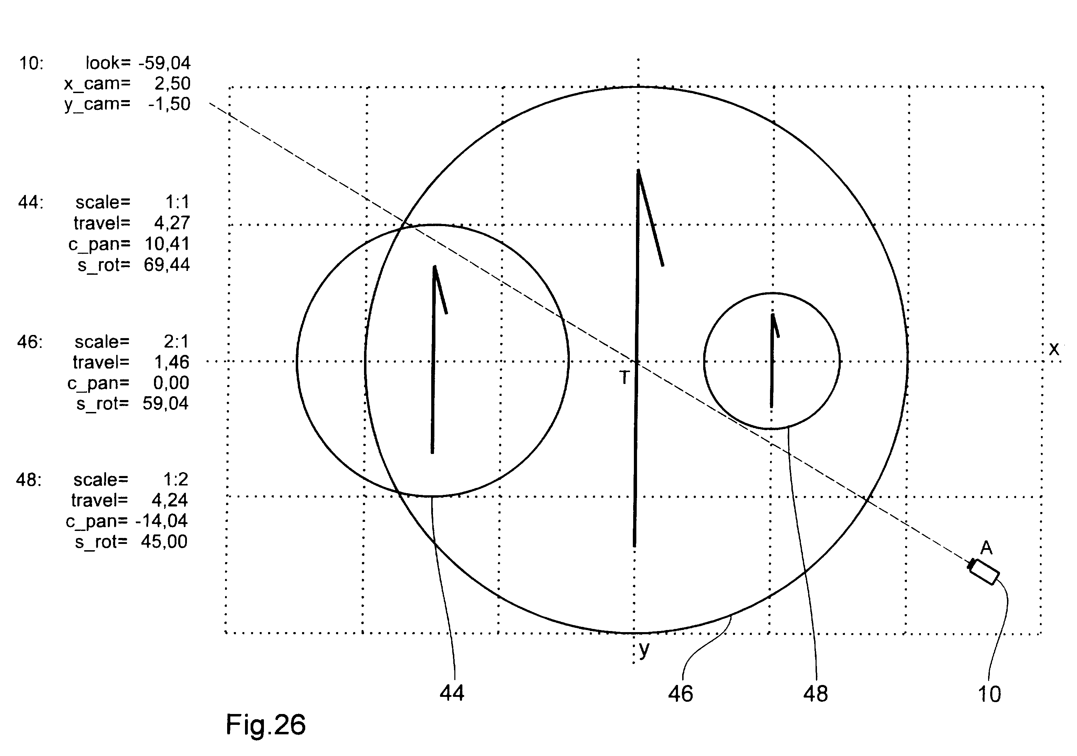

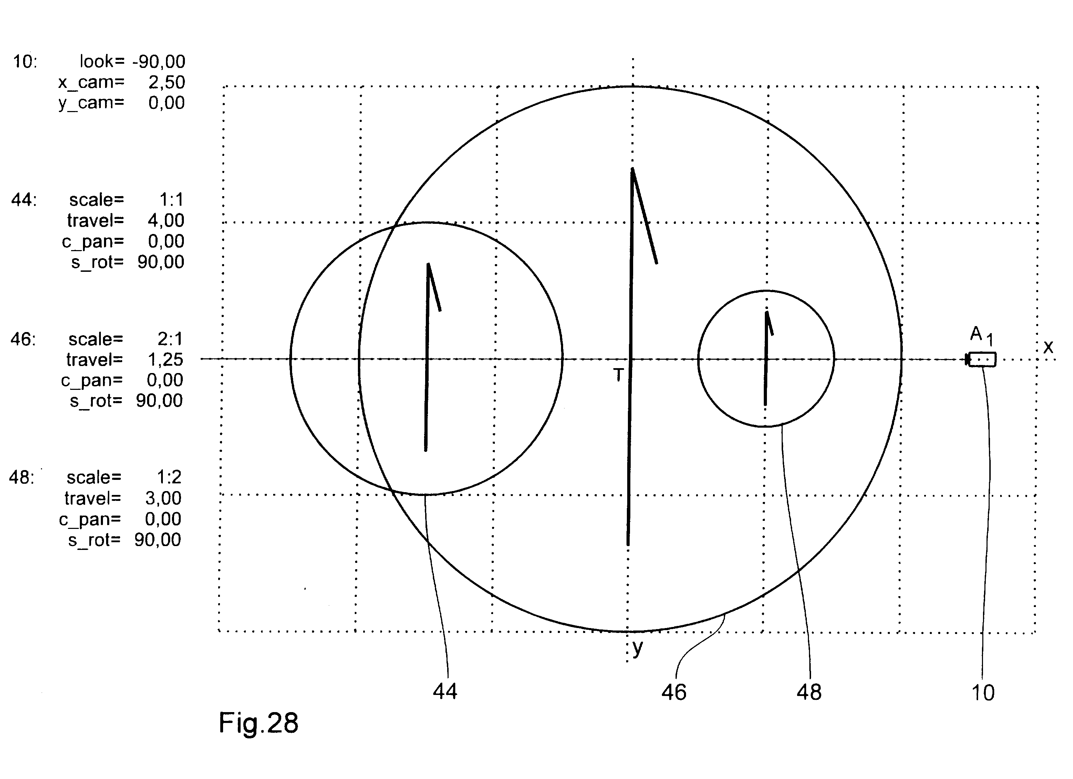

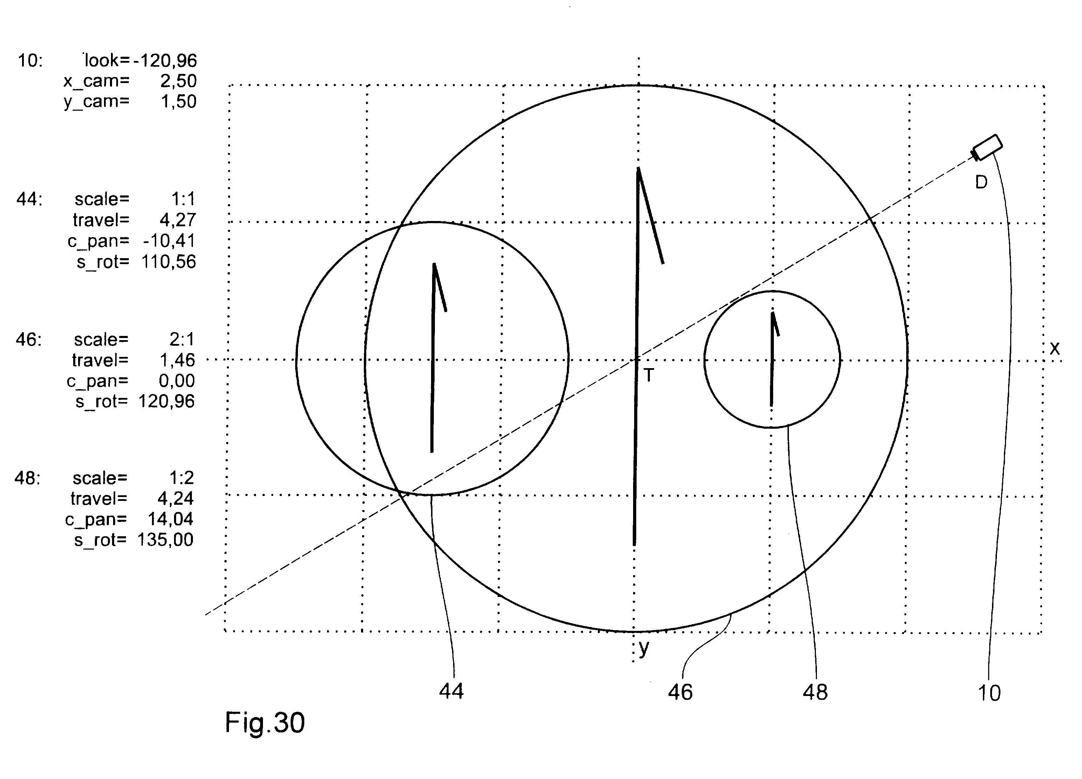

Die vollständige Lösung der mit der Skalierung zusammenhängenden Probleme kann bei Betrachtung der Figuren 26, 28 und 30 verstanden werden. Diese Figuren stellen drei Phasen einer geradlinigen Bewegung der Kamera 10 dar. Die Kamera fährt vom Punkt A (mit den Koordinaten x_cam = 2,5, y_cam = -1,5 in Fig. 26) zum Punkt A1 (mit den Koordinaten x_cam = 2,5, y_cam = 0 in Fig. 28) und weiter zum Punkt D (mit den Koordinaten x_cam = 2,5, y_cam = 1,5 in Fig. 30) und beobachtet den zielpunkt T, der im Mittelpunkt des kartesischen Systems angeordnet ist. In diesen Figuren gibt es drei Platten 44, 46 und 48 mit unterschiedlichen Größen, die für drei unterschiedliche Maßstäbe stehen. Jede dieser Platten hat einen Pfeil, der in Nord-Richtung zeigt, die wiederum als Bezugsrichtung verwendet wird.

Die Bezugsgröße für den Maßstab ist der Radius der Platte. In den diskutierten Beispielen hat - wenn der Radius der Drehbühne 24 bei der Ausführung der Erfindung eine graphische Einheit ist - der Radius der Platte im Maßstab (scale) 1:1 einen Wert von einer graphischen Einheit (Radius = 1,0), im Maßstab (scale) 2:1 hat er den Wert von zwei graphischen Einheiten (Radius = 2,0) und im Maßstab (scale) 1:2 hat er den Wert von 0,5 graphischen Einheiten (Radius = 0,5). Die unterschiedlichen Maßstäbe der Platten hängen mit der Kamerafahrt gemäß der folgenden Beziehung zusammen: skalierte Fahrt = Fahrt x Radius. Mit anderen Worten wird, wie aus Fig. 26 zu ersehen ist, die tatsächliche oder skalierte Kamerafahrt, die in Fig. 26 gezeigt ist, in eine Kamerafahrt, die gemäß einer Ausführungsform der Erfindung ausgeführt wird, durch Division der skalierten Fahrt durch den Radius transformiert. Unter Anwendung dieser Beziehung auf die in den Figuren 26, 28 und 30 dargestellten Bedingungen können für jede Phase der Bewegung der Kamera relativ zu einer der drei Drehbühnen "Skalierungsbedingungen" aufgestellt werden.

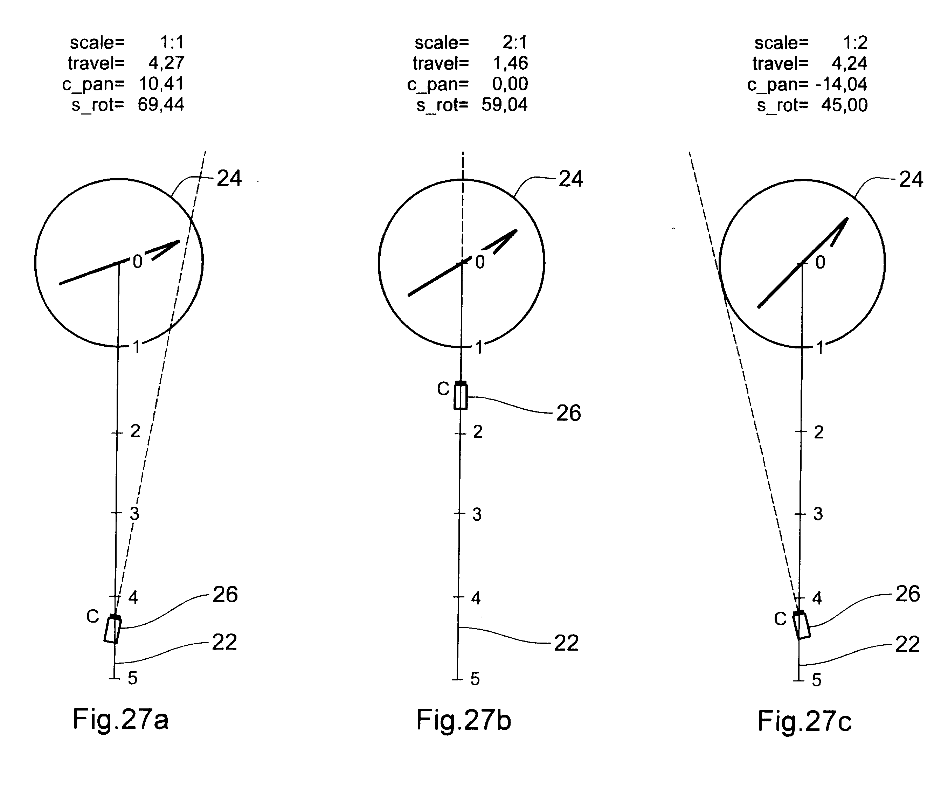

Die Figuren 27a bis 27c zeigen beispielsweise drei Beziehungen zwischen der Kamera 26 und der Drehbühne 24 bei der Ausführung der Erfindung. Die Beziehung gemäß Fig. 27a wird dasselbe Bild liefern wie die durch die Beziehung zwischen der Kamera 10 und der Platte 44 in Fig. 26 geschaffenen Skalierungsbedingungen. Das heißt, die Relativbewegung zwischen der Kamera 26 und der Drehbühne 24 in Fig. 27a wird denselben Maßstab wie die skalierte Bewegung zwischen der Kamera 10 und der Platte 44 in Fig. 26 liefern.

Analog wird die in Fig. 27b dargestellte Beziehung dasselbe Bild ergeben wie die Skalierungsbedingungen zwischen der Kamera 10 und der Platte 46 gemäß Fig. 26. Ähnlich wird die in Fig. 27c dargestellte Beziehung dasselbe Bild wie die Skalierungsbedingungen zwischen der Kamera 10 und der Platte 48 in Fig. 26 ergeben.

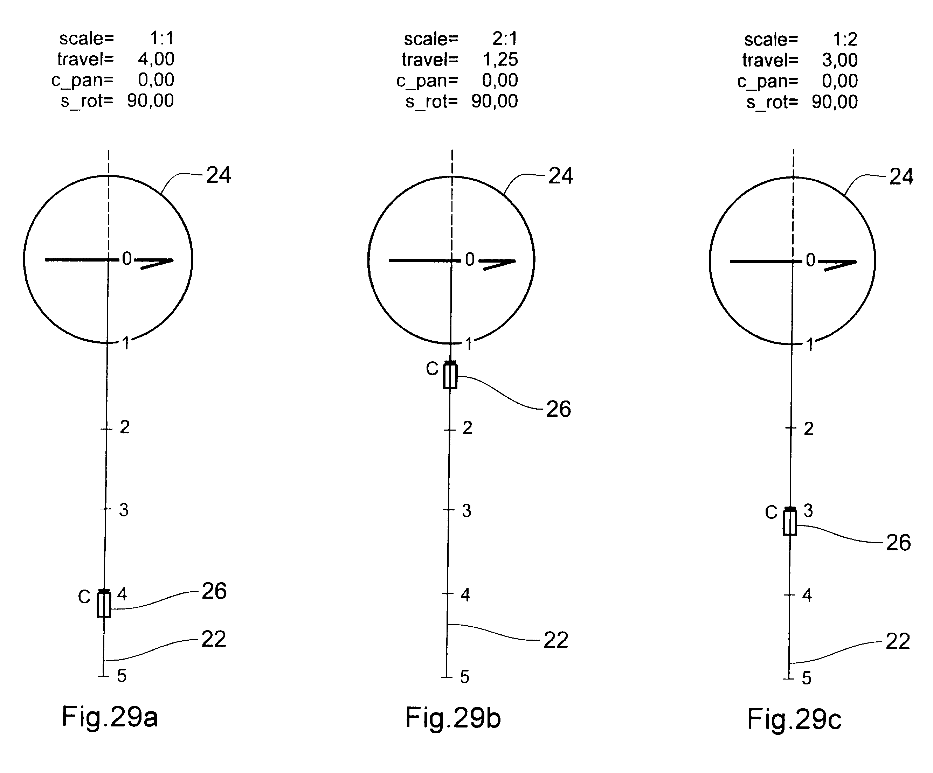

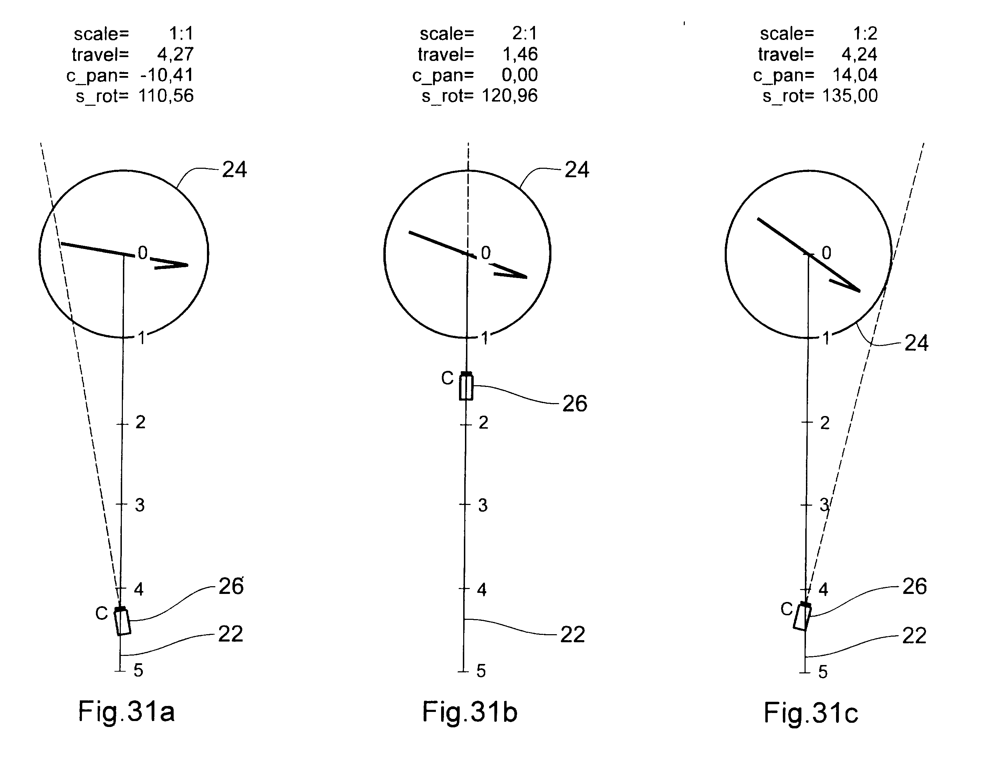

Auf ähnliche Weise entsprechen die in den Figuren 29a bis 29c dargestellten Beziehungen den in Fig. 28 dargestellten Skalierungsbedingungen, während die in den Fig. 31a bis 31c gezeigten Beziehungen für jede einzelne Platte dieselben Bilder wie die in Fig. 30 dargestellten Skalierungsbedingungen ergeben werden. Aus den Figuren 27a bis 27c, 29a bis 29c und 31a bis 31c ist zu ersehen, daß durch entsprechende Anordnung der Kamera 26 und der Drehbühne 24 die Bewegungssimulations-Steuerung alle in den Figuren 26, 28 und 30 aufgestellten Skalierungsbedingungen erfüllen kann.

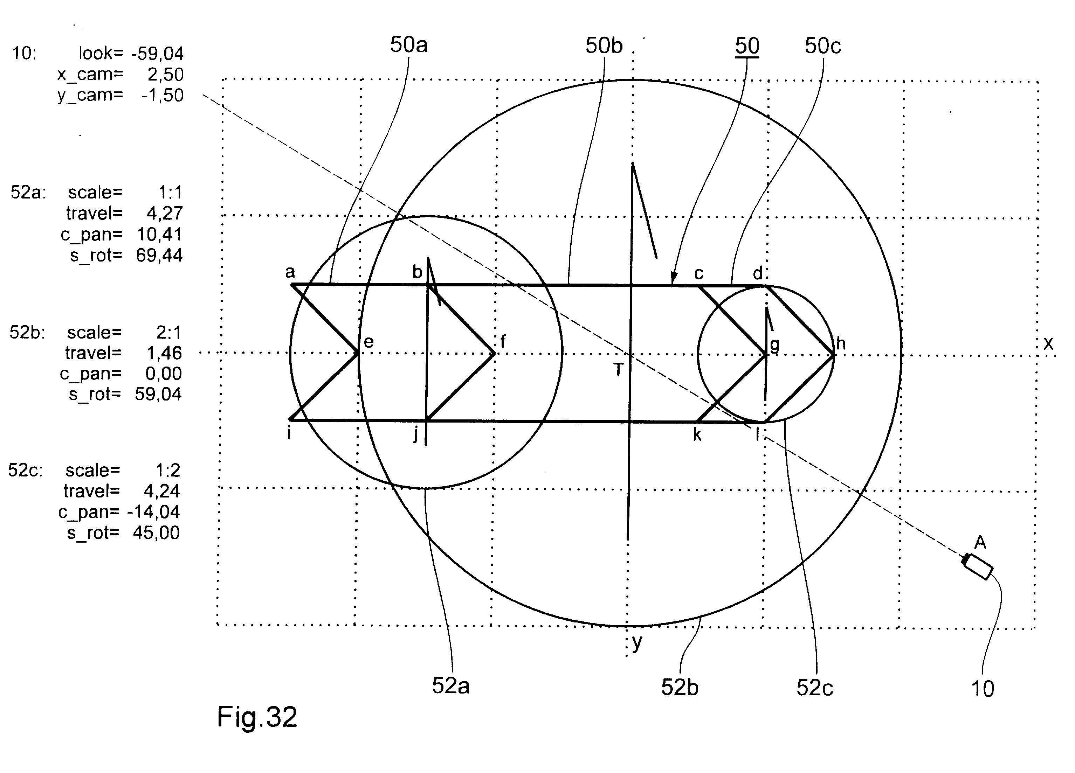

Das Maßstäblichkeits- bzw. Skalierungs-Merkmal der beschriebenen Ausgestaltung der Erfindung kann ebenso auch auf dreidimensionale Objekte angewandt werden. In den Figuren 32, 34 und 36 ist ein langes, pfeilähnliches Objekt 50 gezeigt, das aus drei kleineren Abschnitten 50a, 50b und 50c aufgebaut ist. Jeder Abschnitt ruht auf einer anderen Platte 52a, 52b oder 52c. Es ist wichtig festzustellen, daß die Figuren 32, 34 und 36 das gewünschte visuelle Ergebnis zeigen: ein aus drei Abschnitten, die unterschiedliche Maßstäbe repräsentieren, zusammengesetztes Objekt. Die Dimensionen dieses Abschnittes können durch seine Beziehung zum Radius der jeweiligen Platte festgelegt werden. In den Figuren 32, 34 und 36 sind zusätzliche "Abschnitts-Skalierungsbedingungen" festgelegt, die die Beziehung zwischen der Kamera und jeder Ecke jedes Abschnitts ausdrücken.

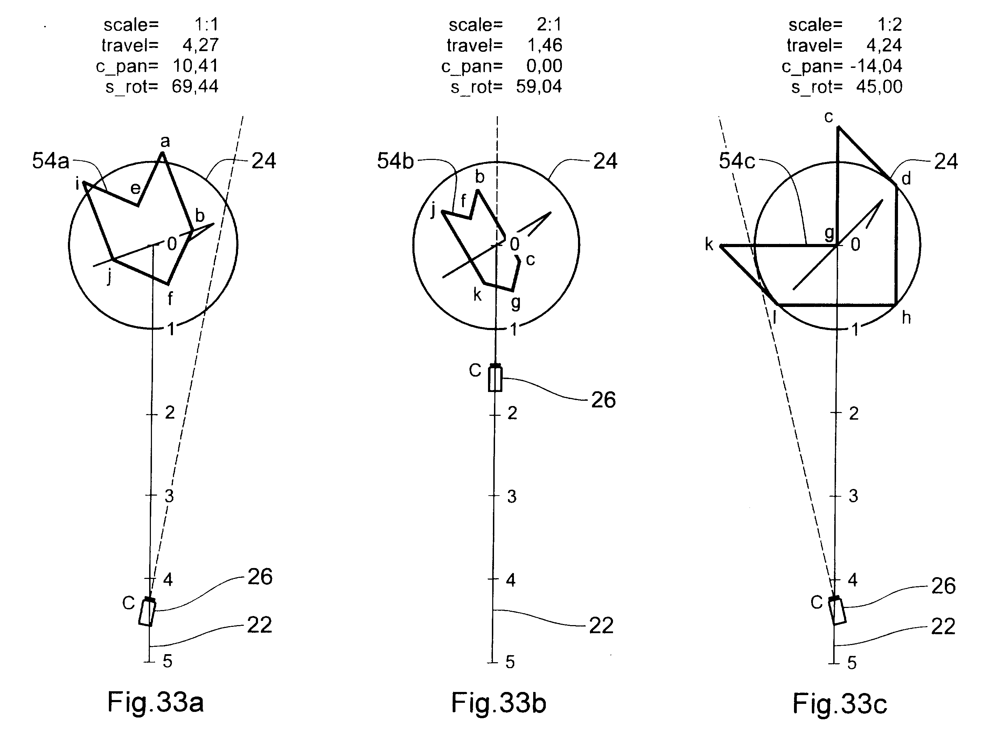

In den Figuren 33a bis 33c, 35a bis 35c und 37a bis 37c sind einzelne, jeweils den Abschnitten 50a, 50b und 50c entsprechende Abschnitte 54a, 54b und 54c dargestellt, die auf der Drehbühne 24 in gleicher Position relativ zur Kamera 26 wie die Abschnitte in den Figuren 32, 34 und 36 angeordnet sind. Die Bezugsbasis für die Anordnung jedes Abschnitts ist der Mittelpunkt der Drehbühne 24 und die Richtung des Pfeils auf der Drehbühne 24. Die Bezugsbasis für die Dimension jedes Abschnitts ist seine Beziehung zum Radius der Drehbühne 24. Die Figuren 33a bis 33c, 35a bis 35c und 37a bis 37c zeigen, daß die Bewegungssimulations-Steuerung über die Anordnung zwischen der Kamera 26 und der Drehbühne 24 die in den Figuren 32, 34 und 36 gezeigten Abschnitts-Skalierungsbedingungen erfüllen kann.

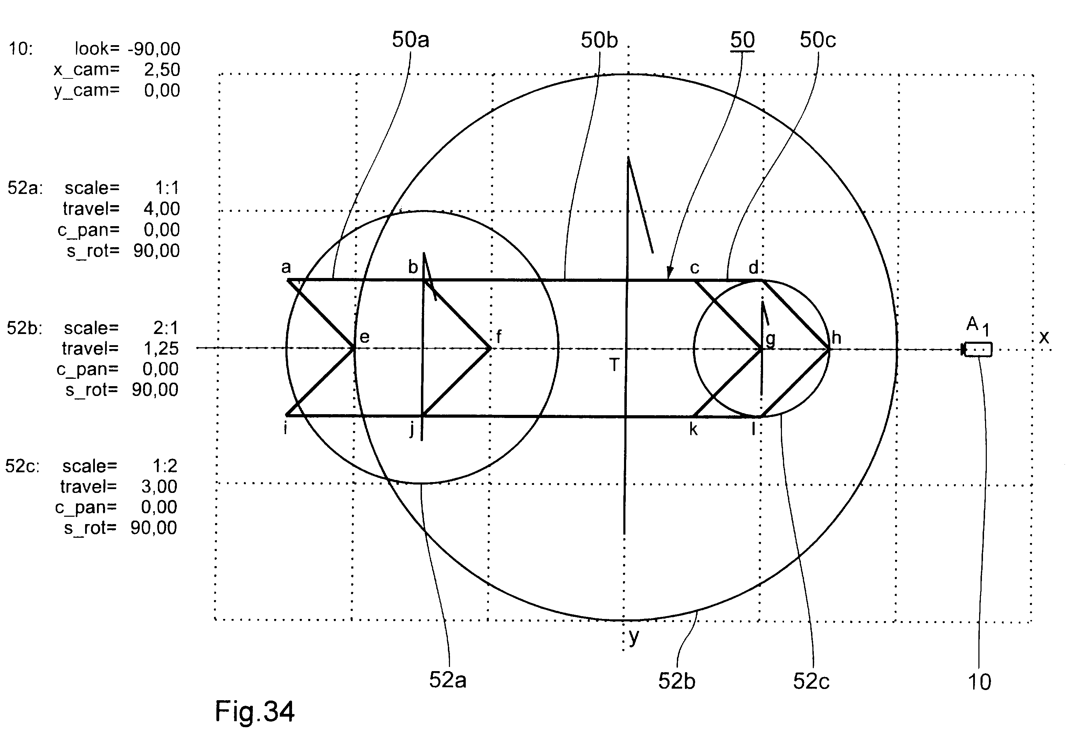

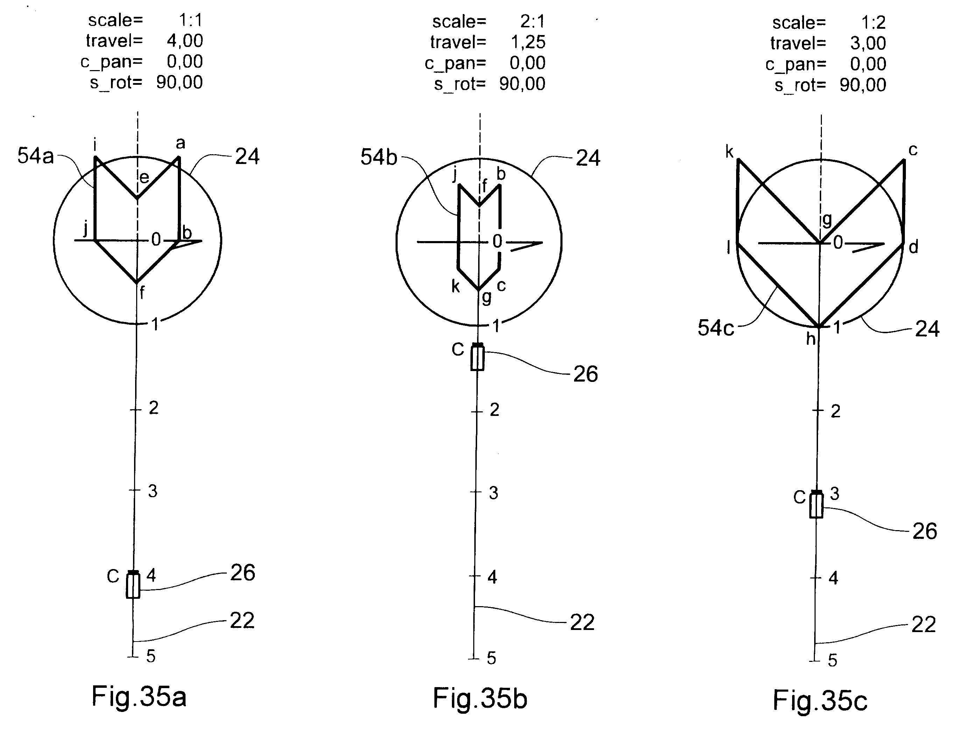

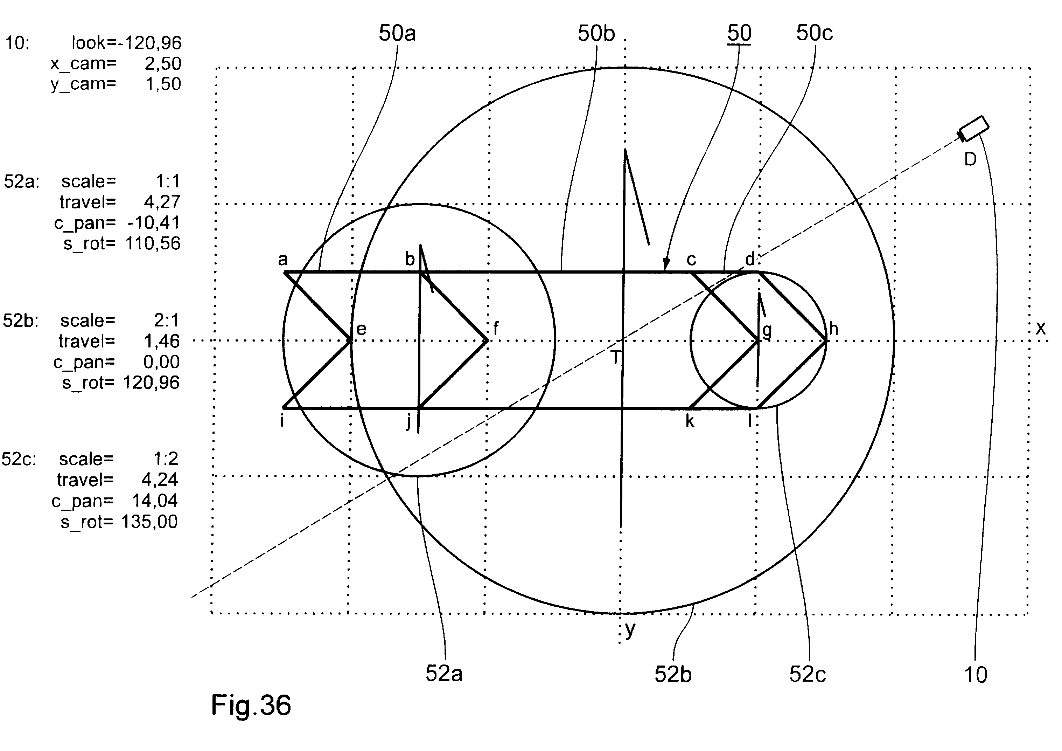

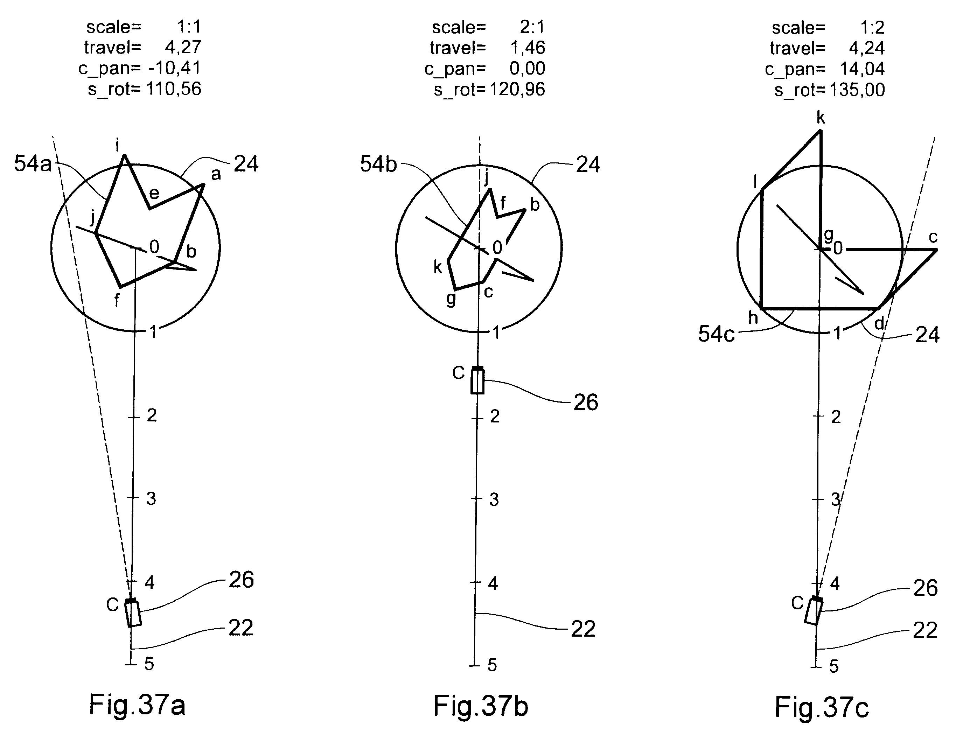

Wenn jeder Abschnitt bzw. jede Sektion auf der Drehbühne gemäß der Darstellung in den Figuren 33a bis 33c separat aufgenommen wird und die drei Bilder der in den Figuren dargestellten Abschnitte einander überlagert werden, wird das End- oder Gesamtbild identisch mit dem Bild sein, das in Fig. 32 erhalten wird. In analoger Weise wird, wenn jeder Abschnitt auf der Drehbühne gemäß den Figuren 35a bis 35c separat aufgenommen wird und die drei Bilder einander überlagert werden, das endgültige Bild gleich dem gemäß Fig. 34 erhaltenen sein, während, wenn jeder der in den Figuren 37a bis 37c dargestellten Abschnitte separat photographiert wird und die drei Bilder der Abschnitte einander überlagert werden, das Endbild gleich dem gemäß Fig. 36 erhaltenen Bild sein. Dies zeigt, daß die überlagerten Bilder der Abschnitte, die verschiedene Maßstäbe repräsentieren, das Bild des langen, pfeilähnlichen Objektes ergeben.

Wenn drei separate Bilder der Abschnitte und verschiedene Maßstäbe und verschiedene Anordnungen in der x-y-Ebene zu einem resultierenden oder kohäsiven Bild eines Objekts verknüpft werden können, können die verschiedenen Schlußfolgerungen gezogen werden:

Zunächst kann das gesamte Bild der "Welt" durch Überlagerung getrennter Bilder der kleinen Teile der "Welt" gebildet werden, die anderen Maßstäbe entsprechen. Es gibt keine Begrenzung hinsichtlich der Werte der Maßstäbe, die angewandt werden können. Weiterhin kann jeder Teil der "Welt" aus Komponenten zusammengesetzt werden, die unterschiedliche Maßstäbe repräsentieren. Die Aufteilung der "Welt" in kleine Teile erlaubt eine Zusammensetzung von Bildern ad infinitum. Während der Kamerafahrt treten neue Teile in das Bild ein und alte verlassen dieses, d.h. die Teile überlappen einander ständig. Es gibt keine Begrenzungen hinsichtlich der Abmessungen der abgebildeten bzw. photographierten "Welt".

Es könnte jedoch ein Problem bei der herkömmlichen Photographie entstehen, wenn sich bewegende Objekte über eine Strecke bewegt werden müssen, die die Fläche der Drehbühne überschreitet, z.B. im Falle eines vor einer fahrenden Kamera gehenden Schauspielers. Die vorliegende Erfindung löst in einer Ausgestaltung auch dieses Problem, wie nachfolgend erklärt wird.

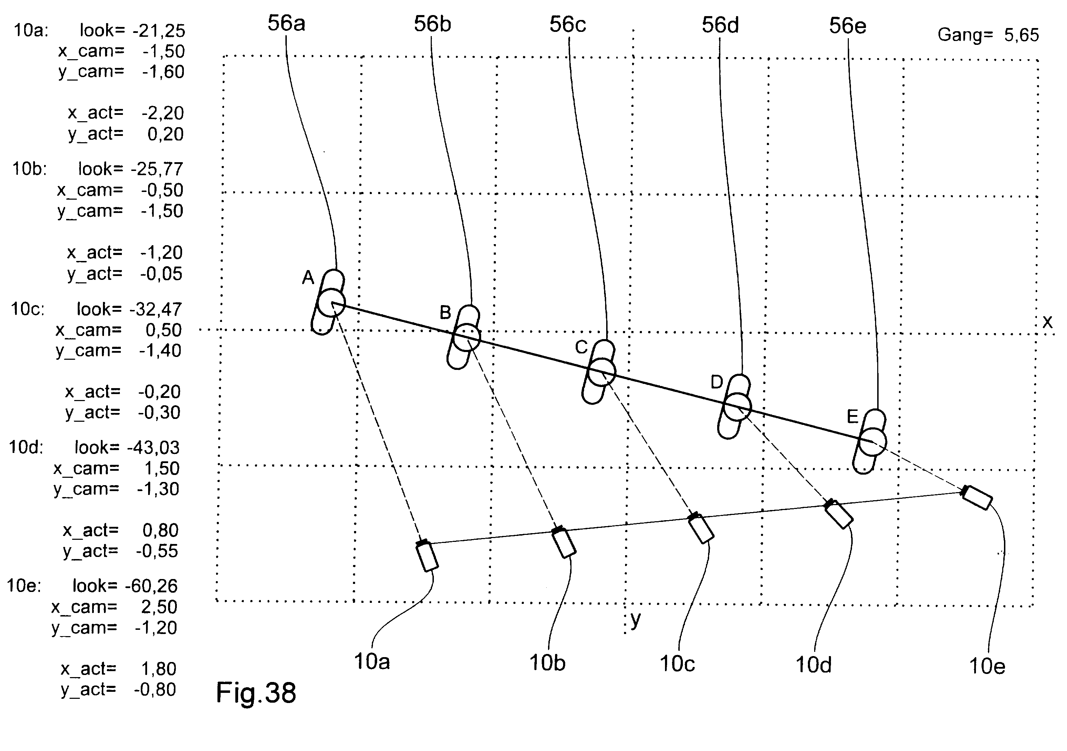

Fig. 38 ist eine schematische Darstellung eines Schauspielers 56, der von einem Punkt A zu einem Punkt E geht, während eine Kamera 10 seine Bewegung verfolgt. Der Klarheit halber wird jede Position der Kamera 10 relativ zum Schauspieler 56 durch den Punkt bezeichnet, bei dem der Schauspieler sich für das betreffende Bild befindet. Wenn beispielsweise der Schauspieler am Punkt A ist, werden die Position des Schauspielers und die zugehörige Kamerastellung als 56a bzw. 10a bezeichnet. Der Abstand zwischen dem Punkt A und dem Punkt E wird als "Gang" bezeichnet und hat in Figur 38 einen Betrag von 5,65 graphischen Einheiten.

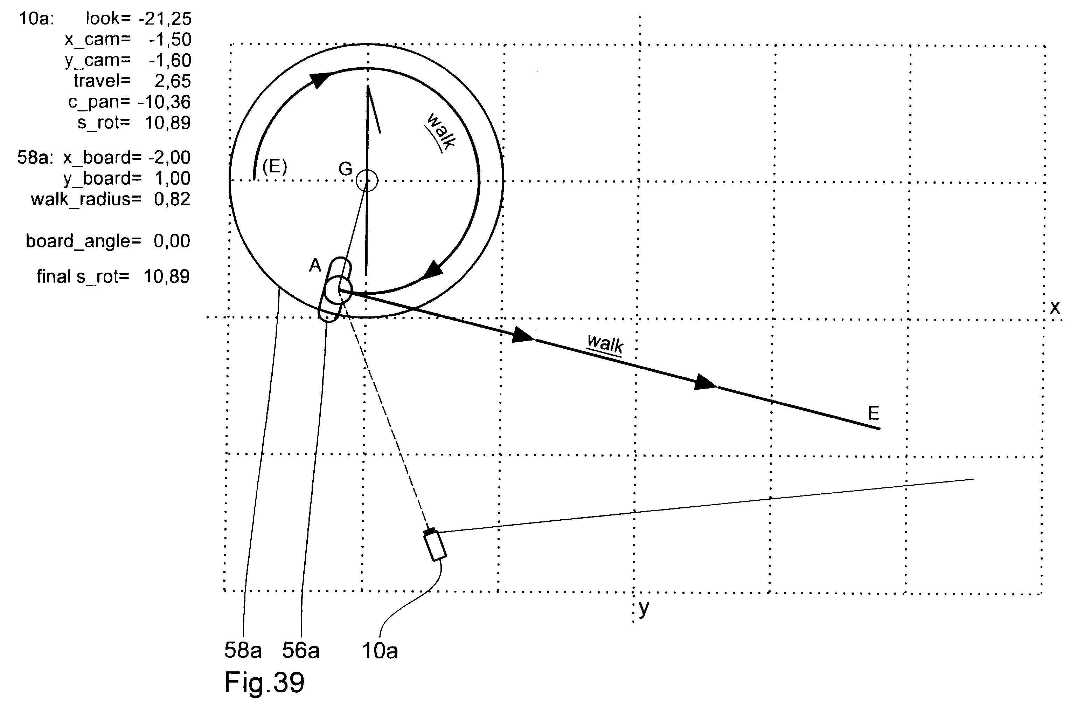

Fig. 39 stellt eine Platte 58a dar, deren Mittelpunkt im Punkt G liegt. Der Schauspieler 56 steht in einem Punkt A auf der Platte 58a (mit einem Winkel GAE = 90°). Die Strecke des Ganges AE kann in die gekrümmte Linie AE auf der Platte 58a transformiert werden. Die Länge der gekrümmten Linie AE ist gleich der Strecke des Ganges. Die gekrümmte Linie AE ist ein Teil des Umfangs eines Kreises, dessen Radius gleich dem Abstand zwischen dem Schauspieler (A) und dem Mittelpunkt der Platte (Punkt G) ist. Dieser Radius hat (im Beispiel) einen Wert von 0,82 graphischen Einheiten (walk radius = 0,82).

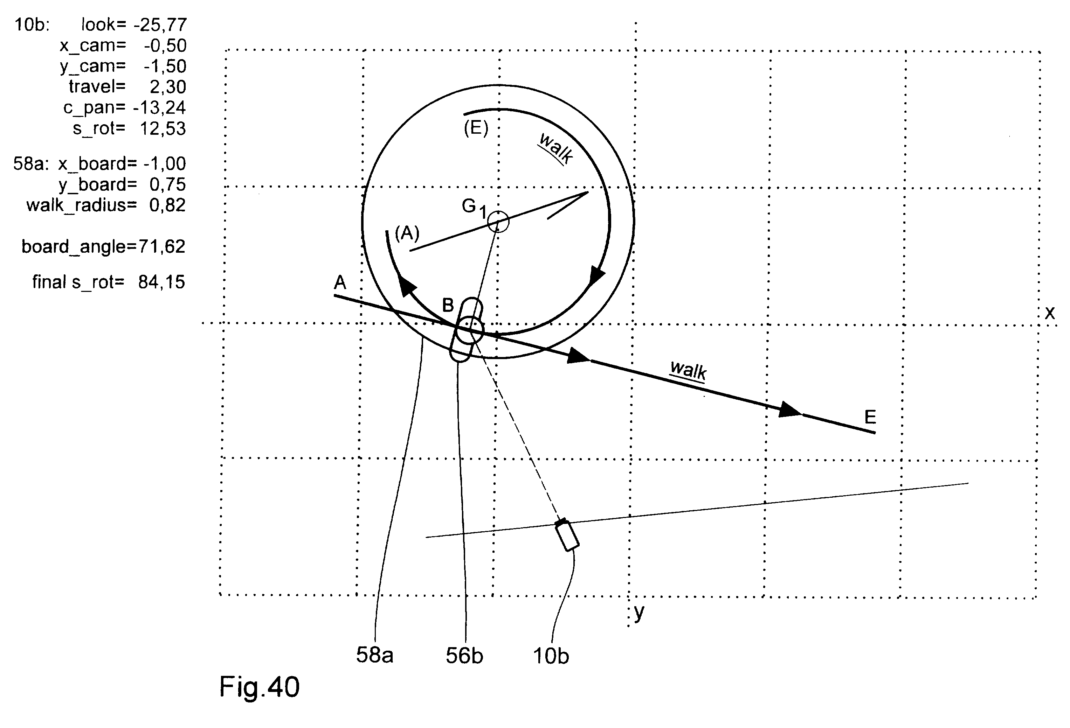

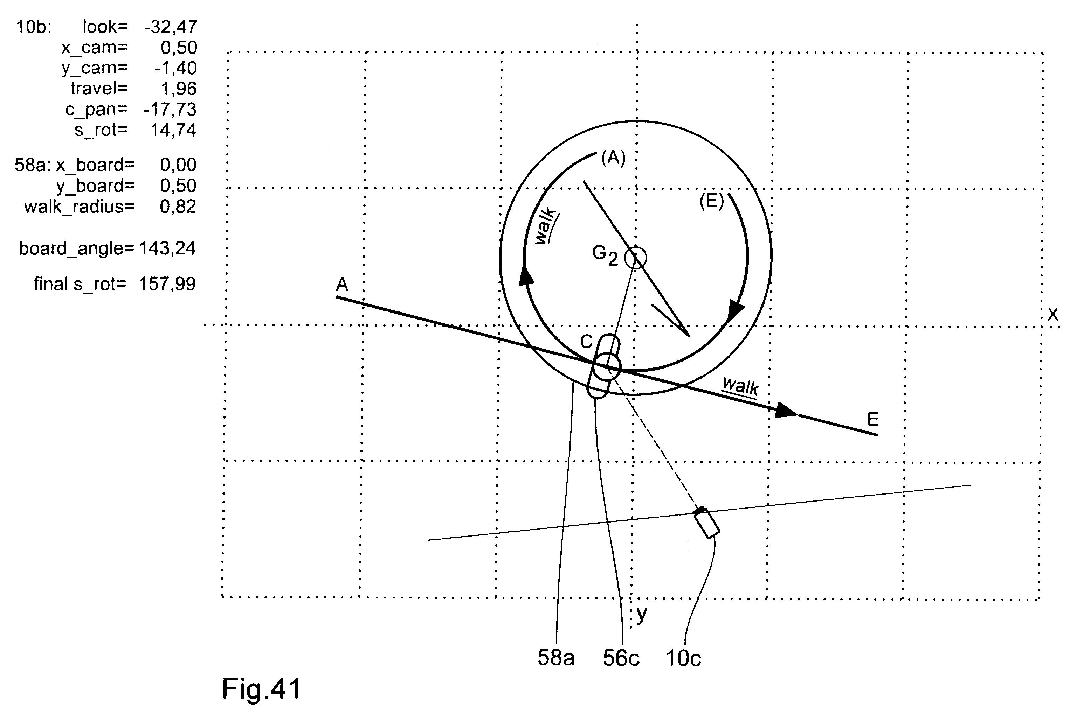

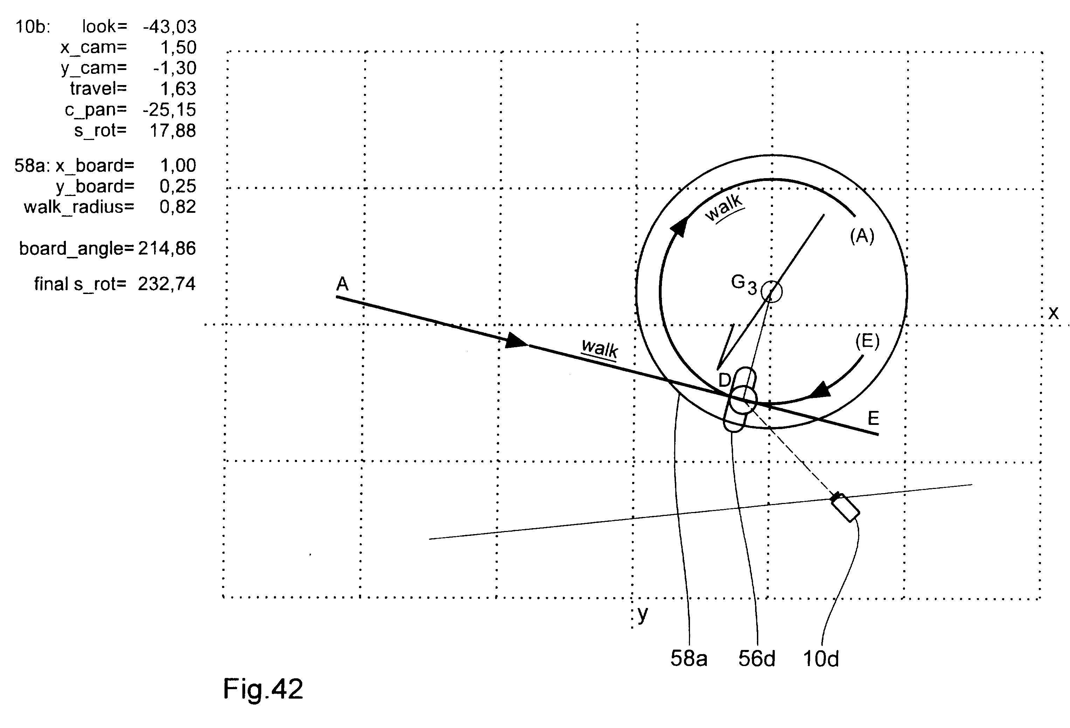

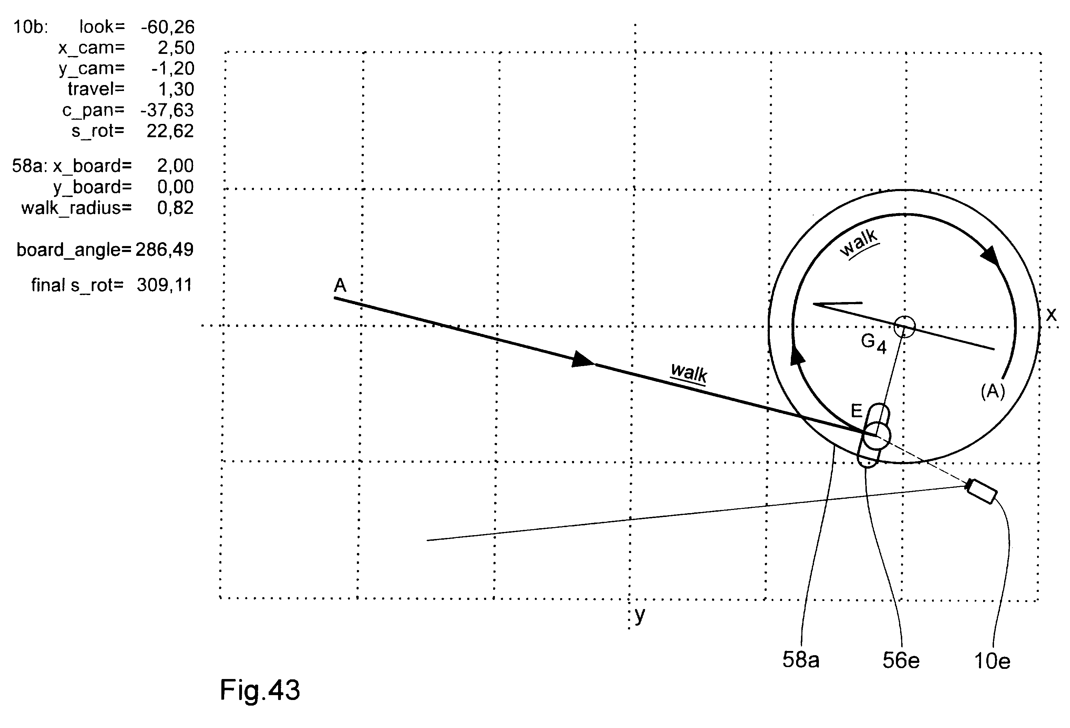

Man stelle sich vor, daß die Platte sich auf der x-y-Ebene (vom Punkt A zum Punkt E) synchron mit der fahrenden Kamera 10 bewegen und im Uhrzeigersinn drehen kann. Der Schauspieler geht auf der Platte 58a entgegen dem Uhrzeigersinn, als ob er auf einer Tretmühle ginge. Die Figuren 39 bis 43 zeigen fünf Phasen der "sich bewegenden" Platte für die Punkte A bis E, und für jede Phase sind "Gang-Bedingungen" angegeben. Während der Ausführung des Gehens ist die Drehung der Platte ("final s_rot") die Summe zweier Drehungen: (1) der Drehung mit den ursprünglichen Bedingungen (dem Winkel zwischen dem zentrum der Platte und der Kameraposition, d.h. s_rot) und (2) der Drehung der Platte, die die Strecke des Ganges übersetzt (board_angle).

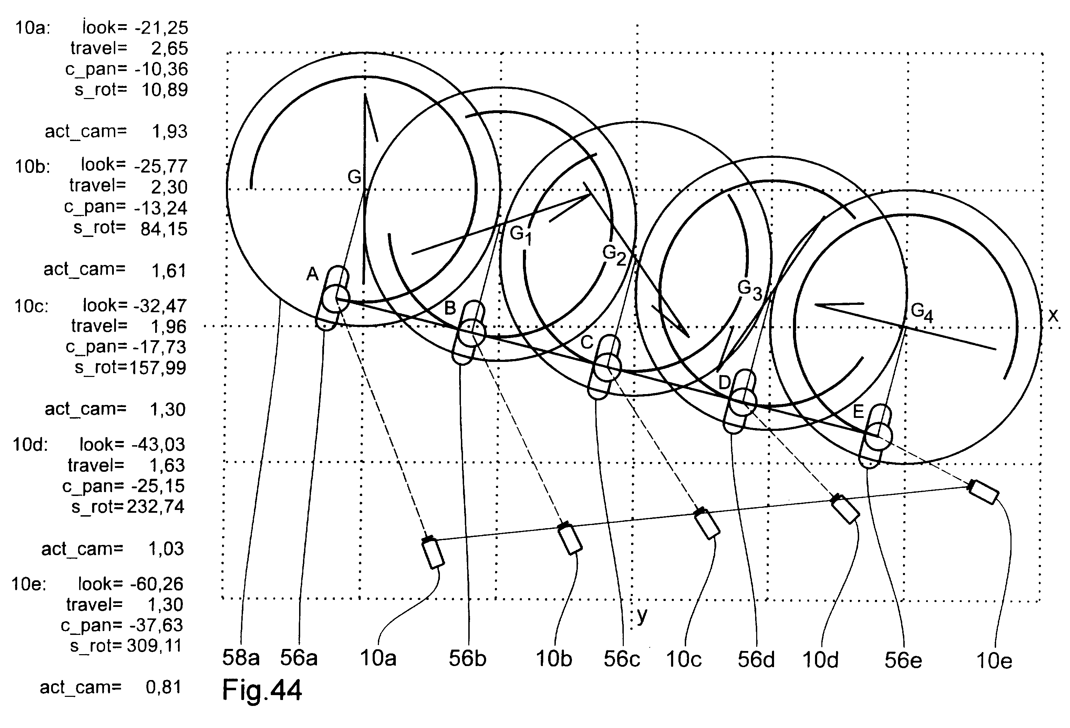

Fig. 44 ist eine zusammenfassende Darstellung des gesaamten Bewegungsvorganges.

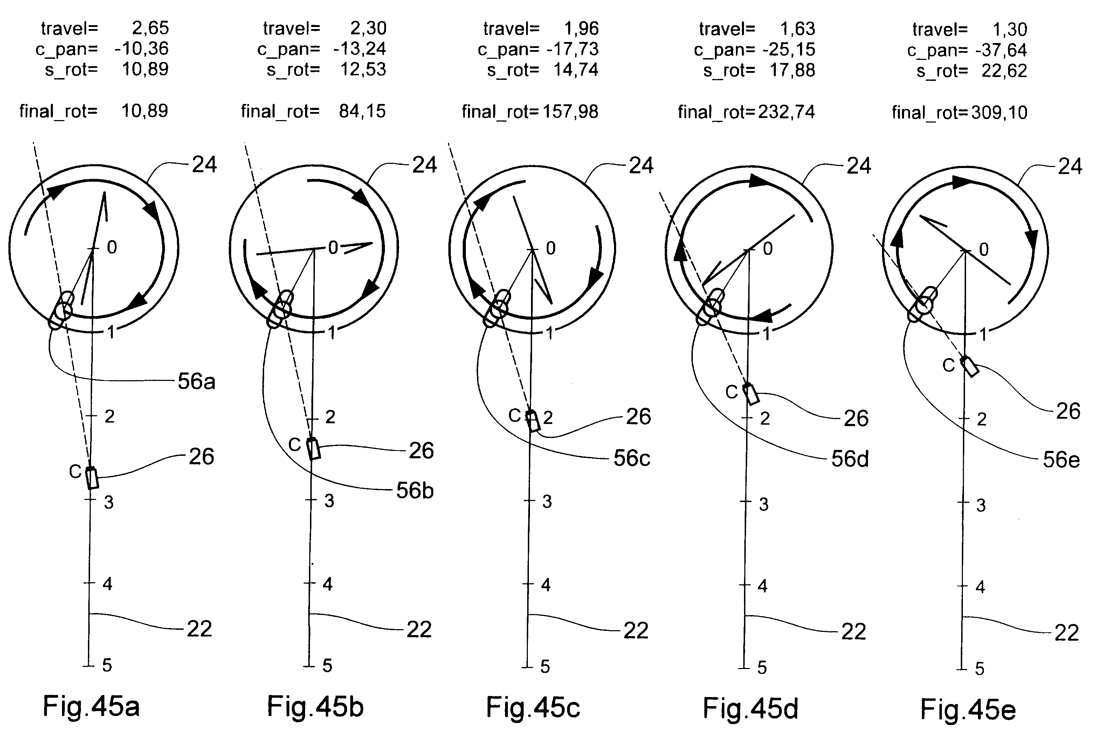

Die Figuren 45a bis 45e zeigen die Anordnung gemäß einer Ausführungsform der Erfindung zwischen der Kamera 26, der Drehbühne 24 und dem gehenden Schauspieler an den Positionen 56a bis 56e, die alle der in den Figuren 39 bis 43 jeweils aufgestellten Gang-Bedingungen erfüllt. Es ist die Schlußfolgerung zu ziehen, daß jede Strecke und jede Richtung des Gehens bzw. Ganges unter Verwendung der Bewegungssimulations-Steuerung realisiert werden kann. In der vorangehenden Beschreibung wurde die z-Achse (Höhe) nicht erwähnt. Die Höhenposition der Kamera trägt nicht zur Funktion des oben erwähnten "Fahrzeuges" bei, sie kann daher frei gewählt werden. Die einzige Begrenzung betrifft das Niveau, auf das die Kamera 26 über die Fläche der Drehbühne angehoben werden kann. Dieses Niveau ist durch die Maße des Filmstudios und den praktischen Aufbau, speziell die Größe, der Vorrichtung zur Bewegungssimulations-Steuerung, begrenzt.

Diese Begrenzung der Höhe gilt nur für aufgenommene Komponenten, deren Abbilder durch die Gravitationskraft beeinflußt werden (Lebewesen, Feuer, Wasser etc.). All diejenigen Komponenten, deren Abbilder nicht durch die Gravitationskraft verändert werden (unbelebte Objekte, Architekturmodelle, Steine, Möbel etc.) können in anderen Positionen (seitlich geneigt oder auf den Kopf gestellt) aufgenommen werden. Nach seitlicher Drehung der Kamera wird die z-Achse mit der x-Achse vertauscht. Die Komponenten, die eine seitliche Lage haben, scheinen in aufrechter Lage zu sein. Das "Fahrzeug" kann sich jetzt in der z-y-Ebene bewegen. Es kann sich über eine unbegrenzte Länge längs einer vertikalen Wand nach oben und unten bewegen. Wird die Kamera auf den Kopf gestellt, erscheinen Objekte in kopfstehener Lage als normal. Das "Fahrzeug" kann sich unter einer unbegrenzten Decke bewegen. Die Höhe muß jedoch, wie die Kamerafahrt auch, in Abhängigkeit vom Maßstab einer aufgenommenen Komponente herauf- oder herabskaliert werden.

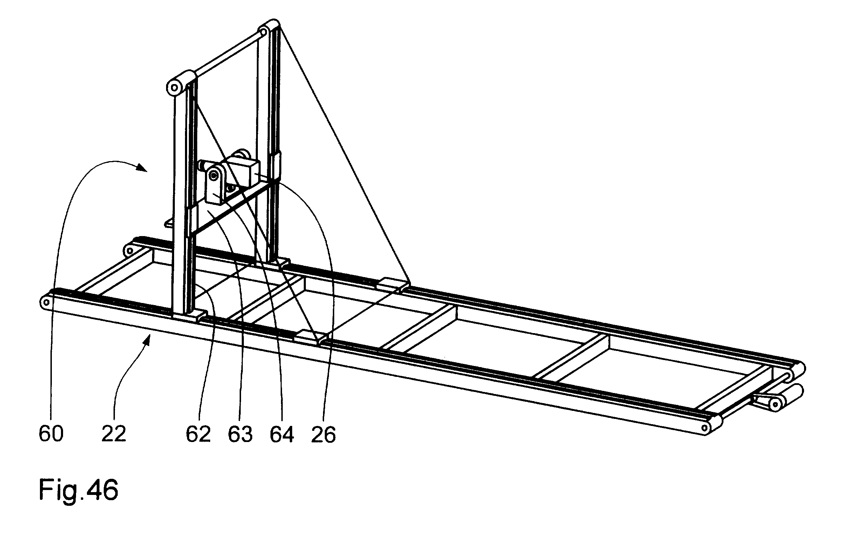

Die Figuren 46 bis 49 sind Zeichnungen des Aufbaus einer Vorrichtung zur Bewegungssimulations-Steuerung.

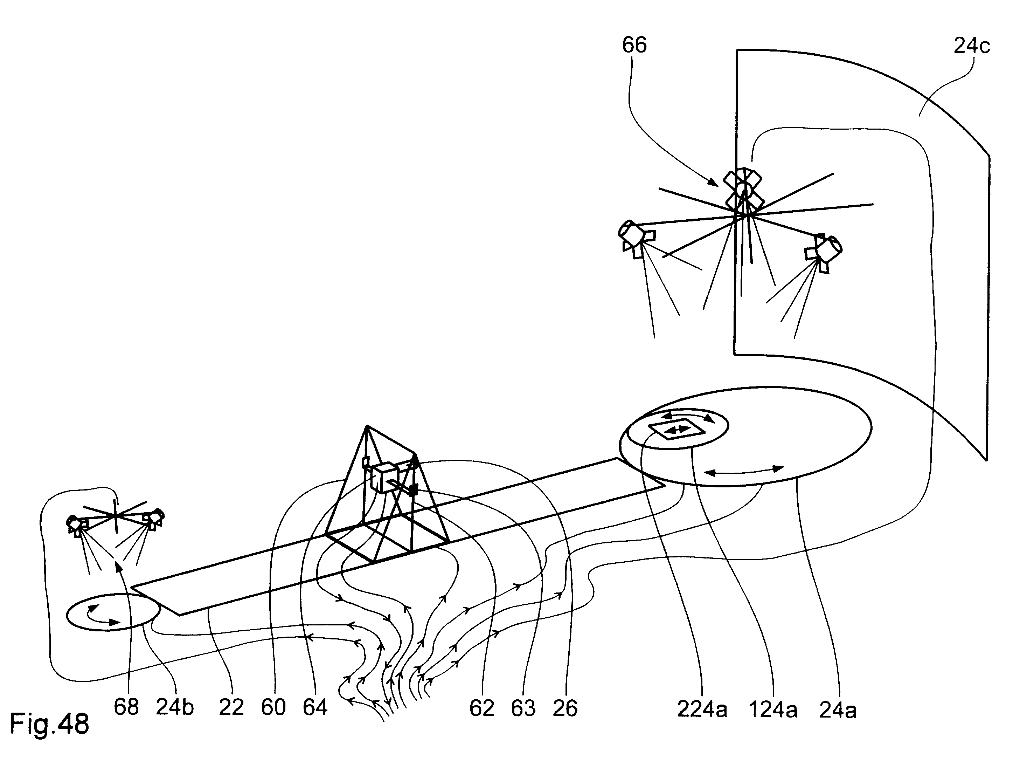

Die Gesamtanordnung umfaßt, wie in Fig. 48 dargestellt, eine große Drehbühne 24a zur Aufnahme von Menschen und Objekten im Maßstab 1:1, einen kleinen Drehtisch 24b zur Aufnahme von Modellen und Miniaturen in kleinen Maßstäben und eine horizontale lineare Führung 22, die auf den Boden aufgesetzt oder von der Decke abgehängt sein kann. Vorzugsweise ist ein Ende der Führung 22 dem Mittelpunkt der Drehbühne 24a zugewandt, und das andere Ende ist dem Mittelpunkt des kleinen Drehtisches 24b zugewandt. Ein turmähnlicher Aufbau 60 fährt diese horizonale Führung 22 entlang. Der Turm 60 ist genauer in Fig. 46 dargestellt. Der Turm 60 weist eine vertikale lineare Führung 62 auf. Längs der vertikalen Führung fährt ein Wagen 63, der einen Kamerakopf bzw. -halter 64 trägt.

Im Kamerakopf 64 ist die Kamera 26 montiert. Der Kamerakopf 64 hat verschiedene Motoren, die den Kameraschwenk, die Kameraneigung, die Kameradrehung (in seitlicher und vertikaler Richtung), den Zoom, die Scharfstellung und die Knotenpunkteinstellung ausführen können. Die Kamera ist in der Knotenpunkt-Stellung (dem Schnittpunkt aller Winkel innerhalb des Objektivs) angeordnet. Die Knotenpunkteinstellung muß ständig entsprechend der Zoom-Einstellung justiert werden, da der Knotenpunkt von der Brennweite des Objektivs abhängt. Die x-y-z-Lage des Knotenpunktes stellt die x-y-z-Lage der Kamera dar.

Die Vor- und Rückwärtsbewegung des Turms 60 längs der horizontalen linearen Führung 22 führt die "Bedingung" der Kamerafahrt aus. Bezugspunkt der Kamerafahrt (travel = 0) ist der Mittelpunkt der Drehbühne 24a.

Die Auf- und Ab-Bewegung des Wagens mit dem Kamerakopf 64 auf der vertikalen linearen Führung 63 führt die Höheneinstellung der Kamera 26 aus. Der Bezugspunkt für die Höhe (level = 0) ist die Stellung, bei der der Knotenpunkt auf der Ebene der Fläche der Drehbühne 24a liegt.

Die seitliche Bewegung der Kamera 26 (das Schwenken innerhalb des Kamerakopfes) führt die "Bedingung" des Kameraschwenks aus. Der Bezugspunkt für den Schwenk (c_pan = 0) ist der Mittelpunkt der Drehbühne 24a.

Die verbleibenden Kamerafunktionen (Zoom, Scharfeinstellung, Neigung und Drehung) tragen nicht zu den Funktionen des "Fahrzeugs" bei und können frei gewählt werden. Der Turm kann um 180° gedreht werden, um dem Mittelpunkt des kleinen Drehtisches 24b zugewandt zu sein. Der Mittelpunkt und die Ebene der Fläche des Drehtisches 24b werden dann die Bezugspunkte für die Kamerafahrt, den Kameraschwenk und die Höheneinstellung und ergeben jeweils die Werte 0. Der Drehtisch 24b kann zur Aufnahme von Miniaturen und Modellen verwendet werden. Der Abstand der großen Bühne 24a und des kleinen Drehtisches 24b voneinander ist durch praktische Erwägungen bestimmt. Wenn mit Miniaturen und Modellen gearbeitet wird, werden andere Beleuchtungsbedingungen benötigt als bei der Arbeit mit Schauspielern, was mit der durch den kürzeren Abstand zwischen Kamera und photographierten Komponenten bedingten kleineren Tiefenschärfe zusammenhängt.

Die Drehung der Drehbühne 24a oder des kleinen Drehtisches 24b erfüllt die "Bedingung" der Szenenaufbaudrehung (s_ rot).

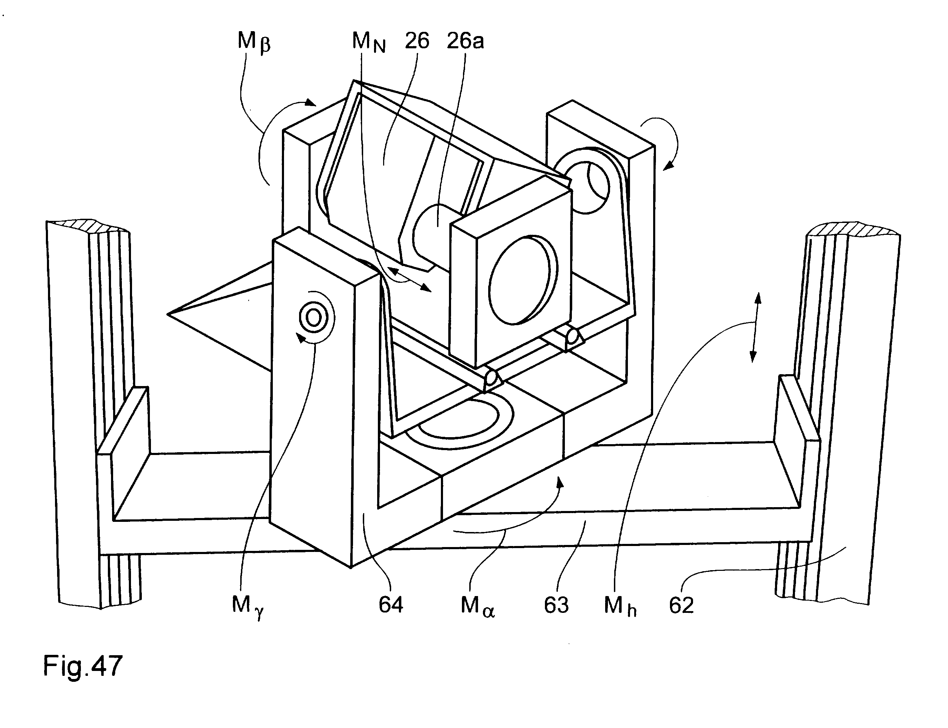

Die Kamerahalterung 64 mit der Kamera 26 ist in Fig. 47 detaillierter gezeigt; hier sind insbesondere die einzelnen Bewegungsmöglichkeiten M_{α} (Drehung um eine vertikale Achse durch die Kamera = horizontaler Kameraschwenk), M_{β} (Drehung um eine erste horizontale Achse, die gleich der optischen Achse der Kamera ist), (Drehung um eine zweite horizontale Achse, senkrecht zur optischen Achse der Kamera = vertikaler Kameraschwenk), Mh (Höhenverschiebung der Kamera) und M_{N} (Knotenpunktverschiebung "nodal point adjust") zu erkennen.

Ein weiterer Teil des Bewegungssteuerungs-Systems sind drehbare Beleuchtungskonstruktionen 66 und 68. Diese Konstruktionen hängen über der Drehbühne und dem Drehtisch und werden synchron mit der Bühne 24a bzw. dem Drehtisch 24b gedreht. Die Drehung der Leuchten erzeugt dieselben Änderungen bei der Beleuchtung der photographierten Komponenten, wie sie in der "Welt" während einer herkömmlichen Bewegung auftritt.

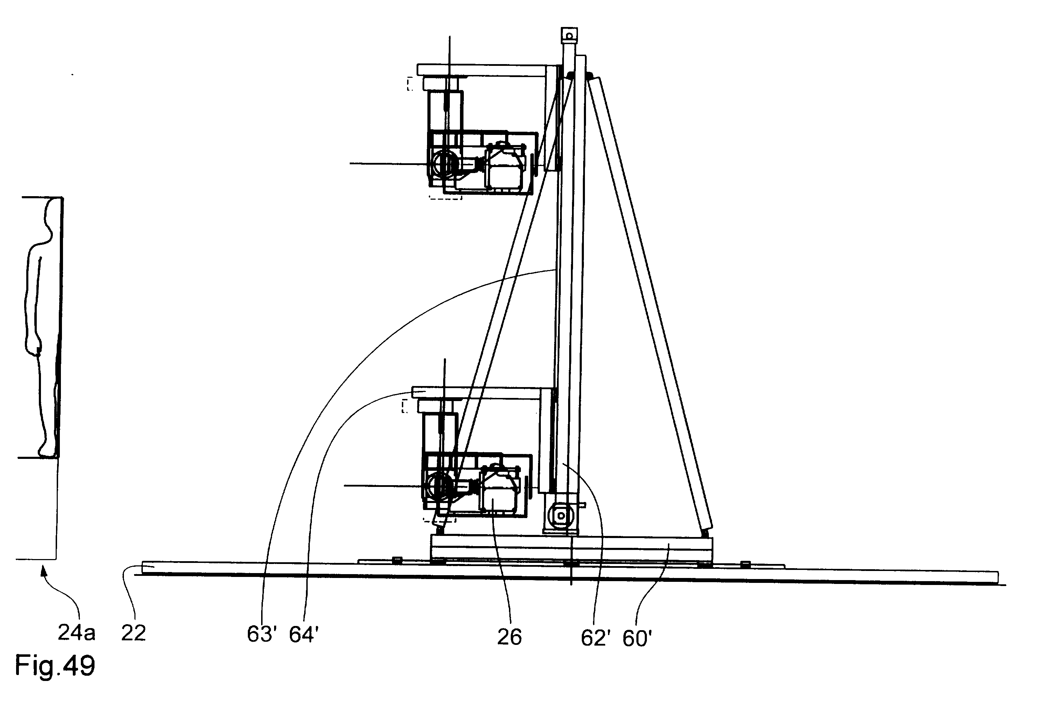

Fig. 49 zeigt eine gegenüber der in Fig. 46 in perspektivischer Darstellung gezeigten Vorrichtung modifizierte Ausbildung der Bewegungsvorrichtung für die Kamera 26. Die Bezeichnung der Teile entspricht der in Fig. 46 bis 48 gewählten, wobei den Bezugsziffern für abweichend gestaltete Teile ein "'" hinzugefügt wurde.

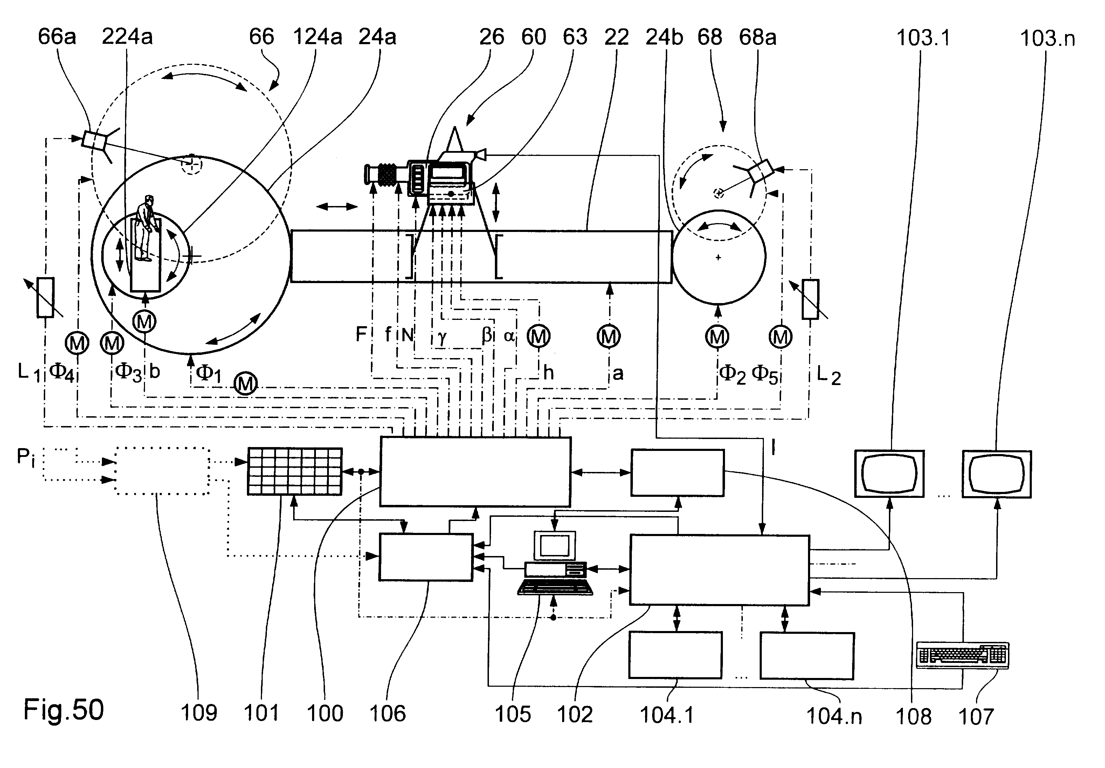

Fig. 50 zeigt in Art eines Blockschaltbildes die wesentlichen Funktionseinheiten einer Ausführungsform des Bewegungssteuerungs-Systems näher, wobei hier auch deren signalmäßige Verknüpfung und detailliert die einzelnen Steuersignale für das System gezeigt sind.

Haupt-Funktionsgruppen des dargestellten Systems sind eine Steuerdaten-Berechnungseinheit 100 mit einem dieser ein- und ausgangsseitig zugeordneten Steuerdatenspeicher 101 und eine Bildverarbeitungseinheit 102, der ausgangsseitig mehrere Monitore 103.1 bis 103.n sowie ein- und ausgangsseitig mehrere Videospeicher bzw. -recorder 104.1 bis 104.n (von denen in der Figur jeweils zwei Geräte gezeigt sind) zugeordnet sind.

Die Steuerdaten-Berechnungseinheit 100 und der Steuerdatenspeicher 101 sind ausgangsseitig auch mit einem Eingang der Bildverarbeitungseinheit 102 sowie einem Eingang einer Computergrafikeinheit 105 verbunden, die ihrerseits ein- und ausgangsseitig auch mit der Bildverarbeitungseinheit 102 verbunden ist. Eingänge der Steuerdaten-Berechnungseinheit 100 und des Steuerdatenspeichers 101 sind über einen Skalierungsrechner 106 mit einer Eingabeeinheit 107, einem Ausgang der Bildverarbeitungseinheit 102 sowie einem Ausgang der Computergrafikeinheit 105 verbunden. Die Steuerdaten-Berechnungseinheit 100 und die Computergrafikeinheit 105 sind über eine Schnittstelle 108 unmittelbar bidirektional miteinander verbunden.

Die Steuerdaten-Berechnungseinheit 100 ist - was in der Figur mit strichpunktierten Linien verdeutlicht ist, die beidseitig einen Richtungspfeil tragen - mit (nicht einzeln bezeichneten) Aktoren der Komponenten der Bewegungs- und Beleuchtungsanlage verbunden, durch die die einzelnen Steuervorgänge realisiert werden können. Sie funktioniert hierfür zugleich als Schnittstelle. Mit den Aktoren sind vorzugsweise auch (in der Figur nicht gezeigte) Sensoren verbunden, über die umgekehrt die Stellungen der Aktoren abgefragt werden können. Die Registrierung der aktuellen Einstellungen der Vorrichtung kann aber auch derart erfolgen, daß sämtliche Einstellungen (auch die der Kamerahalterung 64 und der Kamera 26 bei Handsteuerung derselben) über die zentrale Bedieneinheit 107 eingegeben und die aktuellen Werte der Steuersignale in zeitlicher Abhängigkeit unmittelbar aus der Berechnungseinheit 100 in den Steuerdatenspeicher 101 übernommen werden.

Im einzelnen werden im Beispiel die folgenden Steuersignale verwendet, d.h. über Handsteuerung eingegeben oder errechnet, und den zugehörigen Aktoren und wahlweise Speicherbereichen des Speichers 101 zugeführt:

Wie links in der Figur zu sehen, wird ein Steuersignal L₁ für die Leuchtstärke der Lampe 66a der Beleuchtungseinrichtung 66 der Drehbühne 24a einem der Lampe 66a vorgeschalteten Leuchtstärkesteller (etwa als Thyristorsteuerung realisiert) zugeführt und durch diesen die Leuchtstärke der Lampe eingestellt. Über einen Fühler am Leuchtstärkesteller oder eine separaten Fotosensor kann die aktuelle Leuchtstärke abgefragt werden; es kann aber - wie oben erwähnt - auch direkt das Steuersignal L₁ gespeichert werden. Einem der Beleuchtungseinrichtung 66 zugeordneten Motor (etwa einem Schrittmotor) zur Drehung der Lampe 66a wird ein Steuersignal Φ₄ zugeführt, mit dem die Drehstellung der Lampe 66a über der Drehbühne 24a vorgegeben wird. Analog werden - wie rechts in der Figur zu sehen - die Leuchtstärke und die Drehstellung der Lampe 68a der zum Drehtisch 24b gehörigen Beleuchtungseinrichtung 68 über ein Leuchtstärke-Steuersignal L₂ und ein Drehwinkel-Steuersignal Φ₅ gesteuert.

Die Drehung der Drehbühne 24a wird über ein Drehwinkel-Steuersignal Φ₁ gesteuert, das einem der Drehbühne zugeordneten Antriebsmotor zugeführt wird. Eine Drehung der auf bzw. in der Drehbühne 24a angeordneten Drehplatte 124a wird über das Drehwinkel-Steuersignal Φ₃ durch einen dieser zugeordneten separaten Motor gesteuert, und eine Bewegung des Laufbandes 224a auf der Drehplatte 124a wird über ein Positions-Steuersignal b gesteuert und durch einen separaten Laufband-Motor ausgeführt. Auch für die Drehbühne 24a, die Drehplatte 124a und das Laufband 224a kann zur Erfassung der zeitabhängigen Stellung jeweils ein entsprechender Sensor vorgesehen sein - für die bisher genannten Signale ist aber die unmittelbare Übernahme in den Speicher 101 aus der Berechnungseinheit 100 vorzuziehen, da eine Steuerung der Komponenten 24a, 24b, 66, 68, 124a und 224a von Hand allenfalls in Ausnahmefällen in Betracht kommen wird. Analog zur Drehbühne 24a wird der Drehtisch 24b über ein Drhewinkel-Steuersignal Φ₂ gesteuert, das einem dem Drehtisch 24b zugeordneten separaten Motor zugeführt wird.

Die vorgenannten Steuersignale und -funktionen betreffen die Bewegung - insbesondere Drehung - von Aufnahmeobjekten relativ zur Kamera 26 sowie die Objektbeleuchtung, die eines der beiden wesentlichen Elemente des Verfahrens zur Aufnahme einer Bildsequenz bilden. Das andere wesentliche Element, nämlich die auf die Bewegung des Objektes abgestimmte (zweidimensionale) Bewegung, Schwenks und Einstellungen der Kamera, werden folgendermaßen realisiert:

Ein Positions-Steuersignal a zur Vorgabe des Abstandes zwischen Kamera und Aufnahmeobjekt wird einem der Schienen-Führung 22 zugeordneten Motor (einem herkömmlichen Elektromotor oder einem Linearmotor) zugeführt, und ein weiteres Positions-Steuersignal h zur Vorgabe der Höhe der Kameraposition über der Ebene der Drehbühne 24a bzw. des Drehtiches 24b wird einem am Kameraturm 60 vorgesehenen Motor zugeführt. Auch die Signale a und h werden - auch im Falle manueller Eingabe - zweckmäßigerweise aus der Berechnungseinheit 100 in den Speicher 101 übernommen.

Die Steuerung der Kamerahalterung 64 und der Kamera 26 schließlich erfolgt über die Drehwinkel-Steuersignale a, β und γ (entsprecnd den in Fig. 47 mit M_{α}, Mβ und M_{γ} bezeichneten Drehungen der Kamerahalterung um drei Achsen), das Positions-Steuersignal N (für die in Fig. 47 mit M_{N} bezeichnete Längs-Justierung der Lage der Kamera in der Kamerahalterung), die entsprechenden - in den Figuren nicht dargestellten - Motoren in der Kamerahalterung zugeführt werden, sowie das Zoom-(Brennweiteneineinstell-)Signal f und das Scharfeinstellsignal F, die der Kamera 26 selbst zugeführt werden. Bei zentraler Steuerung der Kamerahalterung und der Kamera können auch diese Signale direkt aus der Steuerung 100 in den Steuersignalspeicher 101 übernommen werden.

Die Vorrichtung ist jedoch variabler einsetzbar, wenn für die zuletzt genannten Steuer- bzw. Einstellvorgänge Sensoren zur Erfassung der aktuellen Lage und Einstellung der Kamera vorgesehen sind. Diese - in den Figuren nicht dargestellten - Sensoren, die herkömmliche elektrische oder fotooptische Weg- und Winkelgeber sein können, ermöglichen die Erfassung der Einstellungs-Meßgrößen auch bei einer Steuerung der Kamera von Hand. Eine solche Handsteuerung wird in vielen Einsatzfällen zumindest bei der Erzeugung einer oder einiger Bildsequenzen erfolgen - etwa auch zur Gewinnung eines initialen Steuersignalsatzes, der dann für weitere Aufnahmen oder (wie weiter unten ausgeführt) die Bildverarbeitung genutzt wird.

Über Sensoren in der Vorrichtung erfaßte Positions-, Winkel- und sonstige Einstellungs-Signale - die im linken Teil der Figur (ohne genaue Zuordnung zu einer Quelle) als Eingangssignale Pᵢ dargestellt sind - werden Eingängen einer (mehrkanaligen) Verarbeitungseinheit 109 zugeführt, von wo sie in der Speicher 101 übernommen oder dem Skalierungsrechner 106 zugeführt werden können. Der optionale Charakter dieser Ausgestaltung ist durch die punktierte Linienführung symbolisiert.

Die Steuerdaten-Berechnungseinheit 100 kann speziell als schnelles Mikrorechnersystem mit dem üblichen Aufbau ausgeführt sein, wobei die installierte Software die Durchführung der an anderer Stelle der Beschreibung erläuterten Umrechnungen der Bewegungskoordinaten der Relativbewegungen von Kamera und Aufnahmeobjekt bei einer bestimmten darzustellenden Kamerafahrt realisiert und eine parallele (quasi-mehrkanalige) Verarbeitung eines eingegebenen Aufnahmedatensatzes zur Gewinnung der individuellen Steuerdaten für die jeweils bei der Herstellung einer bestimmten Bildsequenz zu steuernden Komponenten der Vorrichtung ermöglicht. Dies bedeutet, daß beispielsweise auf die Eingabe der zeitabhängigen Bahnkoordinaten einer (fiktiven) Relativbewegung von Kamera und Aufnahmeobjekt und eines (ebenfalls) fiktiven Kameraschwenks hin die Berechnung eines kompletten Steuerdatensatzes zur realen Ausführung der Bewegungen von Kamera, Drehbühne und Beleuchtungseinrichtung erfolgt und diese vollautomatisch mit diesem Datensatz gesteuert werden.

Es ist - wie oben bereits angedeutet - auch möglich, mit der Vorrichtung Aufnahmen mit manueller Steuerung auszuführen, dabei die Bewegungen bzw. Einstellungen der Komponenten zu registrieren und die entsprechenden Daten zu speichern und später unter Nutzung dieser Daten die Aufnahme automatisch zu reproduzieren oder wahlweise die Primärdaten einer Skalierung und/oder sonstigen Bearbeitung zu unterziehen und aufgrund der erhaltenen Sekundärdaten eine modifizierte Bewegung zu realisieren.

So kann etwa eine manuell gesteuerte Aufnahme eines Objektes auf der Drehbühne 24a die Daten zur automatischen Erzeugung einer hierzu exakt synchronisierten Aufnahme eines zweiten - etwa wesentlich kleineren - Objektes auf dem Drehtisch 24b und zusätzlich für eine Überlagerung bzw. Mischung beider Bildsequenzen mit unterschiedlichem Maßstab liefern. Hierzu werden die Steuerdaten im Skalierungsrechner 106 zur Steuerung der zweiten Aufnahmeprozedur zunächst einer Umrechnung entsprechend dem realen Größenverhältnis der Objekte unterzogen, und später kann zur Steuerung des Mischvorganges in der Bildverarbeitungseinheit 102 noch ein zweiter Skalierungs-Datensatz bereitgestellt werden. Natürlich können auf diese Weise auch mehrere Bildsequenzen - vollständig automatisiert oder teilweise manuell gesteuert - hergestellt, in den Videospeichern 104.1 bis 104.n gespeichert und unter Kontrolle über die Monitore 103.1 bis 103.n verarbeitet werden.

Auf ähnliche Weise kann über die Schnittstelle 108 auch ein Zusammenwirken der Aufnahmevorrichtung mit der Computergrafikeinheit 105 verwirklicht werden, wodurch eine Vorab-Synchronisierung von Bild- mit Computergrafik-Sequenzen (bzw. umgekehrt) und ein weitgehend perfektes Mischen beider ohne merkbare Asynchronitäten und "jitter"-Erscheinungen möglich ist. Auch hierbei ist jeweils eine Skalierung über den Skalierungsrechner 106 möglich.

Der Steuerdatenspeicher 101 ist als wahlfrei zugreifbarer, mehrkanaliger Schreib-Lese-Speicher aufgebaut. Er weist in der Ausbildung nach Fig. 50 eine direkte Verbindung zur Skalierungseinheit 106 auf, was die Möglichkeit eröffnet, einen gespeicherten Datensatz unabhängig von der Berechnungseinheit auf andere geometrische Verhältnisse umzurechnen und in skalierter Form neu einzuspeichern.

Als Bildverarbeitungseinheit 102 kann eine als solche bekannte moderne Studioanlage eingesetzt werden, die über Schnittstellen zum Anschluß der Berechnunsgeinheit 100, der Computergrafikeinheit 105 und der Skalierungseinheit 106 verfügt. Die Einheit 106 kann auch mehrstufig aus "Matte"- und "Ultimette"-Einheiten aufgebaut sein, wobei dann auch die Monitore und Recorder bzw. Bildspeicher hierarchisch zugeordnet sind.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. So können insbesondere die beschriebenen Funktionseinheiten auch in ein Rechnersystem integriert und/oder bestimmte Funktionseinheiten rein softwaremäßig realisiert sein.

Die Bewegungssimulations-Steuerung kann allgemein mit Hilfe von Computer-Software erfolgen, die - in verallgemeinerter Sicht - im wesentlichen folgende Funktionen hat:
1. Die Gestaltung der "Welt" (der Anordnungen und Maßstäbe der Komponenten),
2. Die Gestaltung der physikalischen Bewegung der Kamera einschließlich der Vorgabe der Geschwindigkeit,
3. (gegebenenfalls) den Empfang von Daten einer Computergraphik-Software hinsichtlich der "Welt" und der "physikalischen Bewegung", die in einer Computergraphik-Umgebung gebildet wurden (aufgrund der Computergraphik-Daten können visuelle Teile der "Welt" mittels der Bewegungssimulations-Steuerung aufgenommen werden),
4. Die Transformation einer herkömmlichen physikalischen Bewegung in die Bewegung des "Fahrzeuges", ausgehend von der Lage eines vorgegebenen Punktes der "Welt" (was die mathematischen Grundlagen der Bedingungen angeht, sei auf Anhang A verwiesen),
5. Die Übermittlung der "Fahrzeug"-Daten an die einzelnen Antriebe bzw. Motoren der Bewegungssimulations-Steuerung und
6. (gegebenenfalls) die Übermittlung der Daten der "Welt" und des "Fahrzeuges" in ein Computergraphik-System (aufgrund der "Fahrzeug"-Daten können visuelle Teile der "Welt" mit Hilfe einer Computergraphik-Software generiert werden).

In der vorangehenden Beschreibung wurden Probleme hinsichtlich des Aufbaus von computergestützt erzeugten Bildern diskutiert. Diese Probleme hängen mit der Komplexität des Abbildes der "Welt", die eine unendliche Menge visueller Informationen enthält, zusammen. Die Prinzipien der Bewegungssimulations-Steuerung sollten auf den Aufbau eines Computergraphik-Bildes angewandt werden. Gegenstand der mathematischen Berechnungen sollten nicht das gesamte Bild der "Welt" sein. Die "Welt" wird in kleine Teile aufgeteilt, die unterschiedliche xyz-Koordinaten haben - auf dieselbe Weise, wie ein Computerbildschirm in kleine Pixel aufgeteilt ist. Unter Anwendung der Erfindung wird da Bild eines kleinen Teiles der "Welt" der mathematischen Berechnung unterzogen. Die Prinzipien des oben beschriebenen "Fahrzeugs" werden in diesen Berechnungen angewandt. Die Lage der Computergraphik-"Kamera" in x-Richtung sollte auf die y-Achse, einen Schwenk und eine Rotation des Teiles übertragen werden. Miteinander überlagerte Bilder der kleinen Teile bilden schließlich das korrekte (und sehr komplexe) Bild der gesamten "Welt".

### ANHANG A: Die mathematischen Grundlagen für die "Bedingungen"

### Daten

1. Kameraposition:
   x_cam
   y_cam
2. Kamerablickwinkel:
   a. Target
      target_x
      target_y
      look = arc tan ((target_x - cam_x) / (target_y - cam_y))
   b. Look (°)
      Look
   c. Board
      board_x
      board_y

### Bedingungen:

travel = √(board_x - cam_x)² + (board_y - cam_y)² s_rot = -arc tan ((board_x - cam_x) / (board_y - cam_y)) c_pan = S_rot + look

### Anhang B - Liste der Tabellen

Tabelle 1 ist eine Auflistung einiger der in den Figuren 17, 22 und 24 dargestellten räumlichen und Winkel-Beziehungen.

Tabelle 2 ist eine Auflistung einiger der in der Figur 17 dargestellten räumlichen und Winkel-Beziehungen.

Tabelle 3 ist eine Auflistung einiger der in der Figur 21 dargestellten räumlichen und Winkel-Beziehungen.

Tabelle 4 ist eine Auflistung einiger der in der Figur 22 dargestellten räumlichen und Winkel-Beziehungen.

Tabelle 5 ist eine Auflistung einiger der in der Figur 23 dargestellten räumlichen und Winkel-Beziehungen.

Tabelle 6 ist eine Auflistung einiger der in der Figur 24 dargestellten räumlichen und Winkel-Beziehungen.

Tabelle 7 ist eine Auflistung einiger der in der Figur 25 dargestellten räumlichen und Winkel-Beziehungen.

Tabelle 8 ist eine Auflistung einiger der in den Figuren 32, 34 und 36 dargestellten räumlichen und Winkel-Beziehungen.

Tabelle 9 ist eine Auflistung einiger der in der Figur 32 dargestellten räumlichen und Winkel-Beziehungen.

Tabelle 10 ist eine Auflistung einiger der in der Figur 33 dargestellten räumlichen und Winkel-Beziehungen.

Tabelle 11 ist eine Auflistung einiger der in der Figur 34 dargestellten räumlichen und Winkel-Beziehungen.

Tabelle 12 ist eine Auflistung einiger der in der Figur 35 dargestellten räumlichen und Winkel-Beziehungen.

Tabelle 13 ist eine Auflistung einiger der in der Figur 36 dargestellten räumlichen und Winkel-Beziehungen.

Tabelle 14 ist eine Auflistung einiger der in der Figur 37 dargestellten räumlichen und Winkel-Beziehungen.

## Patentansprüche

1. Vorrichtung zur Herstellung einer Bildsequenz, die dazu geeignet ist, einem Betrachter den visuellen Eindruck eines eine zeitliche Dimension aufweisenden, mindestens ein Aufnahmeobjekt einschließenden, Ereignisses zu vermitteln, mit foto- oder viotechnischen Mitteln, mit einem Bildaufnahmegerät (10; 10a bis 10e; 26) zur Aufhahme einer primären Bildfolge, einer eine Antriebseinheit aufweisenden Bewegungsvorrichtung (22, 60 bis 64) zur Bewegung des Bildaufnahmegerätes zwischen verschiedenen Aufnahmepositionen und/oder verschiedenen Aufnahmerichtungen während der Aufnahme der primären Bildfolge und einer Steuereinheit (100) zur Steuerung der Bewegungsvorrichtung und des Blickwinkels und/oder der Brennebene des Bildaufnahmegerätes,
**dadurch gekennzeichnet**, daß
eine Drehvorrichtung (24; 24a, 24b, 44 bis 48, 58a; 124a) für das Aufnahmeobjekt zur Veränderung der Winkelstellung einer dessen Lage im Raum charakterisierenden Achse relativ zur Aufnahmerichtung des Bildaufnahmegerätes und
eine ausgangsseitig mit einem Steuereingang der Drehvorrichtung und einem Eingang der Steuereinrichtung und/oder einem Steuereingang des Bildaufnahmegerätes verbundene Berechnungseinheit (100, 106, 109) vorgesehen ist, die eine zeitabhängige Raumkoordinaten- und -winkel-beziehung, die eine fiktive räumliche Bewegung des Bildaufnahmegerätes relativ zum Aufnahmeobjekt repräsentiert,
und die genannte Drehvorrichtung eine zeitabhängige Ebenenkoordinaten- und -winkelbeziehung, die eine real auszuführende Bewegung der Bildaufnahmegerätes in einer vorbestimmten, zur Drehachse der Drehvorrichtung im wesentlichen parallelen Ebene repräsentiert, und in eine zeitabhängige Drehwinkelbeziehung transformiert, die eine mit der real auszuführenden Bewegung des Bildaufnahmegerätes synchronisierte, real auszuführende Drehung der Drehvorrichtung repräsentiert, wobei die Bewegungsvorrichtung so ausgebildet ist oder gesteuert wird, daß sie das Bildaufnahmegerät lediglich in der vorbestimmten Ebene bewegt.

2. Vorrichtung nach Anspruch 1, **dadurch gekennzeichnet**, daß eine Bildverarbeitungseinheit (102) zur Überlagerung jeweils einzelner Bilder mehrerer, mindestens teilweise mit dem Bildaufnahmegerät (26) oder einer Computergrafikeinheit (105) erzeugter primärer Bildfolgen zur Bildung einer resultierenden Bildsequenz vorgesehen ist.

3. Vorrichtung nach Anspruch 2, **dadurch gekennzeichnet**, daß eine über einen Dateneingang mit dem Ausgang der Berechnungseinheit (100, 106, 109) verbundene Steuersignal-Speichervorrichtung (101) zur Speicherung der während der Aufnahme einer primären Bildfolge an die einzelnen Komponenten der Vorrichtung abgegebenen Steuersignale vorgesehen ist, deren Datenausgang wahlweise bei der Aufnahme einer weiteren primären Bildfolge mit den Steuereingängen der Komponenten oder einem Eingang der Berechnungseinheit oder bei der Erzeugung der resultierenden Bildsequenz aus mehreren primären Bildfolgen mit einem Eingang der Bildvearbeitungseinheit (102) verbindbar ist derart, daß die Steuersignale direkt oder indirekt zur Steuerung weiterer Aufnahmen und/oder zur Bildverarbeitung abgerufen werden.

4. Vorrichtung nach einem der vorangehenden Ansprüche, **dadurch gekennzeichnet**, daß die Berechnungseinheit (100, 106, 109) eine Schinittstelle (108) zur Verbindung mit einer Computergrafikeinheit (105) zur uni- oder bidirektionalen Übergabe von Steuerdaten für die Vorrichtung an diesen und/oder von diesem zur synchronisierten Herstellung foto- oder videotechnisch erzeugter und synthetischer Bildsequenzen aufweist.

5. Vorrichtung nach einem der vorangehenden Ansprüche, **dadurch gekennzeichnet**, daß die Berechnungseinheit (100, 106, 109) und/oder die Bildverarbeitungseinheit (102) eine Skalierungseinheit (106) zur individuellen Einstellung der Steuersignale für den Betrieb der Vorrichtung zur Erzeugung verschiedener Bildfolgen und/oder von Parametern der einzelnen zu überlagernden Bilder aus verschiedenen Bildfolgen, insbesondere zur Einstellung der relativen Bildgröße, zur Drehung der Bildebene oder zur Einstellung eines Bild-Gewichtungsfektors, aufweist.

6. Vorrichtung nach einem der Ansprüche 2 bis 5, **dadurch gekennzeichnet**, daß die Bildverarbeitungseinheit (102) Mittel zur nachträglichen Bearbeitung einer durch Überlagerung gebildeten Bildsequenz aufweist.

7. Vorrichtung nach einem der vorangehenden Ansprüche, **dadurch gekennzeichnet**, daß ein einfarbiger Schirm als Aufnahmehintergrund vorgesehen ist derart, daß eine Überlagerung von Bildern mehrerer mit dem Bildaufnahmegerät (10; 10a bis 10e; 26) erzeugter primärer Bildfolgen in Art der Blue-Screen-Technik möglich ist.

8. Vorrichtung nach einem der vorangehenden Ansprüche, **dadurch gekennzeichnet**, daß eine steuerbare, insbesondere drehbare und/oder in der Lichtstärke steuerbare, Beleuchtungsvorrichtung (66, 68) für das/die Aufnahmeobjekt(e) vorgesehen ist, die einen mit einem Ausgang der Berechnungseinheit (100; 106, 109) verbundenen Steuereingang aufweist.

9. Vorrichtung nach einem der vorangehenden Ansprüche, **dadurch gekennzeichnet**, daß in oder auf der Drehvorrichttung (24a) eine weitere, eine separate Antriebseinheit aufweisende eingangsseitig mit ein Ausgang der Berechnungseinheit (100, 106, 109) verbundene, Vorrichtung (124a, 224a) zur Verschiebung oder zusätzlichen Drehung eines Aufnahmeobjektes bezüglich der Drehvorrichtung vorgesehen ist.

10. Vorrichtung nach einem der vorangehenden Ansprüche, **dadurch gekennzeichnet**, daß mehrere Drehvorrichtungen (24a, 24b; 44 bis 48) unterschiedlicher Größe für mehrere Aufnahmeobjekte unterschiedlicher Größe vorgesehen sind, die zeitsequentiell zur Aufnahme mehrerer primärer Bildfolgen eingesetzt werden, wobei diese Drehvorrichtungen je einen Steuereingang aufweisen, der mit einem Ausgang der Berechnungseinheit (100, 106, 109) verbunden ist.

11. Vorrichtung nach einem der vorangehenden Ansprüche, **dadurch gekennzeichnet**, daß das Bildaufnehmegerät (10, 10a bis 10e; 26) eine Film- oder Videokamera und die Drehvorrichtung (24; 24a, 24b; 44 bis 48; 58a; 124a) eine im wesentlichen horizontale Drehbühne ist.

12. Vorrichtung nach einem der Ansprüche 1 bis 11, **dadurch gekennzeichnet**, daß das Bildaufnahmegerät eine, sich zur Bilderzeugung insbesondere Ultraschallwellen, Röntgen- oder Teilchenstrahlen oder Kern- oder Elektronenspins bedienende, medizinische Abbildungsvorrichtung ist.

13. Vorrichtung nach einem der vorangehenden Ansprüche, **dadurch gekennzeichnet**, daß die Bewegungsvorrichtung einen in einer horizontalen sowie in einer vertikalen, jeweils geradlinigen, Führung (22, 62; 62') geführten Kamerehalter (63, 64; 63', 64') aufweist.

14. Vorrichtung nach einem der vorangehenden Ansprüche, **dadurch gekennzeichnet**, daß das Bildaufnahmegerät (26) eine um drei Achsen dreh- bzw. schwenkbare Halterung (64; 64') aufweist.

15. Verfahren zur Herstellung einer Bildsequenz, die dazu geeignet ist, einem Betrachter den visuellen Eindruck eines eine zeitliche Dimension aufweisenden, mindestens ein reales oder virtuelles Objekt einschließenden, Ereignisses zu vermitteln, bei dem mittels einer Bilderzeugungseinrichtung (10; 10a bis 10e; 26; 105) eine primäre Bildfolge erzeugt wird, wobei mittels einer Ansteuervorrichtung (100, 106, 109) der physikalische oder virtuelle Blickwinkel und wahlweise die physikalische oder virtuelle Abbildungsebene der Bilderzeugungseinrichtung zwischen den Bilderzeugungsvorgängen verändert wird,
**dadurch gekennzeichnet**, daß
das Objekt unter Entkopplung von seiner Bildumgebung einer physikalischen oder virtuellen Drehung um eine vorgegebene Achse relativ zum Blickwinkel der Bilderzeugungseinrichtung unterzogen und
eine zeitabhängige Raumkoordinaten- und -winkelbeziehung, die eine fiktive räumliche Bewegung des Objektes repräsentiert, in eine zeitabhängige Ebenenkoordinaten- und -winkelbeziehung in einer vorbestimmten, zur Dreachse des Objekts parallelen Ebene zwischen dem Objekt und dem Blickwinkel der Bilderzeugungseinrichtung und eine zeitabhängige Drehwinkelbeziehung für das Objekt transformiert und die Bilderzeugungsvorrichtung entsprechend diesen durch Transformation gewonnenen Beziehungen angesteuert wird.

16. Verfahren nach Anspruch 15, **dadurch gekennzeichnet**, daß jeweils einzelne Bilder mehrerer primärer Bildfolgen zu einer resultierenden Bildsequenz überlagert werden.

17. Verfahren nach Anspruch 15 oder 16, **dadurch gekennzeichnet**, daß die Überlagerung von Bildern mehrerer primärer Bildfolgen in Art der Blue-Screen-Technik erfolgt.

18. Verfahren nach einem der Ansprüche 15 bis 17, **dadurch gekennzeichnet**, daß die während der Erzeugung einer primären Bildfolge verwendeten Ansteuerdaten gespeichert und wahlweise bei der Erzeugung einer weiteren primären Bildfolge und/oder bei der Erzeugung der resultierenden Bildsequenz aus mehreren primären Bildfolgen erneut abgerufen und direkt oder nach einer Umrechnung zur Bilderzeugung verwendet werden.

19. Verfahren nach einem der Ansprüche 15 bis 18, **dadurch gekennzeichnet**, daß die Ansteuerdaten zur Erzeugung verschiedener Bildfolgen, insbesondere zur Einstellung der relativen Bildgröße, zur Drehung der Bildebene und/oder zur Einstellung eines Bild-Gewichtungsfaktors für primäre Bilder zur Erzeugung eines resultierenden Bildes, einer Skalierung und/oder Gewichtung unterzogen werden.

## Claims

1. A device for creating an image sequence which is suitable to impart to a viewer the visual impression of having a one time dimensional experience, incorporating at least one photographic object, with photographic or video technical means, having an image recording apparatus (10,10a to 10e,26) for shooting a primary sequence of images, a motion device (22,60 to 64) having a drive unit for moving the image recording apparatus between various different camera positions and/or various camera directions during the shooting of the primary frame rate, and a control unit (100) for controlling the motion device and the angle of view and/or the focal plane of the image recording apparatus, characterised in that a rotating device (24,24a,24b,44 to 48,58a,124a) is provided for the photographic object for altering the angular position of an axis characterising the position of which in space relative to the camera direction of the image recording device and having a calculating unit (100,106,109) connected on the output side connected with a rotating device control input and with an input of the control device and/or with a control input of an image recording apparatus, which represents a time-dependent space co-ordinated and angular relationship, representing a fictitious spatial motion of the image recording apparatus relative to the photographic object, and said rotating device represents a time-dependant, plane co-ordinating and angular relationship which represents a real motion of the image recording apparatus to be carried out in a pre-determined plane, essentially parallel to the axis of rotation of the rotating device, and is transformed into a time-dependant swing-angle relationship which represents a real motion to be carried out by the rotating device, synchronised with the real motion to be carried out by the image recording apparatus, where the motion device is so-constructed or controlled that it moves the image recording apparatus merely in the pre-determined plane.

2. A device according to claim 1, characterised in that an image processing unit (102) for the superimposing of individual images, is provided with a plurality of primary frame rates, produced at least partially with the image recording apparatus (26) or with a computer graphics unit (105) for forming a resulting image sequence.

3. A device according to claim 2, characterised in that a control signal - storage device (101) which is connected with the output of calculating unit (100,106,109) via a data input, is provided for storing the control signals given out to the individual components of the device during the shooting of a primary frame rate, the data output of which is selectively connectable with the control inputs of the components or an input of the calculating unit during the shooting of a further primary frame rate, or on producing the resulting image sequence from a plurality of primary frame rates is connectable with an input of the image processing unit (102) in such a way that the control signals are recalled directly or indirectly for controlling further shoots and/or for image processing.

4. A device according to any of the above claims, characterised in that the calculating unit (100,106,109) has an interface (108) for connecting with a computer graphics unit (105) for the uni - or bi-directional transmission of control data for the device to this and/or from this for the synchronised creation of photo- or video-technically produced and synthetic image sequences.

5. A device according to any of the above claims, characterised in that the calculating unit (100,106,109) and/or image processing unit (102) has a scaling unit (106) for the individual adjustment of control signals for operating the device for producing different frame rates and/or parameters of the individual images to be superimposed from different frame rates, in particular for the adjustment of the relative image size, for rotating the image plane or for adjusting an image-weighting factor.

6. A device according to any of claims 2-5, characterised in that the image processing unit (102) has means for the subsequent processing of an image sequence constructed from superimposing.

7. A device according to any of the above claims, characterised in that a single colour screen is provided as the shooting background such that a superimposing of images of a plurality of primary frame rates produced with the image recording apparatus (10,10a to 10e,26) is possible in the form of the blue-screen technique.

8. A device according to any of the above claims, characterised in that a controllable, in particular rotatable and/or controllable in the intensity of light, lighting device (166,68) is provided for the photographic object(s), which has a control input connected with an output of calculating unit (100,106,109).

9. A device according to any of the above claims, characterised in that a further device (124a,224a) is provided in or on the rotational device (24a) for displacing or for the additional rotation of a photographic object with regard to the rotational device, having a separate drive unit on the input side, connected to an output of calculating unit (100,106,109).

10. A device according to any of the above claims, characterised in that a plurality of rotational devices (24a,24b,44 to 48) of differing sizes for a plurality of photographic objects of differing sizes are provided, which set the time sequential for shooting a plurality of primary frame rates, where these rotational devices each have one control input which is connected to an output of calculating unit (100,106,109).

11. A device according to any of the above claims, characterised in that the image recording apparatus (10,10a to 10e,26) is a film or video camera and the rotational device (24,24a,24b,44 to 48,58a,124a) is an essentially horizontal rotating stage.

12. A device according to any of the above claims, characterised in that the image recording apparatus is a medicinal image-reproducing device, in particular using ultra-sound waves, X-rays - or particle radiation or nuclear - or electron spin to produce an image.

13. A device according to any of the above claims, characterised in that the motion device has a camera holder (63,64,63',64') guided in a horizontal and in a vertical, respectively rectilinear guide (22,62,62').

14. A device according to any of the above claims, characterised in that the image recording device (26) has a holder (64,64') rotatable or pivotable about three axes.

15. A process for producing an image sequence which is suitable for imparting to the viewer the visual impression of an experience having a time dimension incorporating at least a real or virtual object, whereby a primary frame rate is produced by means of an image producing device (10,10a to 10e,26,105) and where by means of a control device (100,106,109) the physical or virtual angle of view and selectively, the physical or virtual image plane of the image producing device is altered between the image producing processes, characterised in that on de-coupling the object from its image environment it is subject to physical or virtual rotation about a pre-determined axis relative to the angle of view of the image producing device and
a time-dependant space co-ordinated and angular relationship, representing a fictitious spatial motion of the object, in a time-dependant, plane co-ordinated and angular relationship, is transformed into a pre-determined plane, parallel to the axis of rotation of the object between the object and the angle of view of the image producing device and a time-dependant swing angle relationship for the object, and the image producing device is controlled in accordance with this relationship obtained through transformation.

16. A process according to claim 15, characterised in that respectively individual images of a plurality of primary frame rates are superimposed for a resulting image sequence.

17. A process according to claims 15 or 16, characterised in that the superimposing of images of a plurality of primary frame rates results in the form of the blue-screen-technique.

18. A process according to any of claims 15-17, characterised in that the control data used during the production of a primary frame rate is stored and is selectively again recalled on the production of a further primary frame rate and/or on the production of the resulting image sequence from a plurality of primary frame rates and is used directly or after a translation for the production of images.

19. A process according to any of claims 15-18, characterised in that the control data for producing various frame rates, in particular for adjustment of the relative size of the image to the rotation of the image plane and/or for adjusting an image weighting factor for primary images for producing a resulting image, is subject to a scaling and/or a weighting.

## Revendications

1. Dispositif de réalisation d'une séquence d'image apte à donner à un observateur l'impression visuelle d'un événement présentant une dimension temporelle, comprenant au moins un sujet d'enregistrement, équipé de moyens techniques photo ou vidéo, d'un appareil d'enregistrement d'image (10 ; 10a à 10e ; 26) en vue de l'enregistrement d'une séquence d'image primaire, un dispositif de mouvement (22, 60 à 64) comportant une unité d'entraînement en vue du déplacement de l'appareil de prise de vues entre différentes positions d'enregistrement et/ou différentes directions d'enregistrement durant l'enregistrement de la séquence d'image primaire et une unité de commande (5) en vue de la commande du dispositif de mouvement et de l'angle de visée et/ou du plan focal de l'appareil de prise de vues, caractérisé en ce qu'il est prévu un dispositif de rotation (24 ; 24a, 24b, 44 à 48, 58a ; 124a) pour le sujet à enregistrer en vue de la modification du réglage angulaire d'un axe caractérisant dans l'espace la position de celui-ci par rapport à la direction d'enregistrement de l'appareil de prises de vue et
en ce qu'une unité de calcul (100, 106, 109) est prévue, reliée côté sortie à une entrée de commande du dispositif de rotation et à une entrée du dispositif de commande et/ou à une entrée de commande de l'appareil de prise de vues, qui représente une relation de coordonnées spatiales et angulaires fonction du temps, qui représente un mouvement spatial fictif de l'appareil de prise de vues par rapport au sujet d'enregistrement, et le dispositif de rotation précité représente une relation de coordonnées planes et angulaires fonction du temps, qui représente un mouvement réel à exécuter de l'appareil de prise de vues dans un plan prédéterminé, sensiblement parallèle à l'axe de rotation du dispositif de rotation, et transforme en une relation d'angle de rotation fonction du temps, qui représente un mouvement réel à exécuter du dispositif de rotation, synchronisé sur le mouvement réel à exécuter de l'appareil de prise de vues, le dispositif de mouvement étant réalisé ou commandé de sorte que l'appareil de prise de vues se déplace uniquement dans le plan prédéterminé.

2. Dispositif selon la revendication 1, caractérisé en ce qu'une unité de traitement d'images (102) est prévue pour la superposition respectivement d'images différentes de plusieurs séquences d'images primaires générées au moins partiellement avec l'appareil de prise de vues (26) ou une unité de calculateur graphique (105) en vue de la formation d'une séquence d'image résultante.

3. Dispositif selon la revendication 2, caractérisé en ce qu'un dispositif de mémoire de signaux de commande (101), relié par l'intermédiaire d'une entrée de données à la sortie de l'unité de calcul (10, 106, 109) est prévu en vue de la mémorisation des signaux de commande délivrés durant l'enregistrement d'une séquence d'image primaire aux différents constituants du dispositif, dont la sortie de données peut être reliée sélectivement dans le cas de l'enregistrement d'une autre séquence d'image primaire aux entrées de commande des constituants ou à une entrée de l'unité de calcul ou, dans le cas de la génération de la séquence d'image résultante se composant de plusieurs séquences d'image primaires, à l'entrée de l'unité de traitement d'images (102), de telle sorte que les signaux de commande sont délivrés directement ou indirectement en vue de la commande d'autres enregistrements et/ou du traitement d'images.

4. Dispositif selon l'une des revendications précédentes, caractérisé en ce que l'unité de calcul (100, 106, 109) comporte un point de coupure (108) en vue de la liaison avec une unité de calculateur graphique (105) en vue de la délivrance unidirectionnelle ou bidirectionnelle de données de commande pour le dispositif à celui-ci et/ou depuis celui-ci en vue de la génération synchronisée de séquences d'image photo ou vidéo et synthétiques.

5. Dispositif selon l'une des revendications précédentes, caractérisé en ce que l'unité de calcul (100, 106, 109) et/ou l'unité de traitement d'images (102) présente une unité de démultiplication (106) en vue du réglage individuel des signaux de commande pour le fonctionnement du dispositif en vue de la génération de différentes séquences d'images et/ou de paramètres des différentes images à superposer à partir de différentes séquences d'images, en particulier en vue du réglage de la grandeur d'image relative en vue de la rotation du plan d'image ou en vue du réglage d'un facteur de pondération d'image.

6. Dispositif selon l'une des revendications 2 à 5, caractérisé en ce que l'unité de traitement d'images (102) comporte des moyens en vue du traitement postérieur d'une séquence d'image formée par superposition.

7. Dispositif selon l'une des revendications précédentes, caractérisé en ce qu'un écran monochrome est prévu en tant qu'arrière-plan d'enregistrement de telle sorte qu'une superposition d'images de plusieurs séquences d'image primaires générées par l'appareil de prise de vues (10 ; 10a à 10e ; 26) est possible à la manière de la technique de l'écran bleu.

8. Dispositif selon l'une des revendications précédentes, caractérisé en ce qu'un dispositif d'éclairage (66, 68), pouvant être commandé, en particulier pouvant être tourné et/ou pouvant être commandé en intensité lumineuse, est prévu pour le/les sujets(s) d'enregistrement qui présente une entrée de commande reliée à une sortie de l'unité de calcul (100, 106, 109).

9. Dispositif selon l'une des revendications précédentes, caractérisé en ce que dans ou sur le dispositif de rotation (24a) est prévu un autre dispositif (124a, 224a), comportant une unité d'entraînement distincte, relié côté entrée à une sortie de l'unité de calcul (100, 106, 109) en vue du déplacement ou d'une autre rotation d'un sujet d'enregistrement par rapport au dispositif de rotation.

10. Dispositif selon l'une des revendications précédentes, caractérisé en ce que plusieurs dispositifs de rotation (24a, 24b ; 44 à 48) de différentes grandeurs sont prévus pour plusieurs sujets d'enregistrement de différentes grandeurs, qui sont mis en oeuvre successivement dans le temps en vue de l'enregistrement de plusieurs séquences d'image primaires, ces dispositifs de rotation comportant une entrée de commande reliée à une sortie de l'unité de calcul (100, 106, 109).

11. Dispositif selon l'une des revendications précédentes, caractérisé en ce que l'appareil de prise de vues (10, 10a à 10e ; 26) est une caméra à film ou une caméra vidéo et le dispositif rotatif (24 ; 24a, 24b ; 44 à 48 ; 58a ; 124a) un portique rotatif sensiblement horizontal.

12. Dispositif selon l'une des revendications 1 à 11, caractérisé en ce que l'appareil de prise de vues est un dispositif d'images médicales, utilisant en vue de la génération d'images en particulier des ondes ultrasoniques, des rayons X ou de particules ou des spins nucléaires ou électroniques.

13. Dispositif selon l'une des revendications précédentes, caractérisé en ce que le dispositif de mouvement comporte un support de caméra (63, 64 ; 63', 64') guidé dans un guidage vertical, respectivement rectiligne.

14. Dispositif selon l'une des revendications précédentes, caractérisé en ce que l'appareil de prise de vues (26) comporte un support (64 ; 64') pouvant pivoter ou tourner autour de trois axes.

15. Procédé de réalisation d'une séquence d'image, apte à donner à un observateur l'impression visuelle d'un événement présentant une dimension temporelle, comprenant au moins un objet réel ou virtuel, selon lequel, au moyen d'un dispositif de génération d'image (10 ; 10a à 10e ; 105) est créée une séquence d'image primaire, au moyen d'un dispositif de commande (100, 106, 109) est modifié l'angle de visée physique ou virtuel et sélectivement le plan d'image physique ou virtuel du dispositif de génération d'image entre les processus de génération d'images, caractérisé en ce que le sujet est soumis, avec séparation de son environnement d'image, à une rotation physique ou virtuelle autour d'un axe prédéterminé par rapport à l'angle de visée du dispositif de génération d'images et
une relation de coordonnées spatiales et angulaires fonction du temps, qui représente un déplacement spatial fictif du sujet, est transformée en une relation de coordonnées planes et angulaires fonction du temps dans un plan prédéterminé parallèle à l'axe de rotation du sujet entre le sujet et l'angle de visée du dispositif de génération d'images et une relation angulaire de rotation fonction du temps pour le sujet et le dispositif de génération d'image est commandé de façon correspondante à ces relations obtenues par transformation.

16. Procédé selon la revendication 15, caractérisé en ce que respectivement différentes images de plusieurs séquences d'image primaires sont superposées en une séquence d'image résultante.

17. Procédé selon la revendication 15 ou 16, caractérisé en ce que la superposition d'images de plusieurs séquences d'image primaires s'effectue à la manière de la technique de l'écran bleu.

18. Procédé selon l'une des revendications 15 à 17, caractérisé en ce que les données de commande utilisées durant la génération d'une séquence d'image primaire sont mémorisées et délivrées de façon renouvelées sélectivement lors de la génération d'une autre séquence d'image primaire et/ou lors de la génération de la séquence d'image résultante à partir de plusieurs séquences d'image primaires et utilisées directement ou après une conversion en vue de la génération d'image.

19. Procédé selon l'une des revendications 15 à 18, caractérisé en ce que les données de commande en vue de la génération de différentes séquences d'image, en particulier en vue du réglage de la grandeur d'image relative, en vue de la rotation du plan d'image et/ou en vue du réglage d'un facteur de pondération d'image pour des images primaires en vue de la génération d'une image résultante, sont soumises à une démultiplication et/ou à une pondération.
